(19) Europäisches Patentamt
European Patent Office
Office européen des brevets

(11) EP 3 063 251 B1

(12) **EUROPEAN PATENT SPECIFICATION**

(45) Date of publication and mention of the grant of the patent:
**25.08.2021 Bulletin 2021/34**

(21) Application number: **14837034.9**

(22) Date of filing: **30.10.2014**

(51) Int Cl.:
*C09K 17/18* (2006.01) *C08F 220/38* (2006.01)
*E02D 3/12* (2006.01)

(86) International application number:
**PCT/IB2014/002980**

(87) International publication number:
**WO 2015/063605 (07.05.2015 Gazette 2015/18)**

(54) **HYDROPHILIZATION POLYMERS AND METHODS FOR USE**

HYDROPHILIERUNGSPOLYMERE UND VERFAHREN ZUR VERWENDUNG

POLYMÈRES D'HYDROPHILISATION ET LEURS PROCÉDÉS D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2013 US 201361898068 P**

(43) Date of publication of application:
**07.09.2016 Bulletin 2016/36**

(73) Proprietor: **Rhodia Operations**
**93300 Aubervilliers (FR)**

(72) Inventors:
- **BALASTRE, Marc**
**75020 Paris (FR)**
- **KOSTKA, Stanley, J.**
**Cherry Hill, NJ 08034 (US)**
- **MCMILLAN, Mica**
**Canton, GA 30114 (US)**

(74) Representative: **Lederer & Keller Patentanwälte Partnerschaft mbB**
**Unsöldstraße 2**
**80538 München (DE)**

(56) References cited:
**WO-A2-03/094592 US-A1- 2012 220 454**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 063 251 B1

## Description

### Field of Invention

This invention relates to methods and compositions relating to soil treatment compositions and seed treatment compositions and, in particular, to hydrophilization polymers for contact with soil, seed and/or sand particles, and in particular to hydrophilization polymers for use in coating seeds and/or treating soil to improve, among other things, soil conditioning, grass establishment, improvement in yield, enhanced rooting effects, seed boosting, and/or increasing available water capacity in soil or sand.

### Background of the Invention

Water scarcity is a major constraint to human and agricultural development. Roughly 70% of the fresh water consumed is directed towards agricultural-related usage, for example as irrigation water, which in turn accounts for roughly 90% of agricultural usage. As the demand for fresh water through agricultural development as well as human development increases, more effective uses of water are becoming necessary. This need is even more pronounced in light of the increasing scarcity of fresh water. There is also an increasing demand for fresh water in food production and non-food related raw materials such as biofuel, biomass and renewable biomaterials apart from the aforementioned use. Accordingly, there is a growing need for an improved and more efficient usage of fresh water, especially in agricultural applications.

Fresh water is lost in agriculture applications through three main pathways: (1) run-off, (2) evaporation or (3) drainage out of plant root zone. With respect to run-off, the slow or arrested penetration of water into soil will lead to run-off of water where the soil area is, in particular, sloped or angled. Another effect is an accumulation of water on a flat/level soil surface, which allows for water evaporation through extended exposure to the atmosphere. The slow permeation is caused by several mechanisms, such as the destruction of a soil's porous structure, as indicated by soil crust formation or compaction, or as a consequence of soils being water repellent.

Water repellency is a property of soil that reduces infiltration capacity and crop germination, reduces nutrient and chemical holding capacity, and promotes erosion. Water repellent soil can develop when the soil becomes hydrophobic and substantially or totally resists the infiltration of water into it. The processes causing the non-wetting phenomenon are not completely understood. It is believed the phenomenon is due to the accumulation of long chained organic compounds on or between soil particles. These long-chained hydrophobic organic substances may be released from a range of plants, organisms, and decaying organic matter either naturally or during burning.

One approach to address water repellency, and thus promote the more efficient usage of water, has been the use of surfactants. Typical surfactants that can be utilized include ethoxylates, alkyl phenols and the like. Surfactants have been found to reduce the amount and presence of localized dry spots and help in penetration of water when applied to such localized dry spots. (In particular, localized dry spots is a problem within highly managed turf area and/or lawn, in particular those with sandy soils. Such dry spots are the result of the development of areas of varying degree of water repellency within and at the surface of the target soil.) There are, however, drawbacks when utilizing surfactants; one of which is that such treatments are not durable.

With respect to drainage, the drainage of water out of the root zone may be caused by a low water holding capacity of the soil and/or uneven distribution of water. The soil water holding capacity is determined by the soil texture and amount of organic matter in soil. For example, usually coarse-textured soils, e.g., sandy soils, have a much smaller water holding capacity than fine-textured soils, e.g., loamy soil. The uneven distribution of water can be caused by the application method of irrigation water (e.g. furrow irrigation) and the heterogeneity of soil composition. Preferential flow may also occur in heterogeneous soils, and it funnels the water supply quickly out of the root zone and causes the inefficiency of water usage.

Several approaches were used in an attempt to increase the efficiency of water usage in agriculture, one of which is the use of cross-linked polymers such as hydrogel polymers (or superabsorbent polymers). Hydrogel or superabsorbent polymers include hydrolysis products of starch-acrylonitrile graft polymers, carboxymethylcellulose, cross-linked polyacrylates, cross-linked polyacrylamides, polyvinyl alcohols, polyacrylonitrile and polyethylene glycols. These highly cross-linked polymers form gel networks, absorbing many times their weight in water. However, due to their high gel strength these hydrogel polymers do not readily give up their water to the surrounding media, such as plants. Further, these superabsorbent or hydrogel polymers are gels and water-insoluble under use conditions. Thus, they present a discontinuous lump, or water reservoir, which may only be available to plants and such in the immediate vicinity of the gel network. These hydrogel polymers are also difficult to evenly distribute onto or into soil as a treatment because of the hydrogel polymers' tendency to agglomerate and clump.

US 2012/0220454 A1 discloses coating compositions obtained from betainecontaining vinyl monomers and seeds coated with these compositions.

## Summary of Invention

These drawbacks are addressed by the current invention as described herein by applying, in one embodiment, a preventive treatment onto bare soil. The treatment can be a soil additive as described herein or the hydrophilization polymers as described herein. It is believed that the hydrophilization polymers (sometimes referred to herein as "polymer") are absorbed or adsorbed onto the sand, resulting in durably enhanced surface hydrophilicity, water retention and/or restriction or prevention of sand contamination. The soil treatments and systems as described herein also facilitate improved water distribution through the soil and proper amounts of moisture to contact root systems in order to reduce dry spots. In another embodiment, described herein are treatments to improve soil hydrophilicity, water retention, etc. to already contaminated sand.

The present invention, in another aspect, concerns a method to increase seed growth, seed germination or resulting plant growth by contacting or coating (in whole or in part) a seed of a plant with a composition comprising a polymer described herein.

Accordingly, in one aspect the present invention is a soil additive comprising a polymer comprising: monomer $A_b$ comprising at least one betaine group or at least one cationic group; and monomer $B_a$ comprising at least one non-ionic group or at least one anionic group, wherein the polymer is water-soluble or water-dispersible; and provided that if the monomer $A_b$ comprises a cationic group, the monomer $B_a$ comprises an anionic group. In one embodiment, the polymer increases the hydrophilicity of soil to which the polymer is contacted. In one embodiment, increasing hydrophilicity in soil correlates to such soil being able to retain and/or maintain increase amounts of water per area/volume. Optionally, the soil additive can further comprise a seed or soil particle, wherein the polymer is at least partially coating the seed or soil particle.

In one embodiment, the betaine group is chosen from any one or more of the following a) - alkylsulphonates or -phosphonates of dialkylammonioalkyl acrylates or methacrylates, - acrylamides or -methacrylamides; b) - heterocyclic betaine monomers; c) - alkylsulphonates or -phosphonates of dialkylammonioalkylallylics; d) - alkylsulphonates or -phosphonates of dialkylammonioalkylstyrenes; e) - betaines resulting from ethylenically unsaturated anhydrides and dienes as defined below; or f) - phosphobetaines.

In another embodiment, monomer $A_b$ comprising the betaine group is selected from:

sulphopropyldimethylammonioethyl methacrylate (SPE),

sulphoethyldimethylammonioethyl methacrylate,

sulphobutyldimethylammonioethyl methacrylate,

sulphohydroxypropyldimethylammonioethyl methacrylate (SHPE),

sulphopropyldimethylammoniopropylacrylamide,

sulphopropyldimethylammoniopropylmethacrylamide (SPP),

sulphohydroxypropyldimethylammoniopropylmethacrylamide (SHPP),

sulphopropyldiethylammonioethyl methacrylate,

2-vinyl-1-(3-sulphopropyl)pyridinium betaine,

4-vinyl-1-(3-sulphopropyl)pyridinium betaine,

sulphopropyldimethylammonioethyl methacrylate,

1-vinyl-3-(3-sulphopropyl)imidazolium betaine, or

sulphopropylmethyldiallylammonium betaine.

In another aspect, the hydrophilization polymer comprises: (i) monomer Ab comprising at least one betaine group; and (ii) monomer $B_a$ comprising hydroxyethyl acrylate, hydroxyethyl methacrylate, hydroxypropyl acrylate, hydroxypropyl methacrylate, glycerol monomethacrylate, acrylamide (AM), methacrylamide, N-methylolacrylamide, dimethylacrylamide, dimethylmethacrylamide, poly(ethylene and/or propylene oxide), if appropriate random or in the

block form, α-methacrylates, vinyl alcohol or vinylpyrrolidone.

In another aspect, described herein are ampholytic polymers, which comprise: (i) monomer $A_b$ comprising at least one cationic group; and (i) monomer $B_a$ comprising at least one non-ionic group or at least one anionic group. In one embodiment, monomer $A_b$ comprising the cationic group is of general formula A(I):

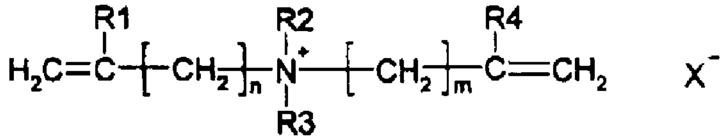

A(I)

in which:

- R1 and R4, independently of each other, represent a hydrogen atom or a linear or branched C1-C6 alkyl group;
- R2 and R3, independently of each other, represent an alkyl, hydroxyalkyl or aminoalkyl group in which the alkyl group is a linear or branched C1-C6 chain, preferably a methyl group;
- n and m are integers between 1 and 3;
- $X^-$ represents a counterion which is compatible with the water-soluble or water-dispersible nature of the polymer (DADMAC);

or

of general formula A(II):

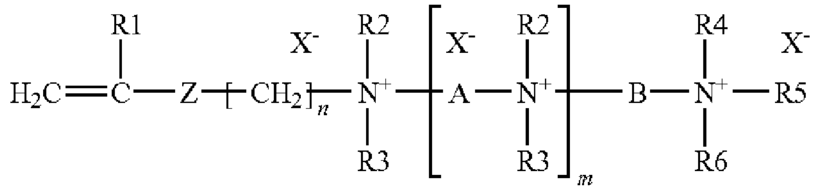

A(II)

wherein R1 is a hydrogen atom or a methyl or ethyl group; R2, and R3, which are identical or different, are linear or branched C1-C6 alkyl, hydroxyalkyl or aminoalkyl groups;
R4, R5 and R6 which are identical or different are linear or branched C1-C6 alkyl groups;
m is an integer from 0 to 10; n is an integer from 1 to 6;
Z represents a --C(O)O-- or --C(O)NH-- group or an oxygen atom;
A represents a (CH2)p group, p being an integer from 1 to 6;
B represents a linear or branched C2-C12 polymethylene chain optionally interrupted by one or more heteroatoms or heterogroups and optionally substituted by one or more hydroxyl or amino groups, and
$X^-$, which are identical or different, represent counterions; or mixtures thereof. The anionic group, in one embodiment, is selected from acrylic acid, methacrylic acid, α-ethacrylic acid, β,β-dimethylacrylic acid, methylenemalonic acid, vinylacetic acid, allylacetic acid, ethylideneacetic acid, propylideneacetic acid, crotonic acid, maleic acid, fumaric acid, itaconic acid, citraconic acid, mesaconic acid, N-methacryloylalanine, N-acryloylhydroxyglycine, sulfopropyl acrylate, sulfoethyl acrylate, sulfoethyl methacrylate, sulfoethyl methacrylate, styrenesulfonic acid, vinylsulfonic acid, vinylphosphonic acid, phosphoethyl acrylate, phosphonoethyl acrylate, phosphopropyl acrylate, phosphonopropyl acrylate, phosphoethyl methacrylate, phosphonoethyl methacrylate, phosphopropyl methacrylate and phosphonopropyl methacrylate, or the ammonium and alkali metal salts of these acids.

In yet another aspect, described herein are methods for treating soil comprising contacting the soil additive or hydrophilization polymer as described herein with the soil and/or seed. In one particular embodiment, a hydrophilization polymer or soil additive as described herein is contacted with "bulk soil". Bulk soil means soil or soil particles that are

apart from the ground to which it will be eventually contacted. In one embodiment, bulk soil is pre-treated with a soil additive composition, the resulting combination mixed to try to evenly distribute or make a homogenous or nearly homogenous mixture of the soil additive and bulk soil. The soil additive composition/bulk soil is then contacted with the ground. The mixing apparatus may be any equipment, device or system such as an industrial mixer, tank and impeller, cement mixer, industrial tumblers and blenders, ribbon blender, ribbon-paddle blenders and the like.

In another aspect, described herein are one or more soil/seed treatment compositions, which comprise: a hydrophilization polymer; water; and optionally, a surfactant. Usual ingredients such as binders, active ingredients, colorants etc., as well as pesticides, fungicides, fertilizers and the like can be incorporated into these seed coating formulations.

In yet another aspect, described herein are composite particles comprising a soil particle (such as, for example, a sand particle); and a plurality of hydrophilization polymers in contact with said soil particle.

In a final aspect, described herein are soil treatment systems comprising: (i) means for contacting the polymer to soil, and (ii) a polymer, wherein the polymer comprises:

monomer $A_b$ comprising at least one betaine group or at least one cationic group; and

monomer $B_a$ comprising at least one non-ionic group or at least one anionic group, wherein the polymer is water-soluble or water-dispersible; and provided that if the monomer $A_b$ comprises a cationic group, the monomer $B_a$ comprises an anionic group. Means for contacting the polymer to soil is any suitable device such as an industrial sprayer, caster, irrigation systems, tank and pumps, sprinklers and the like

## Brief Description Of Figures

Figure 1 shows a graph of water retention as a function of time with respect to CV30 sand;

Figure 2 shows a graph of water retention as a function of time with respect to CV30 sand after contact with a contaminant, TQ, with rinse;

Figure 3 shows a graph of water retention as a function of time with respect to CV30 sand after contact with a diluted (by a factor of 2) contaminant, TQ/2, with rinse; and

Figure 4 shows a graph of water retention as a function of time with respect to CV30 sand after contact with a diluted (by a factor of 4) contaminant, TQ/4, with rinse;

Figure 5 shows a graph of grass emergence relative to pretreatment and application of the polymers as described herein versus a control;

Figure 6 shows root length established over for a certain period of time of the treated soil ("3114" and "3114 + Peat") versus the control ("Sand" and "Sand + Peat");

Figure 7 shows root surface area measured after a certain period of time of the treated soil ("3114" and "3114 + Peat") versus the control ("Sand" and "Sand + Peat");

Figure 8 shows root volume measure after a certain period of time of the treated soil ("3114" and "3114 + Peat") versus the control ("Sand" and "Sand + Peat"); and

Figure 9 shows root length density measured after a certain period of time of the treated soil ("3114" and "3114 + Peat") versus the control ("Sand" and "Sand + Peat").

Figure 10 shows the effect of DV9599 on gravimetric water in various soils treated at 600 ppm w/w.

Figure 11 shows the effect of DV9599 on gravimetric water in various soils treated at 300 ppm w/w.

Figure 12 shows the effect of DV9599 on gravimetric water in various soils treated at 150 ppm w/w.

Figure 13 shows the effect of DV9599 on aggregate water content in various soils treated at 150, 300 and 600 ppm

w/w.

Figure 18 shows the effect of DV9551 on gravimetric water in various soils treated at 600 ppm w/w.

Figure 19 shows the effect of DV9551 on gravimetric water in various soils treated at 300 ppm w/w.

Figure 20 shows the effect of DV9551 on gravimetric water in various soils treated at 150 ppm w/w.

Figure 21 shows the effect of DV 9551 on aggregate water content in various soils treated at 150, 300 and 600 ppm w/w.

## Detailed Description of Invention

As used herein, the term "alkyl" means a monovalent saturated straight chain or branched hydrocarbon radical, typically a monovalent saturated ($C_1$-$C_{30}$) hydrocarbon radical, such as for example, methyl, ethyl, n-propyl, iso-propyl, n-butyl, sec-butyl, t-butyl, pentyl, or n-hexyl, which may optionally be substituted on one or more of the carbon atoms of the radical. In one embodiment, an alkyl radical is substituted on one or more carbon atoms of the radical with alkoxy, amino, halo, carboxy, or phosphono, such as, for example, hydroxymethyl hydroxyethyl, methoxymethyl, ethoxymethyl, isopropoxyethyl, aminomethyl, chloromethyl or trichloromethyl, carboxyethyl, or phosphonomethyl.

As used herein, the term "alkylene" means a divalent saturated straight or branched chain hydrocarbon radical, such as for example, methylene, dimethylene, trimethylene.

As used herein, the terminology "($C_x$-$C_y$)" in reference to an organic group, wherein x and y are each integers, indicates that the group may contain from x carbon atoms to y carbon atoms per group.

As used herein, the term "Volumetric Water Capacity", "VWC" or "Water Holding Capacity" means generally the amount of water that a soil can store that is available for use by plants. It is the water held between field capacity and the wilting point adjusted downward for rock fragments and for salts in solution. Field capacity is the water retained in a freely drained soil about 2 days after thorough wetting. The wilting point is the water content at which seedlings wilt irreversibly.

In another embodiment, water holding capacity can be defined mathematically as:

$$\theta = \frac{V_w}{V_T}$$

where $V_\omega$, is the volume of water and $V_T = V_s + V_v = V_s + V_w + V_a$ is the total volume (that is soil volume + water volume + air space).

In one aspect, the present invention is a method of hydrophilizing soil particles, which in one embodiment, comprise one or more particles of sand. The soil particles in another embodiment comprise peaty soil, clay (or clayey) soil, loamy soil, chalky soil, sand, or a mixture thereof. It is understood that when reference is made to a particular soil type, for example, sand or sandy soil, it means that the content of such soil is generally or significantly that designation, e.g., sandy, but other types of soils can be present. The soil particles, in yet another embodiment, is sandy soil or soil made up of sand particles.

In one aspect, bare sand or uncontaminated sand is treated with the soil treatment composition and/or hydrophilization polymer as described herein. In one embodiment, treatment means contacting, via spray, immersion, watering, mixing or otherwise, the sand with the soil treatment composition as described herein. In another embodiment, treatment means contacting (via spray, immersion, watering, or mixing) the sand with the hydrophilization polymer as described herein. For sport fields, such as for example golf courses and professional athletic fields, it is recommended to treat sand before or just after construction and/or before or just after proceeding to "top dress" aeration. In one embodiment, sand is treated before put it in place on the field, as it is believed such polymer treatment will be more efficient.

The present invention, in one aspect, are compositions and methods to increase water holding capacity and/or available water capacity in soil or close to the seed through the application of the compositions or hydrophilization polymer as described herein. The polymer or compositions as described herein can, for example, be applied to the surface or near the top surface of the soil, into the soil or into a layer within the soil, in irrigation water or other carrier that is then applied to the soil, onto the seed or the like.

This present invention, in one embodiment, is a method to treat soil by applying a preventive treatment onto soil, which in one embodiment is bare sand. The preventive treatment, in one embodiment, can comprise either (i) the hydrophilization polymer or (2) a soil treatment composition containing the hydrophilization polymer as described herein.

The polymer is durably adsorbed onto the soil (or sand) to enhance surface hydrophilicity, water retention and/or restrict or prevent the accumulation of hydrophobic materials in soil (which prevents the development of water repellency. The treatments described herein also permit a better water distribution through the soil and proper amounts of moisture to contact root systems in order to reduce dry spots.

The benefits claimed are, in one embodiment, at least one chosen from: soil release effects, water retention when adsorb onto soil, sand or seeds (or high energy surfaces, oxide type surfaces such as ceramic, sand), prevent or delay sand contamination; enhanced hydrophilicity, water retention of bare sand (or high energy surfaces, oxide type surfaces such as ceramic, sand); long lasting beneficial effect as result of soil contact with the polymers described herein.

Alternately, it is possible that these chemistries bring to the surface durable biocide and/or bactericide properties. Cationic moieties are known to bring such effects. Lowering the surface adhesion decreases hang-on onto the surface. Alternately it is possible to combine the polymer with a biocide or bactericide substance like described in patents WO 01/93810 and WO 01/10213.

While not bound by theory, it is believed that polymer adsorption modifies the surface energy of the bare sand (need to be done onto bare sand), and the polymer layer protects the surface from soil adhesion or weakens it, and remain adsorbed during watering. Ionic interactions suspected (mainly cationic sites of the polymer with anionic sites of the surface).

The present invention addresses one of the problems of prior art in that surfactant application effectiveness on soil is typically of short duration and limited effectiveness. While surfactants may reduce the surface tension of the irrigation water and enhance the water wetability of the soil, there are disadvantages. For example, surfactants are often intrinsically less effective to improve the soil water holding capacity; the duration of surfactants is usually short, and frequent application of surfactants, which is costly, may be needed to prevent the recurrence of soil water repellence, and; as small molecules.

The present invention is a hydrophilization polymer, or a composition including a hydrophilization polymer, that can increase soil VWC. These hydrophilization polymers or compositions thereof, when applied by themselves or with irrigation water and/or precipitation, can bind to soil particles, seed to render a favorable surface wetting properties and/or help to maintain porous soil structure to increase water holding capacity or VWC of the soil. Water can readily infiltrate into the soil and be stored in the treated soil and be available for plant usage. Thus, the present invention is a hydrophilization polymer or composition containing such polymer that is capable of hydrophilizing soil particles in a targeted area, and thereby increasing benefits to the targeted soil.

In one aspect, described herein are treatments for soils, namely sandy soils, dealing for example with market such as: crop and horticulture, turf and ornamentals, lawns, golf, sports fields, athletic fields, and the like. Such application of the polymers and compositions described herein help to prevent or delay sand contamination, improve water efficiency for production in soil, conduct to greater yields and greater reduction of leaching, allow better penetration of water in lawns, fields, sports fields, athletic fields, and the like. In another aspect, described herein are treatments of seeds, such as for example bean, canola, corn, wheat, cabbage, and the like. Such application of the polymers and compositions described herein help to speed emergence of seeds, increase yield.

The hydrophilization polymer comprises monomer $A_b$ and monomer $B_a$. Monomer $A_b$ comprises at least one betaine group or at least one cationic group.

Monomer $B_a$ comprises at least one non-ionic group or at least one anionic group. In one embodiment, monomer $B_a$ comprises at least one non-ionic group. In another embodiment, monomer $B_a$ comprises at least one anionic group. The hydrophilization polymer is such that if the monomer $A_b$ comprises a cationic group, the monomer $B_a$ comprises an anionic group, resulting in a soil or seed hydrophilization polymer that is an ampholytic polymer.

The resulting hydrophilization polymer is water-soluble or water-dispersible. Generally, water-soluble polymers contain little or no crosslinking within or among the polymer particles. Water-dispersible polymers are polymers that are not substantially cross-linked or, otherwise, polymers that are only insignificantly cross-linked, such that when put in contact with water, water-dispersible polymers typically do not swell and/or form a gel. Typically, water-soluble and/or water-dispersible polymer are polymerized without any added cross-linkers, although they can be some minor cross-linking (through the general polymerization process or otherwise). In another embodiment, water soluble or water dispersible means that the polymer (generally) contains no cross linking agent.

In one embodiment, the hydrophilization polymer composition of the present invention is a random copolymer, alternating copolymer, statistical copolymer, block copolymer, terpolymer, linear copolymer, branched copolymer or graft copolymer comprising monomeric units as described herein. In one embodiment, the polymer composition comprises a random copolymer, statistical copolymer, alternating copolymer, block copolymer, or graft copolymer comprising monomeric units derived from the monomers described herein. The hydrophilization polymer, in one embodiment, includes its homopolymer, copolymer, terpolymer, block copolymer, random polymer, linear polymer, or branched polymer. In one further embodiment, the hydrophilization polymer is a linear copolymer or homopolymer, or is a branched copolymer or homopolymer.

In one embodiment, the composition or hydrophilization polymer of the present invention comprises a polymer

exhibiting, as a lower limit, a weight-average molecular weight (Mw) of 10,000 g/mol. In another embodiment, the composition or hydrophilization polymer comprises a polymer as described herein exhibiting, as a lower limit, a weight-average molecular weight (Mw) of 15,000 g/mol. In another embodiment, the composition or hydrophilization polymer comprises a polymer as described herein exhibiting, as a lower limit, a weight-average molecular weight (Mw) of 20,000 g/mol or 30,000 g/mol or 40,000 g/mol or 50,000 g/mol or 60,000 g/mol or 70,000 g/mol. In another embodiment, the composition or hydrophilization polymer comprises a polymer as described herein exhibiting, as a lower limit, a weight-average molecular weight (Mw) of 500,000 g/mol or 600,000 g/mol or 700,000 g/mol or 750,000 g/mol or 800,000 g/mol.

In one embodiment, the composition or hydrophilization polymer of the present invention comprises a polymer exhibiting, as an upper limit, a weight-average molecular weight (Mw) of 60,000 g/mol. In one embodiment, the composition or hydrophilization polymer of the present invention comprises a polymer exhibiting, as an upper limit, a weight-average molecular weight (Mw) of 80,000 g/mol. In yet another embodiment, the composition or hydrophilization polymer of the present invention comprises a polymer exhibiting, as an upper limit, a weight-average molecular weight (Mw) of 100,000 g/mol. In a further embodiment, the composition or hydrophilization polymer of the present invention comprises a polymer exhibiting, as an upper limit, a weight-average molecular weight (Mw) of 150,000 g/mol or 200,000 g/mol or 400,000 g/mol or 600,000 g/mol. In another embodiment, the composition or hydrophilization polymer of the present invention comprises a polymer exhibiting, as an upper limit, a weight-average molecular weight (Mw) of 1,000,000 g/mol or 1,250,000 g/mol or 1,500,000 g/mol or 1,750,000 g/mol or 2,000,000 g/mol or 2,400,000 g/mol.

In another embodiment, the composition or hydrophilization polymer of the present invention comprises a polymer exhibiting a weight-average molecular weight (Mw) ranging from 500,000 g/mol to 2,500,000 g/mol. In another embodiment, the composition or hydrophilization polymer of the present invention comprises a polymer exhibiting a weight-average molecular weight (Mw) ranging from 700,000 g/mol to 1,500,000 g/mol.

In one embodiment, the hydrophilization polymer is (i) a homopolymer comprising a monomer containing a betaine functional group or (ii) a copolymer comprising at least two monomers containing different betaine functional groups or (ii) a copolymer comprising at least one monomer containing a betaine functional group and at least one monomer containing a non-ionic group. In a further embodiment, the hydrophilization polymer is a copolymer comprising (i) at least one monomer containing a betaine functional group and (ii) at least one monomer containing a non-ionic group or at least one monomer containing an anionic group.

Betaines are polymeric zwitterions carrying one or more positive charges and one or more negative charges on the same betaine monomer unit. On the same betaine monomer unit, the number of positive charge(s) is equal to the number of negative charge(s).

In one aspect, the hydrophilization polymer is a homopolymer or copolymer comprising betaine units as described herein, wherein each betaine unit exhibits a permanent anionic charge and a permanent cationic charge both at highly acidic pH and at highly basic pH; these charges are permanent within a pH range from 1 to 14.

The permanent anionic charge can be contributed by one or more sulfonate, phosphate, phosphonate, phosphinate or ethenolate anions, and the like. The cationic charge can be contributed by one or more onium or inium cations of the nitrogen (ammonium, pyridinium or imidazolinium cations), phosphorus (phosphonium, and the like) or sulfur (sulfonium, and the like) family. In one embodiment, the betaine functional groups of the polybetaine are carried by pendent groups.

For the same betaine monomer unit, the atom carrying the permanent cationic charge is, in one embodiment, connected to the anion carrying the permanent anionic charge via an optionally substituted polyvalent hydrocarbon group, in particular an alkylene group, optionally substituted by one or more hydroxyl groups.

The groups carrying equal permanent positive and negative charges exhibit one or more betaine functional groups which can be represented, in the case of the cations of the nitrogen family, by the following formulae (I) to (V), exhibiting a cationic charge at the center of the functional group and an anionic charge at the end of the functional group, and the formula (VI), exhibiting an anionic charge at the center of the functional group and a cationic charge at the end of the functional group:

-N(+)(R1)(R2)-R-A-O(-) (I)

-(R3)C=N(+)(R4)-R-A-O(-) (II)

-(R3)(R)C-N(+)(R4)(R5)-R-A-O(-) (III)

-N(+)(=R6)-R-A-O(-) (IV)

-N(+)(R1)(R2)-R-W(-) (V)

-R-A'(-O(-))-R-N(+)(R1)(R2)(R7) (VI)

in which formulae (I) to (IV)

the symbols R1 , R2 and R5, which are alike or different, represent an alkyl radical comprising from 1 to 7 carbon atoms, preferably from 1 to 2 carbon atoms,

the symbols R3 and R4 represent hydrocarbon radicals which form, with the nitrogen atom, a nitrogenous heterocycle optionally comprising one or more other heteroatoms, in particular nitrogen heteroatoms,

the symbol R6 represents a hydrocarbon radical which forms, with the nitrogen atom, a saturated or unsaturated nitrogenous heterocycle optionally comprising one or more other heteroatoms, in particular nitrogen heteroatoms,

the symbol R represents a linear or branched alkylene radical comprising from 1 to 15 carbon atoms, preferably from 2 to 4 carbon atoms, which is optionally substituted by one or more hydroxyl groups, or a benzylene radical,

the symbol A represents S(=O)(=O), OP(=O)(=O), OP(=O)(OR'), P(=O)(OR') or P(=O)(R'), where R' represents an alkyl radical comprising from 1 to 7 carbon atoms or a phenyl radical,

in which formula (V)

the symbols R1, R2 and R have the definitions given above

the symbol W represents an ethenolate functional group of formula

O-C(O(-))=C(C≡N)2

O-C(O)-C(-)(C≡N)2

O-C(O)-C(-C≡N)(=C=N(-))

in which formula (VI)

the symbols R1 and R2 have the definitions given above,

the symbol R7, which is identical to or different from R1 or R2, represents an alkyl radical comprising from 1 to 7 carbon atoms, preferably from 1 to 2 carbon atoms,

the symbol A' represents -O-P(=O)-O-;

in the case of cations of the phosphorus family, mention may be made of the betaine functional groups of formulae (VII) and (VIII)

-P(+)(R1)(R2)-R-A-O(-) (VII)

-R-A'(-O(-))-R-P(+)(R1)(R2)(R7) (VIII)

in which formula (VII) the symbols R1, R2, R et A have the definitions given above,

in which formula (VIII)

the symbols R1, R2, R7 and R have the definitions given above,

the symbol A' represents -O-P(=O)-O-;

in the case of cations of the sulfur family, mention may be made of the betaine functional groups of formulae (IX) and (X)

-S(+)(R1)-R-A-O(-) (IX)

-R-A'(-O(-))-R-S(+)(R1)(R2) (X)

in which formula (IX) the symbols R1, R and A have the definitions given above,

in which formula (X)

the symbols R1, R2 and R have the definitions given above,

the symbol A' represents -O-P(=O)-O-.

The betaine functional groups can be connected to the carbon atoms of the hydrocarbon chain (also known as backbone) of the hydrophilization polymer in particular via a divalent or polyvalent hydrocarbon unit (for example alkylene or arylene unit) optionally interrupted by one or more heteroatoms, in particular oxygen atoms, an ester unit or an amide unit or else via a valency bond.

In one embodiment, the hydrocarbon chain (or backbone) of the hydrophilization polymer is a linear or branched polyalkylene chain, optionally interrupted by one or more nitrogen and/or sulfur heteroatoms. In one embodiment, the hydrocarbon chain (or backbone) of the hydrophilization polymer is a linear polyalkylene chain, optionally interrupted by one or more nitrogen and/or sulfur heteroatoms.

The hydrophilization polymer according to one embodiment is a homopolymer formed of identical betaine units or a copolymer formed of betaine units, at least two of which are different.

Said hydrophilization polymer can additionally comprise at least one unit which is nonionic or nonionogenic at the pH of the composition or at the pH of use of the composition comprising the hydrophilization polymer and/or at least one unit which is anionic or potentially anionic at the pH of the composition or at the pH of use of the composition comprising the hydrophilization polymer. These units can be hydrophilic or hydrophobic. They can represent, in one embodiment, up to 40% by weight, or up to 50% by weight, or up to 60% by weight, up to 70% by weight, or up to 80% by weight, or up to 90% by weight of the hydrophilization polymer.

However, in one embodiment, the nonionic, nonionogenic, anionic or potentially anionic units are limited in number in order for said hydrophilization polymer to retain its main characteristic of zwitterion.

The hydrophilization polymer can comprise less than 50% of its weight or more specifically less than 70 mol% of nonionic, nonionogenic, anionic or potentially anionic units;in one embiodment, or the hydrophilization polymer can comprise less than 50 mol% and more typically than 30 mol% of nonionic, nonionogenic, anionic or potentially anionic units.

Mention may be made, among the nonionic units which can be present, of those derived from ethylenically unsaturated nonionic monomers, such as acrylamide, vinyl acetate (capable of forming vinyl alcohol units by hydrolysis), C1-C4 alkyl esters of acrylic acid and of methacrylic acid, C1-C4 hydroxyalkyl esters of acrylic acid and of methacrylic acid, in particular ethylene glycol and propylene glycol acrylate and methacrylate, polyalkoxyl esters of acrylic acid and of methacrylic acid, in particular polyethylene glycol and polypropylene glycol esters, and the like.

Mention may be made, among the units which are nonionogenic at a pH of less than or equal to 3 or which are potentially anionic at a higher pH, of those derived from ethylenically unsaturated monomers, such as monomers having at least one carboxyl functional group, such as α,β-ethylenically unsaturated carboxylic acid or the corresponding anhydrides, such as acrylic acid, methacrylic acid, maleic acid, acrylic anhydride, methacrylic anhydride, maleic anhydride, fumaric acid, itaconic acid, N-methacroyloylalanine, N-acryloylglycine and their water-soluble salts,
monomers which are precursors of carboxylate functional groups, such as tert-butyl acrylate, which generate, after polymerization, carboxyl functional groups by hydrolysis.

Mention may be made, among the units which are nonionogenic at a pH of greater than or equal to 9, of those derived from ethylenically unsaturated monomers, such as
ω-(N,N-dialkylamino)alkyl amides of a,β-mono-ethylenically unsaturated carboxylic acids, such as N,N-dimethylaminomethylacrylamide or -methacrylamide, 2-(N,N-dimethylamino)ethylacrylamide or -methacrylamide, 3-(N,N-dimethylamino)propylacrylamide or -methacrylamide, or 4-(N,N-dimethylamino)butylacrylamide or -methacrylamide,
α,β-monoethylenically unsaturated amino esters, such as 2-(dimethylamino)ethyl methacrylate (DMAM), 3-(dimethylamino)propyl methacrylate, 2-(tert-butylamino)ethyl methacrylate, 2-(dipentylamino)ethyl methacrylate or 2-(diethylamino)ethyl methacrylate,
monomers which are precursors of amine functional groups, such as N-vinylformamide, N-vinylacetamide, and the like, which generate primary amine functional groups by simple acidic or basic hydrolysis.

Mention may be made, among the anionic units (the first pKa of which is less than 3), of
monomers having at least one sulfate or sulfonate functional group, such as 2-sulfooxyethyl methacrylate, vinylbenzenesulfonic acid, allylsulfonic acid, 2-acrylamido-2-methylpropanesulfonic acid, sulfoethyl acrylate or methacrylate, sulfopropyl acrylate or methacrylate, and their water-soluble salts,

monomers having at least one phosphonate or phosphate functional group, such as vinylphosphonic acid, and the like, ethylenically unsaturated phosphate esters, such as phosphates derived from hydroxyethyl methacrylate (Empicryl 6835 from Rhodia) and those derived from polyoxyalkylene methacrylates, and their water-soluble salts.

In one embodiment, the hydrophilization polymer as described herein does not comprise monomer units other than betaines carrying as many permanent anionic charges as permanent cationic charges at a pH ranging from 1 to 14. If other units are present, they are rather potentially anionic units in an amount of less than 50 mol%, typically less than 30 mol%.

Said the hydrophilization polymer can be obtained in particular by radical polymerization or copolymerization in aqueous solution of ethylenically unsaturated betaine monomers, in particular of ethylenically unsaturated monomers carrying at least one betaine functional group of formula (I) to (X) above, and optionally of other ethylenically unsaturated monomers. In one embodiment, the polymerization or copolymerization of the hydrophilization polymer is conducted in the absence or substantial absence of added crosslinking agent, such as boron and the like. As a result, the soil hydrophilization contains no, a minimal amount or an insignificant number of intra-particulately cross-linked groups; resulting in a polymer that is water-dispersible or water-soluble. By contrast, polymers that are significantly cross-linked become water-swellable, resulting in such polymers that "gel" as opposed to being water-soluble or water dispersible.

Said monomers can exhibit, by way of examples:

one or more mono- or polyethylenically unsaturated hydrocarbon radicals (in particular vinyl, allyl or styryl radicals, and the like)

one or more mono- or polyethylenically unsaturated ester radicals (in particular acrylate, methacrylate or maleate radicals, and the like)

one or more mono- or polyethylenically unsaturated amide radicals (in particular acrylamido or methacrylamido radicals, and the like).

Mention may in particular be made, by way of examples, of polybetaines derived from the following betaine monomers: alkyl or hydroxyalkyl sulfonates or phosphonates of dialkylammonium alkyl acrylates or methacrylates, acrylamido or methacrylamido, such as:

- sulfopropyldimethylammonioethyl methacrylate, sold by Raschig under the name SPE:

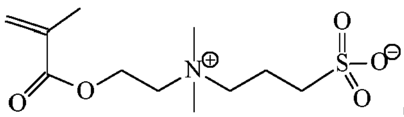

(SPE)

- sulfoethyldimethylammonioethyl methacrylate and sulfobutyldimethylammonioethyl methacrylate:

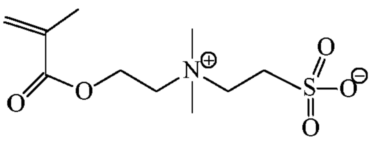

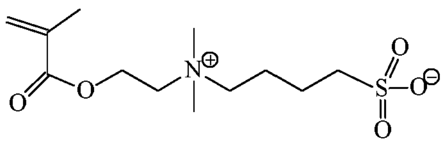

,

the synthesis of which is described in the paper "Sulfobetaine zwitterionomers based on n-butyl acrylate and 2-ethoxyethyl acrylate: monomer synthesis and copolymerization behavior", Journal of Polymer Science, 40, 511-523 (2002),

- sulfohydroxypropyldimethylammonioethyl methacrylate:

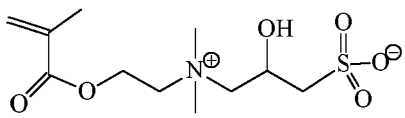

(SPHE)

- sulfopropyldimethylammoniopropylacrylamide:

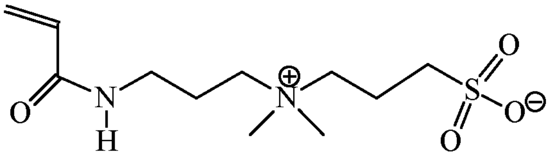

,

the synthesis of which is described in the paper "Synthesis and solubility of the poly(sulfobetaine)s and the corresponding cationic polymers: 1. Synthesis and characterization of sulfobetaines and the corresponding cationic monomers by nuclear magnetic resonance spectra", Wen-Fu Lee and Chan-Chang Tsai, Polymer, 35 (10), 2210-2217 (1994),

- sulfopropyldimethylammoniopropylmethacrylamide, sold by Raschig under the name SPP:

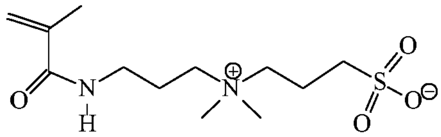

(SPP)

- sulphopropyldimethylammonioethyl acrylate, sold by Raschig under the name SPDA:

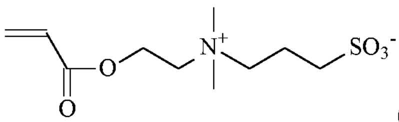

(SPDA)

- sulfohydroxypropyldimethylammoniopropyl methacrylamide:

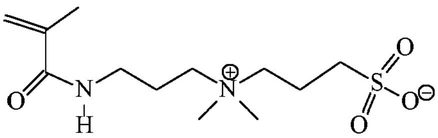

(SHPP)

- sulfopropyldiethylammonioethyl methacrylate:

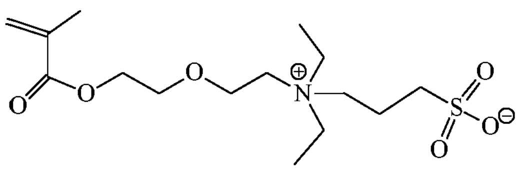

,

the sythesis of which is described in the paper "Poly(sulphopropylbetaines): 1. Synthesis and characterization", V. M. Monroy Soto and J. C. Galin, Polymer, 1984, Vol. 25, 121-128, heterocyclic betaine monomers, such as:

- sulfobetaines derived from piperazine:

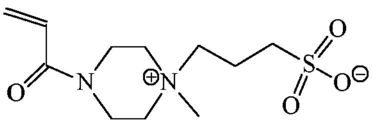

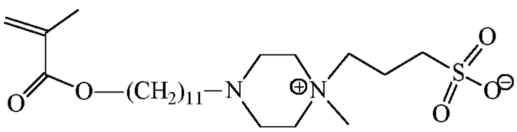

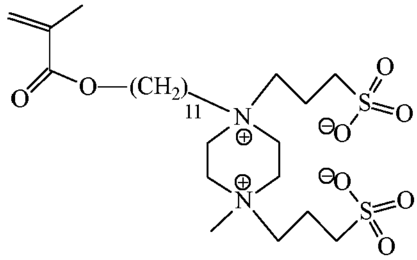

,

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

- sulfobetaines derived from 2-vinylpyridine and 4-vinylpyridine, such as 2-vinyl-1-(3-sulfopropyl)pyridinium betaine (2SPV or "SPV"), sold by Raschig under the name SPV:

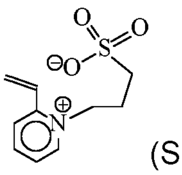

(SPV),

and 4-vinyl-1-(3-sulfopropyl)pyridinium betaine (4SPV), the synthesis of which is disclosed in the paper "Evidence of ionic aggregates in some ampholytic polymers by transmission electron microscopy", V. M. Castaño and A. E. Gonzalez, J. Cardoso, O. Manero and V. M. Monroy, J. Mater. Res., 5 (3), 654-657 (1990):

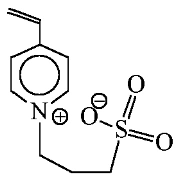

(4SPV)

- 1-vinyl-3-(3-sulfopropyl)imidazolium betaine:

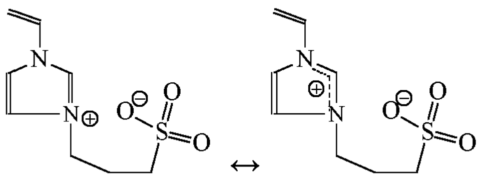

,

the synthesis of which is described in the paper "Aqueous solution properties of a poly(vinyl imidazolium sulphobetaine)", J. C. Salamone, W. Volkson, A.P. Oison, S.C. Israel, Polymer, 19, 1157-1162 (1978),

alkyl or hydroxyalkyl sulfonates or phosphonates of dialkylammonium alkyl allylics, such as sulfopropylmethyldiallylammonium betaine:

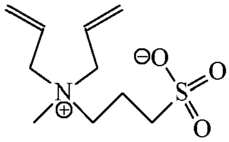

,

the synthesis of which is described in the paper "New poly(carbobetaine)s made from zwitterionic diallylammonium monomers", Favresse, Philippe; Laschewsky, Andre, Macromolecular Chemistry and Physics, 200(4), 887-895 (1999),

alkyl or hydroxyalkyl sulfonates or phosphonates of dialkylammonium alkyl styrenes, such as:

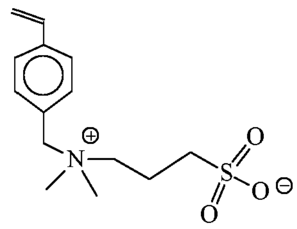

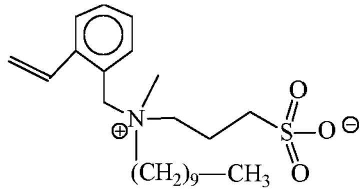

,

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

betaines resulting from ethylenically unsaturated anhydrides and dienes, namely as:

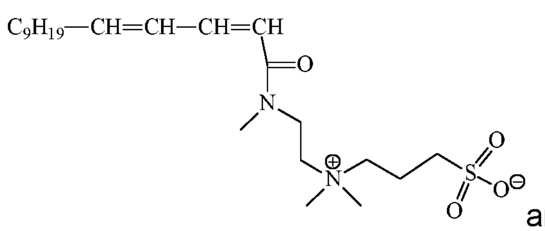

and

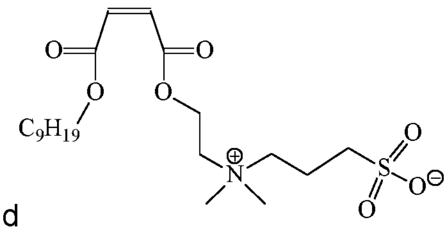

the synthesis of which is described in the paper "Hydrophobically Modified Zwitterionic Polymers: Synthesis, Bulk Properties, and Miscibility with Inorganic Salts", P. Koberle and A. Laschewsky, Macromolecules, 27, 2165-2173 (1994),

- phosphobetaines, such as:

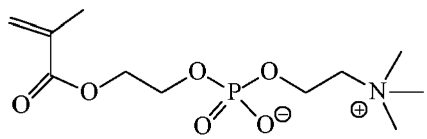

(MPC)

or alternatively:

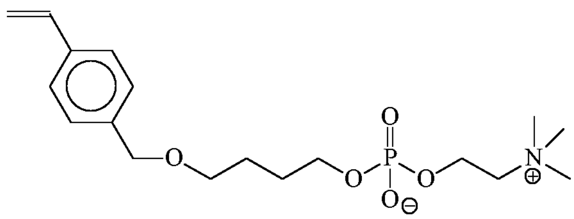

(VPC)

The synthesis of MPC and of VPC is disclosed in EP 810 239 B1 (Biocompatibles, Alister et al.).

- betaines of formula:

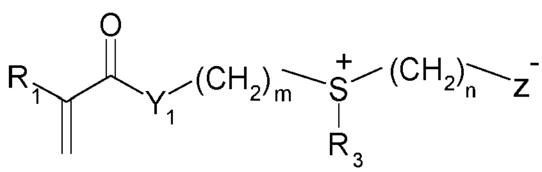

or f formula:

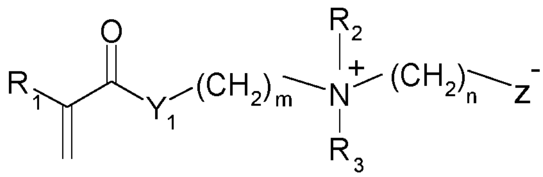

in which: R1 is hydrogen or methyl, R2 and R3, which are identical or different, are hydrogen or alkyls having from 1 to 6 carbon atoms, Y1 is a divalent group of formula -O- or NR2, Z- is SO3-, m is 2 or 3, and n is 1-6.

The monomer $A_b$ is, in one embodiment, chosen from one or more of the following:

sulphopropyldimethylammonioethyl methacrylate (SPE),
sulphoethyldimethylammonioethyl methacrylate,
sulphobutyldimethylammonioethyl methacrylate,
sulphohydroxypropyldimethylammonioethyl methacrylate (SHPE),
sulphopropyldimethylammoniopropylacrylamide,
sulphopropyldimethylammoniopropylmethacrylamide (SPP),
sulphohydroxypropyldimethylammoniopropylmethacrylamide (SHPP),
sulphopropyldimethylammonioethyl acrylate (SPDA),
sulphopropyldiethylammonioethyl methacrylate,
2-vinyl-1-(3-sulphopropyl)pyridinium betaine,
4-vinyl-1-(3-sulphopropyl)pyridinium betaine,
1-vinyl-3-(3-sulphopropyl)imidazolium betaine,
sulphopropylmethyldiallylammonium betaine.

The monomer $A_b$ corresponds, for example, to one of the following formulae :

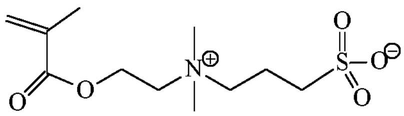

(SPE)

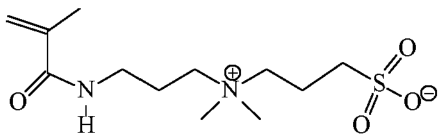

(SPP)

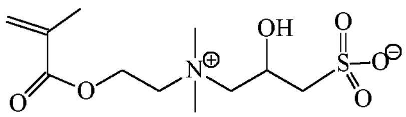

(SHPE)

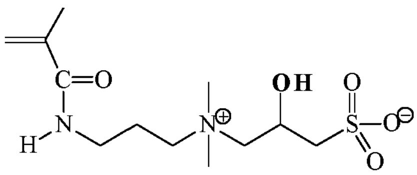

(SHPP)

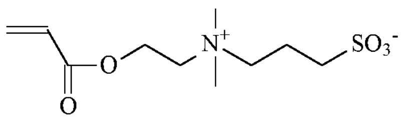

(SPDA).

In one embodiment, monomer $B_a$ is a nonionic monomer: hydroxyethyl acrylate, hydroxyethyl methacrylate, hydroxypropyl acrylate and hydroxypropyl methacrylate, acrylamide (AM), methacrylamide, N-methylolacrylamide, dimethylacrylamide, dimethylmethacrylamide, poly(ethylene and/or propylene oxide), if appropriate random or in the block form, α-methacrylates, vinyl alcohol or vinylpyrrolidone.

In one embodiment, the hydrophilic nonionic monomer $B_a$ is: acrylamide (AM),

In another embodiment, monomer $A_b$ is sulphopropyldimethylammonioethyl methacrylate (SPE) and/or SPP.

In one embodiment, the polymers are thus prepared by an inverse polymerization process which comprises the following stages:

a1): preparation of the inverse emulsion, and

a2): polymerization.

Stage a1) is carried out by emulsification of a mixture comprising the aqueous phase comprising the monomers, the external phase and at least one emulsifying agent. The polymerization is carried out by bringing together the monomers $A_b$ and optionally the monomers $B_a$ with a compound which generates free radicals and the polymerization is carried out at a temperature between, for example, ambient temperature and 75°C, depending on the initiating system chosen.

In another embodiment, the main routes of access to polysulfobetaines by chemical modification of a precursor polymer by sultones and haloalkylsulfonates are described in particular in the following documents:

"Synthesis and aqueous solution behaviour of copolymers containing sulfobetaine moieties in side chains", I.V. Berlinova, I.V. Dimitrov, R.G. Kalinova, N.G. Vladimirov, Polymer, 41, 831-837 (2000)

"Poly(sulfobetaine)s and corresponding cationic polymers: 3. Synthesis and dilute aqueous solution properties of poly(sulfobetaine)s derived from styrene-maleic anhydride", Wen-Fu Lee and Chun-Hsiung Lee, Polymer, 38 (4), 971-979 (1997)

"Poly(sulfobetaine)s and corresponding cationic polymers. VIII. Synthesis and aqueous solution properties of a cationic poly(methyl iodide quaternized styrene-N,N-dimethylaminopropyl maleamidic acid) copolymer", Lee, Wen-Fu and Chen, Yan-Ming, Journal of Applied Polymer Science, 80, 1619-1626 (2001)

"Synthesis of polybetaines with narrow molecular mass distribution and controlled architecture", Andrew B. Lowe, Norman C. Billingham and Steven P. Armes, Chem. Commun., 1555-1556 (1996)

"Synthesis and Properties of Low-Polydispersity Poly(sulfopropylbetaine)s and Their Block Copolymers", Andrew B. Lowe, Norman C. Billingham and Steven P. Armes, Macromolecules, 32, 2141-2146 (1999)

The preparation of polyphosphonato- and phosphinatobetaines by chemical modification is reported in "New polymeric phosphonato-, phosphinato- and carboxybetaines", T. Hamaide, Macromolecular Chemistry, 187, 1097-1107 (1986).

In one embodiment, monomers comprising the soil hydrpohpilization polymer are chosen from alkylsulfonates or hydroxyalkylsulfonates of dialkylammonium alkyl methacrylates or methacrylamides and sulfobetaines derived from a vinylpyridine. More preferably still, are alkylsulfonates or hydroxyalkylsulfonates of dialkylammonium methacrylamides.

In one embodiment, the soil hydrophilization is chosen from:

homopolymers formed of betaine units chosen from one of the following formulae (-SPE-), (-SPP-), (-SHPE-) and (-SHPP-)

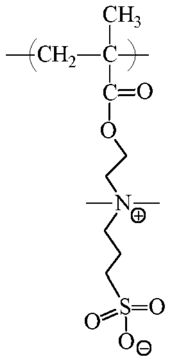

(-SPE-)

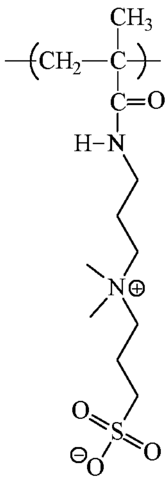

(-SPP-)

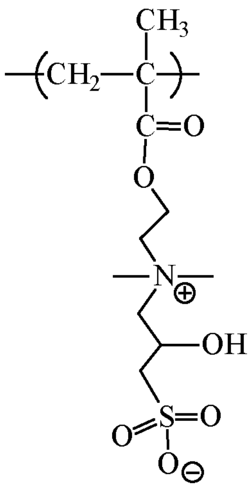

(-SHPE-)

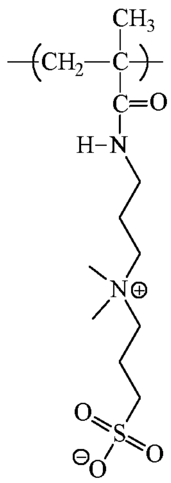

(-SHPP-)

homopolymers of sulfobetaine which is derived from 2-vinylpyridine of formula

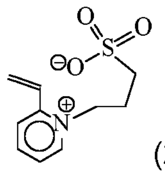

(2SPV),

copolymers formed of betaine units, at least two of which are different and are chosen from those of formulae (-SPE-), (-SPP-), (-SHPE-) and (-SHPP-) above

copolymers formed of identical or different betaine units chosen from those of formulae (-SPE-), (-SPP-), (-SHPE-) and (-SHPP-) above and of methacrylic acid units, the amount of methacrylic acid units representing less than 50 mol%, preferably less than 30 mol%, of said copolymers.

In one embodiment, the soil hydrophilization is a homopolymer formed the following formulae: (-SPE-). In one embodiment, the soil hydrophilization is a homopolymer formed the following formulae: (-SPP-). In one embodiment, the soil hydrophilization is a homopolymer formed the following formulae: (-SHPE-). In one embodiment, the soil hydrophilization is a homopolymer formed the following formulae: (-SHPP-).

In another embodiment, hydrophilization polymer comprising betaine units chosen from those of formulae (-SPE-), (-SPP-), (-SHPE-) and (-SHPP-) exhibit a weight-average molecular weight (Mw) ranging from 10,000 to 1,000,000 g/mol. In another embodiment, hydrophilization polymer comprising betaine units as described herein chosen from those of formulae (-SPE-), (-SPP-), (-SHPE-) and (-SHPP-) exhibit a weight-average molecular weight (Mw) ranging from 20,000 to 500,000 g/mol. In another embodiment, hydrophilization polymer comprising betaine units as described herein chosen from those of formulae (-SPE-), (-SPP-), (-SHPE-) and (-SHPP-) exhibit a weight-average molecular weight (Mw) ranging from 30,000 to 80,000 g/mol. In another embodiment, hydrophilization polymer comprising betaine units as described herein chosen from those of formulae (-SPE-), (-SPP-), (-SHPE-) and (-SHPP-) exhibit a weight-average molecular weight (Mw) ranging from 40,000 to 60,000 g/mol. In yet another embodiment, hydrophilization polymer comprising betaine units as described herein is of formulae (-SPE-) or (-SPP-), and exhibits a weight-average molecular weight (Mw) ranging from 40,000 to 60,000 g/mol.

In one embodiment, the hydrophilization polymer is an ampholytic polymer. In such embodiment, the hydrophilization polymer is such that monomer $A_b$ comprises a cationic group, and the monomer $B_a$ is present and comprises an anionic group.

Monomer $A_b$, in such embodiment, comprises a cationic monomer. The cationic monomer can comprise an ammonium group of formula -NR3+, wherein R, which is identical or different, represents a hydrogen atom, an alkyl group comprising 1 to 10 carbon atoms, or a benzyl group, optionally carrying a hydroxyl group, and comprise an anion (counter-ion). Examples of anions are halides such as chloride and bromides, sulphates, hydrosulphates, alkylsulphates (for example comprising 1 to 6 carbon atoms), phosphates, citrates, formates, and acetates.

Examples of cationic monomers include

- aminoalkyl (meth)acrylates, aminoalkyl (meth)acrylamides,
- monomers, including particularly (meth)acrylates, and (meth)acrylamides derivatives, comprising at least one secondary, tertiary or quaternary amine function, or a heterocyclic group containing a nitrogen atom, vinylamine or ethylenimine;
- diallyldialkyl ammonium salts;
- their mixtures, their salts, and macromonomers deriving from therefrom;
- dimethylaminoethyl (meth)acrylate, dimethylaminopropyl (meth)acrylate, ditertiobutylaminoethyl (meth)acrylate, dimethylaminomethyl (meth)acrylamide, dimethylaminopropyl (meth)acrylamide;
- ethylenimine, vinylamine, 2-vinylpyridine, 4- vinylpyridine;
- trimethylammonium ethyl (meth)acrylate chloride, trimethylammonium ethyl (meth)acrylate methyl sulphate, dimethylammonium ethyl (meth)acrylate benzyl chloride, 4-benzoylbenzyl dimethylammonium ethyl acrylate chloride, trimethyl ammonium ethyl (meth)acrylamido (also called 2-(acryloxy)ethyltrimethylammonium, TMAEAMS) chloride, trimethylammonium ethyl (meth)acrylate (also called 2-(acryloxy)ethyltrimethylammonium, TMAEAMS) methyl sulphate, trimethyl ammonium propyl (meth)acrylamido chloride, vinylbenzyl trimethyl ammonium chloride,
- diallyldimethyl ammonium chloride,
- monomers having the following formula A(II):

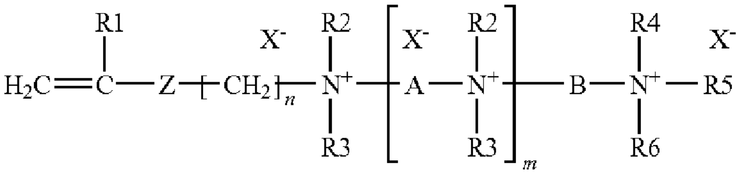

A(II)

wherein

- $R_1$ is a hydrogen atom or a methyl or ethyl group;
- $R_2$, $R_3$, $R_4$, $R_5$ and $R_6$, which are identical or different, are linear or branched $C_1$-$C_6$, preferably $C_1$-$C_4$, alkyl, hydroxyalkyl or aminoalkyl groups;
- m is an integer from 0 to 10, for example 1;
- n is an integer from 1 to 6, preferably 2 to 4;
- Z represents a -C(O)O- or -C(O)NH- group or an oxygen atom;
- A represents a $(CH_2)_p$ group, p being an integer from 1 to 6, preferably from 2 to 4;
- B represents a linear or branched C2-C12, typically C3-C6, polymethylene chain optionally interrupted by one or more heteroatoms or heterogroups, in particular O or NH, and optionally substituted by one or more hydroxyl or amino groups, preferably hydroxyl groups;
- $X^-$, which are identical or different, represent counterions (The monomers according formula A(I) are generally labeled as a "DIQUAT"), and
- their mixtures, and macromonomers deriving therefrom.

Other cationic monomers include compounds of general formula A(I):

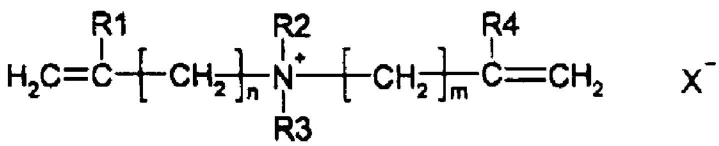

A(I)

in which:

- R1 and R4, independently of each other, represent a hydrogen atom or a linear or branched C1-C6 alkyl group;

- R2 and R3, independently of each other, represent an alkyl, hydroxyalkyl or aminoalkyl group in which the alkyl group is a linear or branched C1-C6 chain, preferably a methyl group;

- n and m are integers between 1 and 3;

- $X^-$ represents a counterion which is compatible with the water-soluble or water-dispersible nature of the polymer. In one embodiment, X is selected from the group of halide anions, sulfate anions, hydrogen sulfate anions, phosphate anions, citrate anions, formate anions, or acetate anions.

In one further embodiment, monomer $A_b$ comprises is dimethyldiallylammonium chloride (DADMAC for diallyldimethylammonium chloride). In another embodiment, monomer $A_b$ comprises the monomer of formula A(I). In yet another embodiment, monomer $A_b$ comprises the monomer of formula A(II).

The monomer $B_a$, in one embodiment, comprises an anionic group. More specifically, monomer $B_a$ can comprise water-soluble C3-C8 carboxylic, sulfonic, sulfuric, phosphonic or phosphoric acids containing monoethylenic unsaturation, anhydrides thereof and water-soluble salts thereof.

The monomer $B_a$, in another embodiment, can comprise acrylic acid, methacrylic acid, $\alpha$-ethacrylic acid, $\beta$,$\beta$-dimethacrylic acid, methylenemalonic acid, vinylacetic acid, allylacetic acid, ethylideneacetic acid, propylideneacetic acid, crotonic acid, maleic acid, fumaric acid, itaconic acid, citraconic acid, mesaconic acid, N-methacryloylalanine, N-acryloylhydroxyglycine, sulfopropyl acrylate, sulfoethyl acrylate, sulfoethyl methacrylate, sulfoethyl methacrylate, styrenesulfonic acid, vinylsulfonic acid, vinylphosphonic acid, phosphoethyl acrylate, phosphonoethyl acrylate, phosphopropyl acrylate, phosphonopropyl acrylate, phosphoethyl methacrylate, phosphonoethyl methacrylate, phosphopropyl methacrylate and phosphonopropyl methacrylate, and the ammonium and alkali metal salts of these acids.

In one typical embodiment, monomer $B_a$ comprises acrylic acid or methacrylic acid, or the ammonium or alkali metal salts of these acids.

In some embodiments, the monomer $A_b$ to monomer $B_a$ molar ratio (herein sometimes referred to as "monomer $A_b$ /monomer $B_a$ molar ratio") is between 1/5 and 9/10, respectively. In one embodiment, the monomer $A_b$ /monomer $B_a$ molar ratio is between 1/4 and 4/5, respectively. In another embodiment, the monomer $A_b$ /monomer $B_a$ molar ratio is between 1/2 and 4/6, respectively. In another embodiment, the monomer $A_b$ /monomer $B_a$ molar ratio is about 1/2, respectively. In yet another embodiment, the monomer $A_b$ /monomer $B_a$ molar ratio is about 4/6, respectively.

In alternative embodiments, the monomer $A_b$ /monomer $B_a$ molar ratio has a lower limit chosen from one of following: 1/6, or 1/5, or 1/4 or 1/2, respectively. In another embodiment, the monomer $A_b$ /monomer $B_a$ molar ratio has an upper limit chosen from one of following: 9/10, or 4/5, or 7/10, or 3/5 or 1/2, respectively.

In one embodiment, the hydrophilization polymer comprises one of the following:

- DADMAC/acrylic acid copolymer;

- DADMAC/methacrylic acid copolymer;

- DIQUAT/acrylic acid copolymer; or

- DIQUAT/methacrylic acid copolymer.

Said hydrophilization polymer can also comprise at least one unit which is nonionic or nonionogenic at the pH of the composition or at the pH of use of the composition comprising the hydrophilization polymer and/or at least one unit which is anionic or potentially anionic at the pH of the composition or at the pH of use of the composition comprising the hydrophilization polymer.

In one embodiment, monomer $A_b$ can comprise, as an upper limit, up to 40% by weight, or up to 50% by weight, or up to 60% by weight, up to 70% by weight, or up to 80% by weight, or up to 90% by weight of the hydrophilization polymer or of the monomer units. In another embodiment, monomer $A_b$ can comprise, as a lower limit, 1% by weight, or 2% by weight, or 10% by weight, or 70% by weight, or 80% by weight, or up to 90% by weight of the hydrophilization polymer or of the monomer units.

The copolymers as described herein can be obtained according to the known techniques for preparing copolymers, in particular by radical-mediated polymerization of the ethylenically unsaturated starting monomers which are known compounds or which can readily be obtained by a person skilled in the art using conventional synthetic processes of organic chemistry. In one embodiment, the radical-mediated polymerization or copolymerization of the hydrophilization polymer is conducted in the absence or substantial absence of added crosslinking agent. As a result, the soil hydrophilization contains no, a minimal amount or an insignificant number of intra-particulately cross-linked groups; resulting in a polymer that is water-dispersible or water-soluble. By contrast, polymers that are significantly cross-linked become

water-swellable, resulting in such polymers that "gel" as opposed to being water-soluble or water dispersible.

In another embodiment, soil treatments include coating a seed of said plant with a composition comprising the hydrophilization polymer as described herein. Such methods and treatments increases seedling emergence, growth, as well as establishment, as compared with seed not coated with such polymer.

In one embodiment, the seed is a grass seed, including but not limited to the following: Perennial Ryegrass (Lolium perenne), Tall Fescue (Festuca arundinacea), Kentucky Bluegrass (Poa pratensis), Hard Fescue (Festuca longifolia) and Chewings Fescue (Festuca rubra commutata), Seashore Paspalum or Creeping Red Fescue.

In one embodiment, the seed is of the crop or plant species including but not limited to corn (Zea mays), Brassica sp. (e.g., B. napus, B. rapa, B. juncea), alfalfa (Medicago sativa), rice (Oryza sativa), rye (Secale cereale), sorghum (Sorghum bicolor, Sorghum vulgare), millet (e.g., pearl millet (Pennisetum glaucum), proso millet (Panicum miliaceum), foxtail millet (Setaria italica), finger millet (Eleusine coracana)), sunflower (Helianthus annuus), safflower (Carthamus tinctorius), wheat (Triticum aestivum), soybean (Glycine max), tobacco (Nicotiana tabacum), potato (Solanum tuberosum), peanuts (Arachis hypogaea), cotton (Gossypium barbadense, Gossypium hirsutum), sweet potato (Ipomoea batatus), cassava (Manihot esculenta), coffee (Cofea spp.), coconut (Cocos nucifera), pineapple (Ananas comosus), citrus trees (Citrus spp.), cocoa (Theobroma cacao), tea (Camellia sinensis), banana (Musa spp.), avocado (Persea americana), fig (Ficus casica), guava (Psidium guajava), mango (Mangifera indica), olive (Olea europaea), papaya (Carica papaya), cashew (Anacardium occidentale), macadamia (Macadamia integrifolia), almond (Prunus amygdalus), sugar beets (Beta vulgaris), sugarcane (Saccharum spp.), oats, barley, vegetables, ornamentals, woody plants such as conifers and deciduous trees, squash, pumpkin, hemp, zucchini, apple, pear, quince, melon, plum, cherry, peach, nectarine, apricot, strawberry, grape, raspberry, blackberry, soybean, sorghum, sugarcane, rapeseed, clover, carrot, and Arabidopsis thaliana.

In one embodiment, the seed is of any vegetables species including but not limited to tomatoes (Lycopersicon esculentum), lettuce (e.g., Lactuca sativa), green beans (Phaseolus vulgaris), lima beans (Phaseolus limensis), peas (Lathyrus spp.), cauliflower, broccoli, turnip, radish, spinach, asparagus, onion, garlic, pepper, celery, and members of the genus Cucumis such as cucumber (C. sativus), cantaloupe (C. cantalupensis), and musk melon (C. melo).

In one embodiment, the seed is of any ornamentals species including but not limited to hydrangea (Macrophylla hydrangea), hibiscus (Hibiscus rosasanensis), petunias (Petunia hybrida), roses (Rosa spp.), azalea (Rhododendron spp.), tulips (Tulipa spp.), daffodils (Narcissus spp.), carnation (Dianthus caryophyllus), poinsettia (Euphorbia pulcherrima), and chrysanthemum.

In one embodiment, the seed is of any conifer species including but not limited to conifers pines such as loblolly pine (Pinus taeda), slash pine (Pinus elliotii), ponderosa pine (Pinus ponderosa), lodgepole pine (Pinus contorta), and Monterey pine (Pinus radiata), Douglas-fir (Pseudotsuga menziesii); Western hemlock (Tsuga canadensis); Sitka spruce (Picea glauca); redwood (Sequoia sempervirens); true firs such as silver fir (Abies amabilis) and balsam fir (Abies balsamea); and cedars such as Western red cedar (Thuja plicata) and Alaska yellow-cedar (Chamaecyparis nootkatensis).

In one embodiment, the seed is of any leguminous plant species including but not limited beans and peas. Beans include guar, locust bean, fenugreek, soybean, garden beans, cowpea, mungbean, lima bean, fava bean, lentils, chickpea, pea, moth bean, broad bean, kidney bean, lentil, dry bean, etc. Legumes include, but are not limited to, Arachis, e.g., peanuts, Vicia, e.g., crown vetch, hairy vetch, adzuki bean, mung bean, and chickpea, Lupinus, e.g., lupine, trifolium, Phaseolus, e.g., common bean and lima bean, Pisum, e.g., field bean, Melilotus, e.g., clover, Medicago, e.g., alfalfa, Lotus, e.g., trefoil, lens, e.g., lentil, and false indigo. Typical forage and turf grass for use in the compositions and methods described herein include but are not limited to alfalfa, orchard grass, tall fescue, perennial ryegrass, creeping bent grass, lucerne, birdsfoot trefoil, clover, stylosanthes species, lotononis bainessii, sainfoin and redtop. Other grass species include barley, wheat, oat, rye, orchard grass, guinea grass, sorghum or turf grass plant.

In another embodiment, the seed is selected from the following crops or vegetables: corn, wheat, sorghum, soybean, tomato, cauliflower, radish, cabbage, canola, lettuce, rye grass, grass, rice, cotton, sunflower and the like.

It is understood that the term "seed" or "seedling" is not limited to a specific or particular type of species or seed. The term "seed" or "seedling" can refer to seed from a single plant species, a mixture of seed from multiple plant species, or a seed blend from various strains within a plant species. In one embodiment, crop seeds include but are not limited to rice, corn, wheat, barley, oats, soybean, cotton, sunflower, alfalfa, sorghum, rapeseed, sugarbeet, tomato, bean, carrot, tobacco or flower seeds.

The seed coating composition may also comprise a binder. The binder (or any of the layers) can be molasses, granulated sugar, alginates, karaya gum, jaguar gum, tragacanth gum, polysaccharide gum, mucilage, gelatin, polyvinyl acetates, polyvinyl acetate copolymers, polyvinyl alcohols, polyvinyl alcohol copolymers, styrene acrylate polymers, styrene butadiene polymers, celluloses (including ethylcelluloses and methylcelluloses, hydroxypropylcelluloses, hydroxymethyl celluloses, hydroxymethylpropyl-celluloses), polyvinylpyrolidones, dextrins, malto-dextrins, polysaccharides, fats, oils, proteins, gum arabics, shellacs, vinylidene chloride, vinylidene chloride copolymers, calcium lignosulfonates, acrylic copolymers, starches, derivatized starches, polyvinylacrylates, zeins, carboxymethylcellulose, chitosan,

polyethylene oxide, acrylimide polymers and copolymers, polyhydroxyethyl acrylate, methylacrylimide monomers, alginate, ethylcellulose, polychloroprene, syrups or any combination thereof.

In another embodiment, the seed coating composition contains at least one active ingredient. The active ingredient can be one or more herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides; perchlorinated organic insecticides, methoxychlor, miticides, propynyl sulfite, triazapentadiene miticides, chlorinated aromatic miticides, tetradifan, dinitrophenol miticides, binapacryl, or any mixture thereof.

In one embodiment, soil can be treated using the hydrophilization polymer as described herein, directly or as part of a composition. In one embodiment, the soil hydrophilization is part of a soil treatment composition, where the soil treatment composition comprises: the hydrophilization polymer; water; and an optional surfactant. In another embodiment, the hydrophilization polymer is part of a composite particle comprising a soil particle, such as for example a sand particle, and one or more hydrophilization polymers described herein. This embodiment, for example, can be used as a top dress treatment, where sand or soil particle mixed with the soil hydrophilization particle apart from the treatment field or area, then applied to the targeted field or ground area, e.g., golf green or athletic field during the construction thereof.

The hydrophilization polymer (directly or as part of a composition), in one embodiment, is contacted with soil in an effective amount to increase the hydrophilicity of the soil as compared to soil without the hydrophilization polymer. In one embodiment, the soil additive composition is contacted with soil in an effective amount to increase the duration of plant available water of the soil as compared to soil without the hydrophilization polymer. The duration (time) of plant available water can be increased in one embodiment to greater than 30% as compared to soil without the hydrophilization polymer. The duration (time) of plant available water can be increased in one embodiment to greater than 40% as compared to soil without the hydrophilization polymer. The duration (time) of plant available water can be increased in one embodiment to greater than 50% as compared to soil without the hydrophilization polymer. The duration (time) of plant available water can be increased in another embodiment to greater than 60% as compared to soil without the hydrophilization polymer. The duration (time) of plant available water can be increased in yet another embodiment to greater than 70% as compared to soil without the hydrophilization polymer.

In one embodiment, the effective amount is an amount of soil additive composition or hydrophilization polymer greater than 0.1 ppm of soil. In another embodiment, the effective amount is an amount of soil additive composition or hydrophilization polymer greater than 1 ppm of soil. In another embodiment, the effective amount is an amount of soil additive composition or hydrophilization polymer greater than 10 ppm of soil. In another embodiment, the effective amount is an amount of soil additive composition or hydrophilization polymer greater than 50 ppm of soil. In another embodiment, the effective amount is an amount of soil additive composition or hydrophilization polymer greater than 100 ppm of soil. In another embodiment, the effective amount is an amount of soil additive composition or hydrophilization polymer greater than 600 ppm of soil. One ppm is equivalent to 1 milligram of something per liter of water (mg/l) or, in the context of soil, 1 milligram of something per kilogram soil (mg/kg). In another embodiment, the effective amount is an amount of soil additive composition or hydrophilization polymer greater than 400 ppm of soil.

In another embodiment, the hydrophilization polymer is contacted with soil in an effective amount to increase the root characteristics of a plant as compared to soil without the hydrophilization polymer. Root characteristics can be any of the following, among others: root length, root density, root surface area, or root volume. The hydrophilization polymer can be contacted with soil in an effective amount to increase the germination rate of a plant as compared to soil without the hydrophilization polymer. In one embodiment, germination rate is characterized by at least one of the following characteristics: seed emergence, seedling density, plant coverage, plant yield and accelerated plant emergence. The hydrophilization polymer, in another embodiment, is contacted with soil in an effective amount to increase the water holding capacity of the soil as compared to soil without the hydrophilization polymer.

In one embodiment, the soil additive composition is contacted with soil in an effective amount to increase the duration of plant available water of the soil as compared to soil without the hydrophilization polymer. In another embodiment, the soil is bulk soil. The soil, in another embodiment, can comprise a sand medium. Methods include applying the sand particle medium to a field area as a top dress.

In another embodiment, methods include increasing the growth of a plant which comprises coating at least partially a seed of said plant with a polymer comprising:

monomer $A_b$ comprising at least one betaine group or at least one cationic group; and

monomer $B_a$ comprising at least one non-ionic group or at least one anionic group,

wherein the polymer is water-soluble or water-dispersible; and provided that if the monomer $A_b$ comprises a cationic group, the monomer $B_a$ comprises an anionic group,

In another embodiment, the seed is at least partially coated with one or more polymers as described herein. The seed can be at least partially (or fully) coated with an additional compound selected from a binder, a pesticide, a fertilizer or a combination thereof.

In another embodiment, disclosed are aqueous soil treatment composition comprising:

1) the soil hydrophilization polymer as described herein;

2) water; and

3) optionally, a surfactant, a pesticide, a fungicide, a regulator or a fertilizer.

In another embodiment, described herein are composite particles comprising: (i) an organic or inorganic particle; and (ii) any one or more polymers as described herein in contact with said particle. In one embodiment, the organic or inorganic particle is a soil particle.

**Experiments**

USGA sand (creepy CV30) used in golf green (French supplier (SIFRACO)) was utilized. The USGA sand has following characteristics: 99% pure $Si0_2$, particles sizes: 75 % between 250 $\mu$m and 1 mm, with a measured d50 of 342 $\mu$m.

Polymeric treatment

A 0.33 mg dry polymer/g CV30 sand ratio (1.6 mg polymer/g sand) was utilized. A 0,5g dry polymer/l is prepared and contacted it in a plastic bottle with the ratio: 1litre solution/1,5 kg sand. The bottle is shacked for 24 hours at room temperature. The sand is removed under vacuum filtration on a frit glass funnel.

Preparation of the contaminant solution

Pine needles are dried at ~ 35 °C and grounded with a hammer mill equipped of a large grid (2mm). Extraction of the organic matters (contaminants) is carried out by mixing in a plastic bottle the grounded pine with water in the following proportions: 10 g grounded pine needles/100 ml water. The bottle is shacked for 24 hours at room temperature. In order to remove the grounded needles the solution is passed through two sieves 125 and 40 $\mu$m. Then the solution is centrifuged at 4000 rpm for one hour. The supernatant is filtered with a paper filter and to achieve the process ultra-filtered with a 0.8 $\mu$m membrane. The obtained solution is our contaminant solution (TQ).

Sand contamination

Sand contamination was done by mixing a constant ratio of 150 g sand/100 ml contaminant solution. The contamination is carried out in a plastic bottle shacked for 4 days at room temperature. The contaminant solution is then removed under vacuum filtration on a frit glass funnel and the sand dried at 35°C for at least 24 hours.

Rinse

We have performed some water rinses, details will be find in the text.

Column test, Washburn equation

Polymers performances are quantified using a home-made infiltration set up, made of large columns allowing kinetic measurements of water infiltration by capillary rise. This technique is inspired from the Washburn method (capillary rise experiments). We have used a 30cm high glass column, with an inside diameter of 2 cm and a frit glass lower, in which we pour from a constant height and through a fine funnel 139 g of dry sand. The column is then hanged in a balance and its lower put into contact with deionised water. We record the water capillary rise, in weight, versus time.

Washburn equation:

$$\frac{dh}{dt} = \underbrace{\frac{R_d^{\,2} \cdot \rho g}{8\eta}}_{K} \times \frac{1}{h} \cdot \left( \underbrace{\frac{2\sigma_{lv} \cdot \cos\theta}{R_{st}\rho g}}_{\beta} - h \right)$$

with dh/dt = wetting front velocity (m.s-1), h = height of the wetting front (m), g = 9,81 m/s$^2$, m=weight (kg), p= volumic weight of the liquid (g/cm3), $\sigma_{LV}$= surface energy at the liq./vap. Interface (mN/m), $\theta$=contact angle in degree, $\eta$=dynamic viscosity of the fluid (kg.m$^{-2}$.s$^{-1}$), t=time (s) et c= characteristic constant, $R_d$ = pores hydrodynamic radius (m), $R_{st}$ = pores statistical radius for an ideal pack of parallel capillaries (m).

- When the hydrostatic pressure is negligible toward the capillary pressure, h/$\beta$<<1 (very first part of the curve) we find a linear behaviour:

$$m^2 = c \cdot \frac{\rho^2 \cdot \sigma_{lv} \cdot \cos\theta}{\eta} \times t = A \cdot t$$

- When the hydrostatic pressure is comparable to the capillary pressure h = $\beta$ (end of the curve) there is an equilibrium, a maximum water height and absorbed amount is then obtained.

$$h_{max} = \frac{2\sigma_{lv} \cdot \cos\theta}{R_{st}\rho g}$$

$h_{max}$ = maximum height of the wetting front

In a sand treated with the hydrophilization polymer as described herein, it was generally observed that:

- Quality was observed to be consistently better. (On the contrary, turf does not establish and survive in untreated sand.)
- Chlorophyll ratings were consistently higher.
- Soil volumetric water was generally higher.
- Seed establishment

Example 1:

Polymer adsorbed onto bare sand (no contaminant) - Hydrophilization effect / water retention. Bare sand is known to be naturally hydrophilic. The following examples illustrate that it is possible to enhance sand's hydrophilicity through polymer adsorption. Figure 1 reports the amount of water absorbed in the sand column squared as a function of time.

Referring to Figure 1, speed of water absorption as well as overall absorbed amount are higher when the sand is pre-treated by DV9599 and DV9551. According to the Washburn equation, all parameters being constant (negligible variation of $\sigma_{LV}$, $R_{st,}$, $_{\eta}$), this proves that sand hydrophilicity was increase through polymer adsorption. As used herein, DV9599 refers to a hydrophilization polymer comprising betaine units, while DV9551 refers to a hydrophilization polymer comprising ampholytic polymers (which comprise: (i) monomer $A_b$ comprising at least one cationic group; and (i) monomer $B_a$ comprising at least one non-ionic group or at least one anionic group.)

Example 2

Referring to Figure 2, capillary rise experiments were performed on various samples. The Blank shows water absorption as a function of time onto non-contaminated sand (bare sand). The two other curves show (i) water retention of contaminated sand in contact with a hydrophilization polymer as described herein and (ii) water retention of contaminated sand in contact without a hydrophilization polymer as described herein.

The first sample, (Contaminated sand with DV9599 + rinse), was pre-treated with DV9599, with a dry polymer/CV30 sand ratio of 0,33 mg/g (1.6 mg DV9599/g sand), filtered, contaminated by a contaminant solution (TQ), filtered and dried at 35°C for 24hours. Then the sample was water rinsed (667 ml water/100 g sand) and dried 24 hours at 35°C before filling the column and proceeding to capillary rise experiment.

The other sand sample, (Contaminated sand without polymer + rinse), was contaminated by a contaminant solution (TQ), filtered and dried at 35°C for 24hours. Then the sample was water rinsed (667 ml water/100 g sand) and dried 24 hours at 35°C before filling the column and proceeding to capillary rise experiment.

Referring back to Figure 2, Figure 2 illustrates contamination and water rinse of a drastic sub-critical hydrophobization of sand with lower kinetic absorption combine with much less absorbed water through capillary rise. When the sand was pre-treated by HC500 before contamination and rinse we have a better result. Presence of the polymer helps to prevent deposition and/or helps the departure of some contaminant (lower adhesion) through water rinse (rain or watering of the material in real case): soil (contaminant) release effect.

It should be noted that the preceding example was conducted in the presence of high contaminant concentration. However, in a real world environment, a slow and gradual contamination is expected, with a more spectacular soil release effect.

Examples 3 and 4

Referring to Figure 3, the protocol is the same as in Example 2. Referring to Figure 3, the contaminant solution was diluted in water by a factor 2 (TQ/2). It was observed that the presence of the polymer as described herein prevents deposition and/or helps the departure of some contaminant (lower adhesion) through water rinse.

Referring to Figure 4, the protocol is the same as in Example 2. In this example the contaminant solution was diluted in water by a factor 4 (TQ/4). It was observed that the presence of the polymer as described herein prevents deposition and/or helps the departure of some contaminant (lower adhesion) through water rinse.

Example 5

Referring to Figure 5, Experiments were conducted using Perennial Ryegrass. 2.5" pots were watered every day, approximately 4 times a day, up to a week. The amount of water for the week totaled approximately 1" (of water). Targeted soil was seeded at a rate of 10 lbs / 1000 sq. ft. 3 reps/treatment, in a randomized complete block design

Referring to Figure 5, the substrate treatments were as follows:

a) 100% Sand only, as a control ("Sand")

b) 100% ACA 3114 Sand mix ("3114")

c) Sand, ½" ACA 3114 Sand mix, Sand - Mid 3114 (middle of pot) ("Mid")

d) Sand, ½" ACA 3114 Top mix = Top 3114 (topdress mimic) ("Top")

e) 90% Sand/10% Peat, only, as a control ("Peat")

f) 90% Sand/10% 3114 (90:10 blend of untreated and treated sand) ("3114 Mix")

Relative to the Sand control and Peat control, the 3114 Mix and Top showed improved establishment

Experiment 7

It was observed that rooting is enhanced regardless of rootzone mix composition. Referring to Figure 7, root length is greater (approximately greater than 2x) of the treated soil versus the control. Referring to Figure 8, root surface area is greater (approximately up to 2x greater) of the treated soil versus the control. Referring to Figure 9, root volume is greater (approximately 1.5 to 2x greater) of the treated soil versus the control. Referring to Figure 10, root length density is greater (approximately 2x greater) of the treated soil versus the control.

Example 8

Water holding capacity: Soils utilized in this experiment were greens grade sand, synthetically prepared water repellent greens grade sand (of the same lot as above), and a naturally occurring sub-critically water repellent loam soil.

For treatment at 150 ppm w/w DV 9599/soil, 0.69075 g DV 9599 (20% a.i.) was added to a 250 mL beaker and filled to 150 g with deionized water and allowed to mix on a stir plate. After mixing, the entire 150 mL solution was sprayed onto 921 g of the test soil using a hand sprayer while hand-mixing continuously. This process was repeated for each of the varying treatment rates by adjusting the amount of DV 9599 to produce treatments of 300 and 600 ppm w/w DV 9599/soil. An untreated control was also conducted for each soil by spraying 150 mL deionized water onto each soil and mixing.

The soil columns were assembled by clamping a piece of filter paper and screen to the bottom of the column. The columns were filled with either 150 g of treated loam, or 200 g of treated repellent and greens grade sand. Once the columns were filled, they were moved to the greenhouse to more closely mimic environmental conditions. The soil columns were watered to field capacity by placing the columns into a tray and filling the tray with water to the height of the soil in the columns. Water was poured through the top of the columns as well to ensure saturation. After the columns were saturated, they were taken from the tray and allowed to drain for 24 hours.

Beginning after 24 hours, the columns were weighed then daily to monitor water holding over time. The columns were allowed to dry and the cycle repeated two times. Each treatment was replicated three times.

Referring to Figures 10, 11 and 12, Water Holding Capacity in wettable sand (contact angle = 0°) treated at 150, 300 and 600 ppm, water holding capacity was increased in all three cycles, with maximum increases in gravimetric water of 12.6%, 11.1% and 34.6%, respectively.

In repellent sand (contact angle = 120°), all treatments increased water holding capacity when compared to a control throughout the cycles. Treatment at 150 ppm resulted in a maximum increase in gravimetric water content of 5428%, and treatments at 300 ppm and 600 ppm increased gravimetric water by 5370% and 5220%, respectively.

In loam (contact angle = 70°), treatment with DV 9599 had less effect. The greatest increase in gravimetric water content was 8.7% at 300 ppm. Treatments at 150 ppm and 600 ppm resulted in maximum gravimetric water increases of 2.8% and 4.0%.

In sand, treatment at 600 ppm resulted in an 11.3% increase in aggregate water content through both dry-down cycles. Treatments at 300 ppm and 150 ppm increased aggregate water content by 9.5% and 9.6%, respectively.

Referring to Figure 13, it was observed that the treatment rate in loam had little effect on aggregate water content. Treatments at 150 ppm and 600 ppm had no positive effect. Treatment at 300 ppm resulted in a minimal increase of 2.8%. In repellent sand, all treatments dramatically increased aggregate water content over time as the control did not hold water. The 150 ppm treatment increased aggregate water by 5168%. Treatment at 300 ppm increased aggregate water by 5137% and treatment at 600 ppm increased aggregate water by 4995%. DV 9599 increased water holding capacity in a wettable sand, though not to the degree in a water repellent system. In a loam, there was little effect.

Example 9

This example illustrates the effect of DV9995 (i) when applied as a topdress treatment on turfgrass quality and (ii) on soil volumetric water content. As used in this example, ACA 3114 refers to sand particle(s) treated with the hydrophilization polymer, DV9995. Control = untreated sand. Topdress treatments were applied to sand.

Referring to Figure 14, at 70% ET replacement, it was observed that turfgrass quality was better than in the untreated control and in the plots topdressed with untreated sand on all quality measurement dates. This ET replacement level is not uncommon on golf courses and is a low level of deficit irrigation.

Referring to Figure 15, at 50% ET replacement, it was observed that turfgrass quality was better than in the untreated control and in the plots topdressed with untreated sand on all quality measurement dates. This is considered severe deficit irrigation.

Referring to Figures 16 and 17, the graphs illustrate the relative VWC between plots topdressed with ACA 3114, plots topdressed with untreated sand, and the untreated control.

Example 10

This example illustrates how DV9551 affects water holding capacity in two soil types, as well as how DV9551 moves down a soil profile with varying amounts of irrigation. Soils utilized in this experiment were (i) greens grade sand, (ii) synthetically prepared water repellent greens grade sand of the same lot as above (sometimes herein referred to as "repellent sand"), and (iii) natural sub-critically water repellent loam soil.

For treatment at 150 ppm w/w DV9551/soil, 0.69075 g DV9551 (20% a.i.) was added to a 250 mL beaker and filled to 150 g with deionized water and allowed to mix on a stir plate. After mixing, the entire 150 mL solution was sprayed onto 921 g of the test soil using a hand sprayer while hand-mixing continuously. This process was repeated for each of the varying treatment rates by adjusting the amount of DV9551 to produce treatments of 300 and 600 ppm w/w DV9551/soil. An untreated control was also conducted for each soil by spraying 150 mL deionized water onto each soil and mixing.

The soil columns were assembled by clamping a piece of filter paper and screen to the bottom of the column. The columns were filled with either 150 g of treated loam, or 200 g of treated repellent and greens grade sand. Once the columns were filled, they were moved to the greenhouse to more closely mimic environmental conditions. The soil columns were watered to field capacity by placing the columns into a tray and filling the tray with water to the height of the soil in the columns. Water was poured through the top of the columns as well to ensure saturation. After the columns were saturated, they were taken from the tray and allowed to drain for 24 hours.

Beginning after 24 hours, the columns were weighed then daily to monitor water holding capacity over time. The columns were allowed to dry and the cycle repeated two times. Each treatment was replicated three times.

Blended repellent sand (50% wettable, 50% repellent, contact angle = 110°) and natural subcritically water repellent loam (contact angle = 70°) were each treated with 150 ppm w/w DV9551/soil by following the procedure outlined in this Example 10. A control was included for each group by treating the soils with 150 mL distilled H2O. Each treatment was replicated three times

Soil columns were assembled according the procedure as outlined above; each column filled with exactly six inches of soil. The columns were irrigated with 51.5, 38.6, 25.8, or 12.8 mL water corresponding to 1.0, 0.75, 0.5 and 0.25 inches of irrigation. The columns were allowed to sit for 24 hours post irrigation. After 24 hours, a six-inch long core was taken from each column using a one-inch diameter soil corer. The core was divided into one-inch sections and samples were taken and placed into an aluminum tray to air dry for two weeks. The contact angle for each sample was determined using the Krüss Tensiometer, and compared to the calibration curve created by measuring contact angle of each different soil treated at various rates of DV9551 to detect polymer placement in the soil profile.

Referring to Figures 18 and 19, in wettable sand (contact angle = 0°) treated at 300 and 600 ppm, water holding capacity was increased in seven out of eight cycles, with maximum increases in gravimetric water of 29.5% and 34.6%, respectively. Referring to Figure 20, treatment at 150 ppm had a lesser effect; 7.2% increase in gravimetric water when compared to an untreated control.

Referring again to Figures 18, 19 and 20, in repellent sand (contact angle = 120°), all treatments increased water holding capacity when compared to a control throughout the eight cycles. Treatment at 150 ppm resulted in a maximum increase in gravimetric water content of 130%, and treatments at 300 ppm and 600 ppm increased gravimetric water by 153% and 123%, respectively.

Referring again to Figures 18, 19 and 20, in loam (contact angle = 70°), treatment with DV9551 had lesser effect. The greatest increase in gravimetric water content was 44.4% at 150 ppm. Treatments at 300 ppm and 600 ppm resulted in gravimetric water increases of 20.3% and 17.3%.

Referring to Figure 21, in sand, treatment at 600 ppm resulted in an 18% increase in aggregate water content through all eight dry-down cycles. Treatments at 300 ppm and 150 ppm increased aggregate water content by 15.2% and 4.1%, respectively.

Referring again to Figure 21, the treatment rate in loam had a lesser effect on aggregate water content. Treatments at 150 ppm and 600 ppm similarly increased aggregate water content by 7.5% and 6.5%. Treatment at 300 ppm resulted minimal increase.

Referring yet again to Figure 21, in repellent sand, all treatments dramatically increased aggregate water. 150 ppm treatment increased aggregate water by 69%. Treatment at 300 ppm increased aggregate water by 73% and treatment at 600 ppm increased aggregate water by 55%.

Figure 21 illustrates that DV9551 effectively increased water holding capacity in both sands, more so in repellent sand, while having less effect on loam. The differences in water holding capacity between repellent sand and wettable sand are greater than those between wettable sand and loam. Also, DV9551 appears to persist in the soil. Throughout the eight dry-down cycles, DV9551 increased water content at all three rates in repellent and wettable sands. In loam, water content was mostly increased at 150 ppm and 600 ppm.

Referring to Table I, in both blended repellent sand and loam, DV9551 can be placed down the soil profile quite readily. In loam, for example, DV9551 will move down six inches in the soil profile with one inch of irrigation. With 0.75 inches of irrigation, DV9551 moves down five inches with more remaining in the four inches above it. This trend continues down through 0.25 inches of irrigation.

Table I. Effect of watering volume on amount of DV9551 remaining in a loam soil profile. (n/d indicates the polymer was not detectable)

| **Quantity of DV 9551 remaining in each inch of soil after various irrigations (ppm)** | | | | |
|---|---|---|---|---|
| **Depth in soil profile (inch)** | **0.25" irrigation** | **0.50" irrigation** | **0.75" irrigation** | **1.0" irrigation** |
| 1 | 15 | 25 | 25 | 15 |
| 2 | 50 | 50 | 50 | 45 |

(continued)

| Quantity of DV 9551 remaining in each inch of soil after various irrigations (ppm) | | | | |
|---|---|---|---|---|
| Depth in soil profile (inch) | 0.25" irrigation | 0.50" irrigation | 0.75" irrigation | 1.0" irrigation |
| 3 | 15 | 45 | 45 | 50 |
| 4 | 15 | 45 | 50 | 50 |
| 5 | 15 | 0 | 45 | 50 |
| 6 | 10 | n/d | 15 | 50 |

Referring to Table II, in blended repellent sand, there is more variability. However, with any amount of irrigation, DV9551 can be moved six inches down the profile, with 0.75" providing the most even distribution of the polymer.

Table II. Effect of watering volume on amount of DV9551 remaining in a blended repellent sand profile. (n/d indicates the polymer was not detectable)

| Quantity of DV 9551 remaining in each inch of soil after various irrigations (ppm] | | | | |
|---|---|---|---|---|
| Depth in soil profile (inch) | 0.25" irrigation | 0.50" irrigation | 0.75" irrigation | 1.0" irrigation |
| 1 | n/d | 50 | 25 | 35 |
| 2 | n/d | 75 | 75 | 50 |
| 3 | 47 | 35 | 75 | 75 |
| 4 | 25 | 25 | 80 | 80 |
| 5 | 45 | 75 | 75 | 45 |
| 6 | 25 | 80 | 47 | 47 |

## Claims

**1.** A soil additive composition comprising:

a polymer comprising:

(i) monomer $A_b$ comprising at least one betaine group or at least one cationic group; and
(ii) monomer $B_a$ comprising at least one non-ionic group or at least one anionic group,

wherein the polymer is water-soluble or water-dispersible; and provided that if the monomer $A_b$ comprises a cationic group, the monomer $B_a$ comprises an anionic group; and
a seed at least partially coated by the polymer.

**2.** The soil additive composition of claim 1 wherein the betaine group is chosen from

a) -alkylsulphonates or -phosphonates of dialkylammonioalkyl acrylates or methacrylates, -acrylamides or -methacrylamides;
b) - heterocyclic betaine monomers;
c) - alkylsulphonates or -phosphonates of dialkylammonioalkylallylics;
d) - alkylsulphonates or -phosphonates of dialkylammonioalkylstyrenes;
e) -

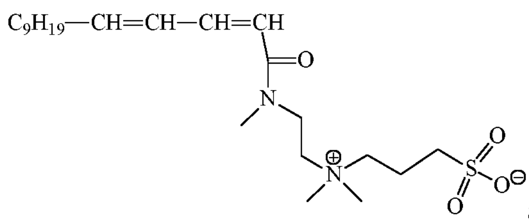 and 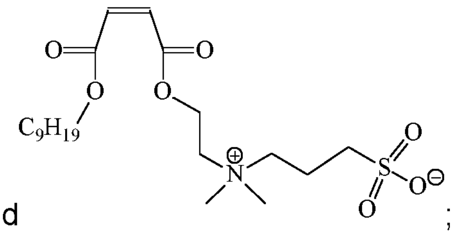 ;

or
f) - phosphobetaines.

3. The soil additive composition of claim 1 wherein the betaine group is a group corresponding to formula (I):

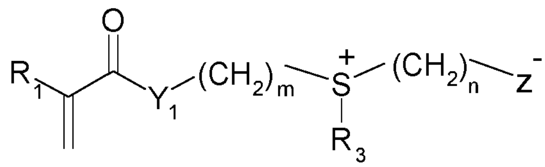

(I)

or corresponding to formula (II):

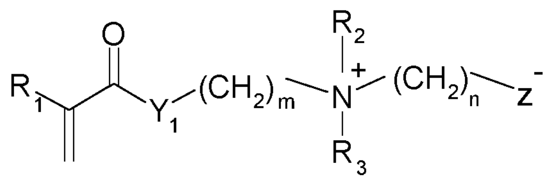

(II)

wherein:

$R_1$ is hydrogen or methyl,
$R_2$ and $R_3$ are each independently chosen from hydrogen or alkyl groups having from 1 to 6 carbon atoms,
$Y_1$ is a divalent group of formula -O- or $NR_2$,
Z- is $SO_3$-,
m is 2 or 3, and
n is 1-6.

4. The soil additive composition of claim 1 wherein the monomer $A_b$ comprising the betaine group selected from:

sulphopropyldimethylammonioethyl methacrylate (SPE),
sulphoethyldimethylammonioethyl methacrylate,
sulphobutyldimethylammonioethyl methacrylate,
sulphohydroxypropyldimethylammonioethyl methacrylate (SHPE),
sulphopropyldimethylammoniopropylacrylamide,
sulphopropyldimethylammoniopropylmethacrylamide (SPP),
sulphohydroxypropyldimethylammoniopropylmethacrylamide (SHPP),
sulphopropyldiethylammonioethyl methacrylate,
2-vinyl-1-(3-sulphopropyl)pyridinium betaine,
4-vinyl-1-(3-sulphopropyl)pyridinium betaine,
sulphopropyldimethylammonioethyl methacrylate,
1-vinyl-3-(3-sulphopropyl)imidazolium betaine, or
sulphopropylmethyldiallylammonium betaine.

5. The soil additive composition of claim 1 comprising:

monomer $A_b$ comprising at least one betaine group; and
monomer $B_a$ comprising hydroxyethyl acrylate, hydroxyethyl methacrylate, hydroxypropyl acrylate, hydroxypropyl methacrylate, glycerol monomethacrylate, acrylamide (AM), methacrylamide, N-methylolacrylamide, dimethylacrylamide, dimethylmethacrylamide, poly(ethylene and/or propylene oxide), $\alpha$-methacrylates, vinyl alcohol or vinylpyrrolidone.

**6.** The soil additive composition of claim 1 wherein the polymer is a homopolymer, which comprises the monomer $A_b$ comprising the betaine group, selected from the following:

sulphopropyldimethylammonioethyl methacrylate (SPE),
sulphoethyldimethylammonioethyl methacrylate,
sulphobutyldimethylammonioethyl methacrylate,
sulphohydroxypropyldimethylammonioethyl methacrylate (SHPE),
sulphopropyldimethylammoniopropylacrylamide,
sulphopropyldimethylammoniopropylmethacrylamide (SPP),
sulphohydroxypropyldimethylammoniopropylmethacrylamide (SHPP),
sulphopropyldiethylammonioethyl methacrylate,
2-vinyl-1-(3-sulphopropyl)pyridinium betaine,
4-vinyl-1-(3-sulphopropyl)pyridinium betaine,
sulphopropyldimethylammonioethyl methacrylate,
1-vinyl-3-(3-sulphopropyl)imidazolium betaine, or
sulphopropylmethyldiallylammonium betaine,

preferably wherein the monomer $A_b$ is sulphopropyldimethylammonioethyl methacrylate (SPE) or sulphopropyldimethylammoniopropylmethacrylamide (SPP).

**7.** The soil additive composition of claim 1 wherein the polymer is **characterized by** a weight-average molecular weight (Mw) ranging from 10,000 g/mol to 500,000 g/mol.

**8.** The soil additive composition of claim 1 wherein the monomer $A_b$ comprises up to 50 wt% by weight of monomer units.

**9.** The soil additive composition of claim 1 wherein the monomer $A_b$ comprising the cationic group is:

of formula A(I):

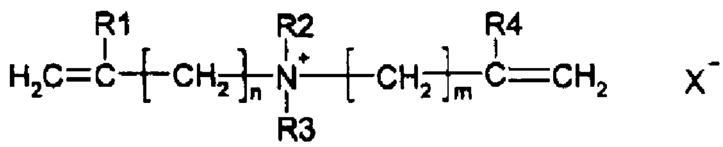

A(I)

in which:

R1 and R4 are each independently chosen from hydrogen or a linear or branched C1-C6 alkyl group;
R2 and R3 are each independently chosen from an alkyl group, a hydroxyalkyl group or an aminoalkyl group, wherein the alkyl group is a linear or branched C1-C6 chain;
n and m are integers between 1 and 3; and
$X^-$ represents a counterion which is compatible with the water-soluble or water-dispersible nature of the polymer;

or
of formula A(II):

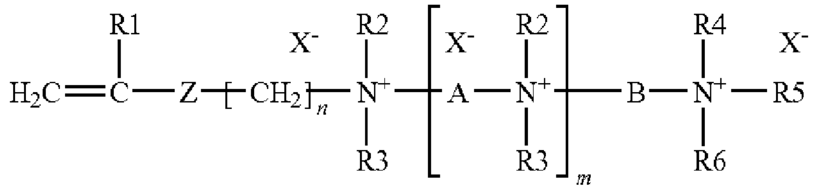

A(II)

wherein R1 is selected from hydrogen, a methyl group, or an ethyl group; wherein R2, and R3 are each independently chosen from a branched $C_1$-$C_6$ alkyl group, a linear $C_1$-$C_6$ alkyl group, a hydroxyalkyl group, or an aminoalkyl group;
R4, R5 and R6 are each independently chosen from a linear $C_1$-$C_6$ alkyl group or a branched $C_1$-$C_6$ alkyl group;
m is an integer from 0 to 10;
n is an integer from 1 to 6;
Z represents a --C(O)O-- group, a --C(O)NH-- group or an oxygen atom;
A represents a $(CH_2)_p$ group, p being an integer from 1 to 6;
B represents a linear or branched $C_2$-$C_{12}$ polymethylene chain optionally interrupted by one or more heteroatoms or heterogroups and optionally substituted by one or more hydroxyl or amino groups; and
$X^-$, which are identical or different, represent counterions; or mixtures thereof,

preferably wherein the monomer $A_b$ /monomer $B_a$ molar ratio is between 1/4 and 4/5, respectively,
or wherein the monomer $A_b$ /monomer $B_a$ molar ratio is between 1/2 and 4/6, respectively.

**10.** The soil additive composition of claim 9 wherein the monomer $B_a$ comprising the anionic group is selected from acrylic acid, methacrylic acid, α-ethacrylic acid, β,β-dimethylacrylic acid, methylenemalonic acid, vinylacetic acid, allylacetic acid, ethylideneacetic acid, propylideneacetic acid, crotonic acid, maleic acid, fumaric acid, itaconic acid, citraconic acid, mesaconic acid, N-methacryloylalanine, N-acryloylhydroxyglycine, sulfopropyl acrylate, sulfoethyl acrylate, sulfoethyl methacrylate, sulfoethyl methacrylate, styrenesulfonic acid, vinylsulfonic acid, vinylphosphonic acid, phosphoethyl acrylate, phosphonoethyl acrylate, phosphopropyl acrylate, phosphonopropyl acrylate, phosphoethyl methacrylate, phosphonoethyl methacrylate, phosphopropyl methacrylate and phosphonopropyl methacrylate, or the ammonium or alkali metal salts of these acids.

**11.** The soil additive composition of claim 9 wherein the polymer is **characterized by** a weight-average molecular weight (Mw) ranging from 100,000 g/mol to 2,500,000 g/mol, preferably ranging from 500,000 g/mol to 1,500,000 g/mol.

**12.** The soil additive composition of claim 9 wherein the polymer is a random copolymer, alternating copolymer, statistical copolymer, block copolymer, terpolymer, linear copolymer, branched copolymer or graft copolymer.

**13.** A method for treating soil comprising contacting a soil additive with soil, wherein the soil additive comprises a polymer comprising:

monomer $A_b$ comprising at least one betaine group or at least one cationic group; and
monomer $B_a$ comprising at least one non-ionic group or at least one anionic group,
wherein the polymer is water-soluble or water-dispersible; and provided that if the monomer $A_b$ comprises a cationic group, the monomer $B_a$ comprises an anionic group.

**14.** The method of claim 13 wherein the soil additive composition is contacted with soil in an effective amount to increase the hydrophilicity of the soil as compared to soil without the soil additive composition.

**15.** The method of claim 13 wherein the soil additive composition is contacted with soil in an effective amount to increase the root characteristics of a plant as compared to soil without the hydrophilization polymer, wherein the root characteristics preferably is selected from at least one of: root length, root density, root surface area, root weight, or root volume.

## Patentansprüche

**1.** Bodenadditivzusammensetzung, umfassend: ein Polymer, umfassend:

(i) ein Monomer $A_b$, das mindestens eine Betain-Gruppe oder mindestens eine kationische Gruppe umfasst; und
(ii) ein Monomer $B_a$, das mindestens eine nichtionische Gruppe oder mindestens eine anionische Gruppe umfasst,

wobei das Polymer wasserlöslich oder wasserdispergierbar ist; und mit der Maßgabe, dass, wenn das Monomer $A_b$ eine kationische Gruppe umfasst, das Monomer $B_a$ eine anionische Gruppe umfasst; und einen Samen, der zumindest teilweise mit dem Polymer beschichtet ist.

**2.** Bodenadditivzusammensetzung nach Anspruch 1, wobei die Betain-Gruppe ausgewählt ist aus

a) - Alkylsulfonaten oder -phosphonaten von Dialkylammonioalkylacrylaten oder -methacrylaten, - acrylamiden oder -methacrylamiden;
b) - heterocyclischen Betainmonomeren;
c) - Alkylsulfonaten oder -phosphonaten von Dialkylammonioalkylallylizinen;
d) - Alkylsulfonaten oder -phosphonaten von Dialkylammonioalkylstyrolen;
e) -

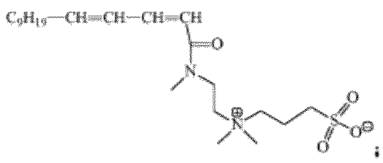
;
und
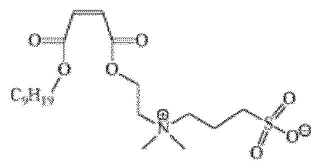

; oder
f) - Phosphobetainen.

**3.** Bodenadditivzusammensetzung nach Anspruch 1, wobei die Betain-Gruppe eine Gruppe ist, die der Formel (I) entspricht:

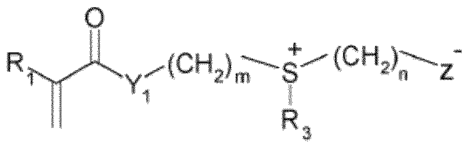
(I)

oder der Formel (II) entspricht:

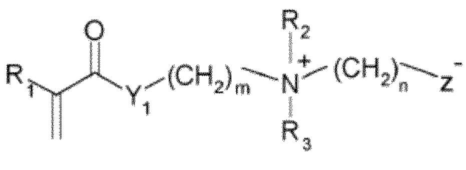
(II)

wobei:

$R_1$ Wasserstoff oder Methyl ist,
$R_2$ und $R_3$ jeweils unabhängig voneinander aus Wasserstoff oder Alkylgruppen mit 1 bis 6 Kohlenstoffatomen ausgewählt sind,
$Y_1$ eine divalente Gruppe der Formel -O- oder $NR_2$ ist,
Z- $SO_3$- ist,
m 2 oder 3, und

n 1-6 ist.

4. Bodenadditivzusammensetzung nach Anspruch 1, wobei das Monomer $A_b$, das die Betain-Gruppe umfasst, ausgewählt ist aus: Sulphopropyldimethylammonioethylmethacrylat (SPE), Sulphoethyldimethylammonioethylmethacrylat, Sulphobutyldimethylammonioethylmethacrylat, Sulphohydroxypropyldimethylammonioethylmethacrylat (SHPE), Sulphopropyldimethylammoniopropylacrylamid, Sulphopropyldimethylammoniopropylmethacrylamid (SPP), Sulphohydroxypropyldimethylammoniopropylmethacrylamid (SHPP), Sulphopropyldiethylammonioethylmethacrylat, 2-Vinyl-1-(3-sulphopropyl)pyridin-betain, 4-Vinyl-1-(3-sulphopropyl) pyridin-betain, Sulphopropyldimethylammonioethylmethacrylat, 1-Vinyl-3-(3-sulphopropyl)imidazol-betain, oder Sulphopropylmethyldiallylammoniumbetain.

5. Bodenadditivzusammensetzung nach Anspruch 1, umfassend: ein Monomer $A_b$, das mindestens eine Betain-Gruppe umfasst; und ein Monomer $B_a$, das Hydroxyethylacrylat, Hydroxyethylmethacrylat, Hydroxypropylacrylat, Hydroxypropylmethacrylat, Glycerinmonomethacrylat, Acrylamid (AM), Methacrylamid, N-Methylolacrylamid, Dimethylacrylamid, Dimethylmethacrylamid, Poly(ethylen- und/oder Propylenoxid), $\alpha$-Methacrylate, Vinylalkohol oder Vinylpyrrolidon umfasst.

6. Bodenadditivzusammensetzung nach Anspruch 1, wobei das Polymer ein Homopolymer ist, welches das Monomer $A_b$ umfasst, das die Betain-Gruppe umfasst, ausgewählt aus den olgenden: Sulphopropyldimethylammonioethylmethacrylat (SPE), Sulphoethyldimethylammonioethylmethacrylat, Sulphobutyldimethylammonioethylmethacrylat, Sulphohydroxypropyldimethylammonioethylmethacrylat (SHPE), Sulphopropyldimethylammoniopropylacrylamid, Sulphopropyldimethylammoniopropylmethacrylamid (SPP), Sulphohydroxypropyldimethylammoniopropylmethacrylamid (SHPP), Sulphopropyldiethylammonioethylmethacrylat, 2-Vinyl-1-(3-sulphopropyl)pyridin-betain, 4-Vinyl-1-(3-sulphopropyl) pyridin-betain, Sulphopropyldimethylammonioethylmethacrylat, 1-Vinyl-3-(3-sulphopropyl)imidazol-betain, oder Sulphopropylmethyldiallylammoniumbetain, bevorzugt wobei das Monomer $A_b$ Sulphopropyldimethylammoniumethylmethacrylat (SPE) oder Sulphopropyldimethylammoniumpropylmethacrylamid (SPP) ist.

7. Bodenadditivzusammensetzung nach Anspruch 1, wobei das Polymer durch ein gewichtsmittleres Molekulargewicht (Mw) im Bereich von 10.000 g/mol bis 500.000 g/mol gekennzeichnet ist.

8. Bodenadditivzusammensetzung nach Anspruch 1, wobei das Monomer $A_b$ bis zu 50 Gew.-% an Monomereinheiten umfasst.

9. Bodenadditivzusammensetzung nach Anspruch 1, wobei das Monomer $A_b$, das die kationische Gruppe umfasst, die Formel A(I) aufweist:

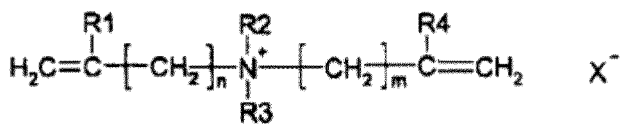

A(I)

in welcher:

$R_1$ und R4 jeweils unabhängig voneinander aus Wasserstoff oder einer linearen oder verzweigten C1-C6-Alkylgruppe ausgewählt sind;
R2 und R3 jeweils unabhängig voneinander aus einer Alkylgruppe, einer Hydroxyalkylgruppe oder einer Aminoalkylgruppe ausgewählt sind, wobei die Alkylgruppe eine lineare oder verzweigte C1-C6-Kette ist;
n und m ganze Zahlen zwischen 1 und 3 sind; und
$X^-$ ein Gegenion darstellt, das mit der wasserlöslichen oder wasserdispergierbaren Natur des Polymers kompatibel ist;

oder
die Formel A(II) aufweist:

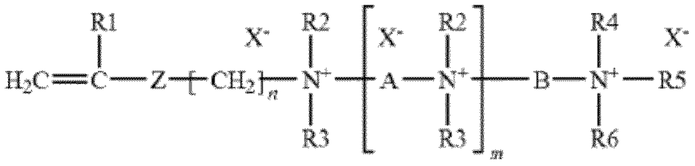

A(II)

wobei $R_1$ ausgewählt ist aus Wasserstoff, einer Methylgruppe oder einer Ethylgruppe; wobei R2 und R3 jeweils unabhängig voneinander aus einer verzweigten $C_1$-$C_6$-Alkylgruppe, einer linearen $C_1$-$C_6$-Alkylgruppe, einer Hydroxyalkylgruppe oder einer Aminoalkylgruppe ausgewählt sind;
R4, R5 und R6 jeweils unabhängig voneinander aus einer linearen $C_1$-$C_6$-Alkylgruppe oder einer verzweigten $C_1$-$C_6$-Alkylgruppe ausgewählt sind;
m eine ganze Zahl von 0 bis 10 ist;
n eine ganze Zahl von 1 bis 6 ist;
Z eine --C(O)O--Gruppe, eine --C(O)NH--Gruppe oder ein Sauerstoffatom darstellt;
A eine $(CH_2)_p$-Gruppe darstellt, wobei p eine ganze Zahl von 1 bis 6 ist;
B eine lineare oder verzweigte $C_2$-$C_{12}$-Polymethylenkette darstellt, die gegebenenfalls durch ein oder mehrere Heteroatome oder Heterogruppen unterbrochen und gegebenenfalls durch eine oder mehrere Hydroxyl- oder Aminogruppen substituiert ist; und
$X^-$, die gleich oder verschieden sind, Gegenionen oder Mischungen davon darstellen, wobei das Molverhältnis Monomer $A_b$/Monomer $B_a$ bevorzugt jeweils zwischen 1/4 und 4/5 liegt,
oder wobei das Molverhältnis Monomer $A_b$/Monomer $B_a$ zwischen 1/2 und 4/6 liegt.

**10.** Bodenadditivzusammensetzung nach Anspruch 9, wobei das Monomer $B_a$, welches die anionische Gruppe umfasst, ausgewählt ist aus Acrylsäure, Methacrylsäure, α-Ethacrylsäure, β,β-Dimethylacrylsäure, Methylenmalonsäure, Vinylessigsäure, Allylessigsäure, Ethylidenessigsäure, Propylidenessigsäure, Crotonsäure, Maleinsäure, Fumarsäure, Itaconsäure, Citraconsäure, Mesaconsäure, N-Methacryloylalanin, N-Acryloylhydroxyglycin, Sulfopropylacrylat, Sulfoethylacrylat, Sulfoethylmethacrylat, Sulfoethylmethacrylat, Styrensulfonsäure, Vinylsulfonsäure, Vinylphosphonsäure, Phosphoethylacrylat, Phosphonoethylacrylat, Phosphopropylacrylat, Phosphonopropylacrylat, Phosphoethylmethacrylat, Phosphonoethylmethacrylat, Phosphopropylmethacrylat und Phosphonopropylmethacrylat oder das Ammonium oder Alkalimetallsalze dieser Säuren.

**11.** Bodenadditivzusammensetzung nach Anspruch 9, wobei das Polymer durch ein gewichtsmittleres Molekulargewicht (Mw) im Bereich von 100.000 g/mol bis 2.500.000 g/mol, bevorzugt im Bereich von 500.000 g/mol bis 1.500.000 g/mol, gekennzeichnet ist.

**12.** Bodenadditivzusammensetzung nach Anspruch 9, wobei das Polymer ein beliebiges Copolymer, alternierendes Copolymer, statistisches Copolymer, Blockcopolymer, Terpolymer, lineares Copolymer, verzweigtes Copolymer oder Pfropfcopolymer ist.

**13.** Verfahren zum Behandeln von Boden, umfassend das Inkontaktbringen eines Bodenadditivs mit Boden, wobei das Bodenadditiv ein Polymer umfasst, das Folgendes umfasst:

ein Monomer $A_b$, das mindestens eine Betain-Gruppe oder mindestens eine kationische Gruppe umfasst; und
ein Monomer $B_a$, das mindestens eine nicht-ionische Gruppe oder mindestens eine anionische Gruppe umfasst, wobei das Polymer wasserlöslich oder wasserdispergierbar ist; und
vorausgesetzt, dass, wenn das Monomer $A_b$ eine kationische Gruppe umfasst, das Monomer $B_a$ eine anionische Gruppe umfasst.

**14.** Verfahren nach Anspruch 13, wobei die Bodenadditivzusammensetzung mit dem Boden in einer wirksamen Menge in Kontakt gebracht wird, um die Hydrophilie des Bodens im Vergleich zum Boden ohne die Bodenadditivzusammensetzung zu erhöhen.

**15.** Verfahren nach Anspruch 13, wobei die Bodenadditivzusammensetzung mit dem Boden in einer wirksamen Menge in Kontakt gebracht wird, um die Wurzeleigenschaften einer Pflanze im Vergleich zum Boden ohne das Hydrophilierungspolymer zu erhöhen, wobei die Wurzeleigenschaften bevorzugt aus mindestens einem der folgenden ausgewählt sind: Wurzellänge, Wurzeldichte, Wurzeloberfläche, Wurzelgewicht oder Wurzelvolumen.

**Revendications**

1. Composition d'additif de sol comprenant :

un polymère comprenant :

(i) le monomère $A_b$ comprenant au moins un groupe bétaïne ou au moins un groupe cationique ; et
(ii) le monomère $B_a$ comprenant au moins un groupe non ionique ou au moins un groupe anionique,

dans laquelle le polymère est soluble dans l'eau ou dispersible dans l'eau ; et à condition que si, le monomère $A_b$ comprend un groupe cationique, le monomère $B_a$ comprend un groupe anionique ; et
un germe au moins partiellement revêtu par le polymère.

2. Composition d'additif de sol selon la revendication 1, dans laquelle le groupe bétaïne est choisi parmi

a) - des alkylsulfonates ou -phosphonates d'acrylates ou méthacrylates, acrylamides ou méthacrylamides de dialkylammonioalkyle ;
b) - des monomères de bétaïne hétérocyclique ;
c) - des alkylsulfonates ou -phosphonates de dialkylammonioalkylallyliques ;
d) - des alkylsulfonates ou -phosphonates de dialkylammonioalkylstyrènes ;
e) -

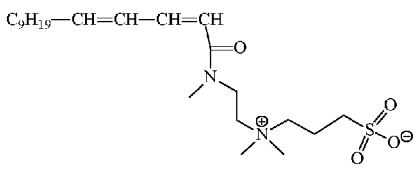 et 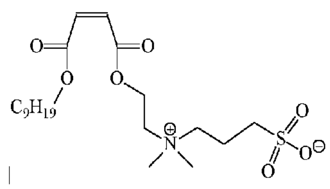 ;

ou
f) - des phosphobétaïnes.

3. Composition d'additif de sol selon la revendication 1 dans laquelle le groupe bétaïne est un groupe correspondant à la formule (I) :

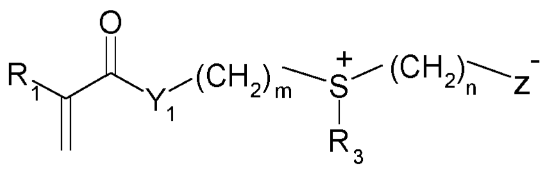

(I)

ou correspondant à la formule (II) :

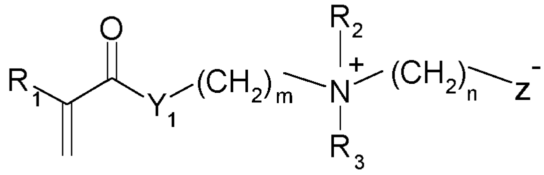

(II)

où :

$R_1$ est hydrogène ou méthyle,
$R_2$ et $R_3$ sont chacun indépendamment choisis parmi hydrogène ou des groupes alkyle ayant de 1 à 6 atomes de carbone,
$Y_1$ est un groupe divalent de formule -O- ou $NR_2$,

Z- est $SO_3^-$,
m est 2 ou 3, et
n est 1 à 6.

**4.** Composition d'additif de sol selon la revendication 1 dans laquelle le monomère $A_b$ comprenant le groupe bétaïne choisi parmi :

méthacrylate de sulfopropyldiméthylammonioéthyle (SPE),
méthacrylate de sulfoéthyldiméthylammonioéthyle,
méthacrylate de sulfobutyldiméthylammonioéthyle,
méthacrylate de sulfohydroxypropyldiméthylammonioéthyle (SHPE),
sulfopropyldiméthylammoniopropylacrylamide,
sulfopropyldiméthylammoniopropylméthacrylamide (SPP),
sulfohydroxypropyldiméthylammoniopropylméthacrylamide (SHPP),
méthacrylate de sulfopropyldiéthylammonioéthyle,
bétaïne de 2-vinyl-1-(3-sulfopropyl)pyridinium,
bétaïne de 4-vinyl-1-(3-sulfopropyl)pyridinium,
méthacrylate de sulfopropyldiméthylammonioéthyle,
bétaïne de 1-vinyl-3-(3-sulfopropyl)imidazolium ou bétaïne de sulfopropylméthyldiallylammonium.

**5.** Composition d'additif de sol selon la revendication 1 comprenant :

le monomère $A_b$ comprenant au moins un groupe bétaïne ; et
le monomère $B_a$ comprenant l'acrylate d'hydroxyéthyle, le méthacrylate d'hydroxyéthyle, l'acrylate d'hydroxypropyle, le méthacrylate d'hydroxypropyle, le monométhacrylate de glycérol, l'acrylamide (AM), le méthacrylamide, le N-méthylolacrylamide, le diméthylacrylamide, le diméthylméthacrylamide, le poly(oxyde d'éthylène et/ou propylène), des $\alpha$-méthacrylates, l'alcool vinylique ou la vinylpyrrolidone.

**6.** Composition d'additif de sol selon la revendication 1 dans laquelle le polymère est un homopolymère, qui comprend le monomère $A_b$ comprenant le groupe bétaïne, choisi parmi les suivants :

méthacrylate de sulfopropyldiméthylammonioéthyle (SPE),
méthacrylate de sulfoéthyldiméthylammonioéthyle,
méthacrylate de sulfobutyldiméthylammonioéthyle,
méthacrylate de sulfohydroxypropyldiméthylammonioéthyle (SHPE),
sulfopropyldiméthylammoniopropylacrylamide,
sulfopropyldiméthylammoniopropylméthacrylamide (SPP),
sulfohydroxypropyldiméthylammoniopropylméthacrylamide (SHPP),
méthacrylate de sulfopropyldiéthylammonioéthyle,
bétaïne de 2-vinyl-1-(3-sulfopropyl)pyridinium,
bétaïne de 4-vinyl-1-(3-sulfopropyl)pyridinium,
méthacrylate de sulfopropyldiméthylammonioéthyle,
bétaïne de 1-vinyl-3-(3-sulfopropyl)imidazolium ou
bétaïne de sulfopropylméthyldiallylammonium,
de préférence dans laquelle le monomère $A_b$ est le méthacrylate de sulfopropyldiméthylammonioéthyle (SPE) ou le sulfopropyldiméthylammoniopropylméthacrylamide (SPP).

**7.** Composition d'additif de sol selon la revendication 1 dans laquelle le polymère est **caractérisé par** un poids moléculaire moyen en poids (Mw) dans la plage de 10 000 g/mol à 500 000 g/mol.

**8.** Composition d'additif de sol selon la revendication 1 dans laquelle le monomère $A_b$ comprend jusqu'à 50 % en poids par rapport au poids de motifs monomères.

**9.** Composition d'additif de sol selon la revendication 1 dans laquelle le monomère $A_b$ comprenant le groupe cationique est :

de formule A(I) :

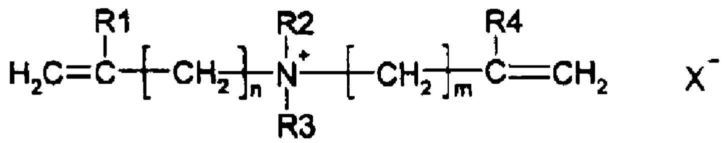

A(I)

dans laquelle :

R1 et R4 sont chacun indépendamment choisis parmi hydrogène ou un groupe alkyle en $C_1$-$C_6$ linéaire ou ramifié ;
R2 et R3 sont chacun indépendamment choisis parmi un groupe alkyle, un groupe hydroxyalkyle ou un groupe aminoalkyle, où le groupe alkyle est une chaîne en $C_1$-$C_6$ linéaire ou ramifiée ;
n et m sont des entiers compris entre 1 et 3 ; et
$X^-$ représente un contre-ion qui est compatible avec la nature soluble dans l'eau ou dispersible dans l'eau du polymère ;

ou
de formule A(II) :

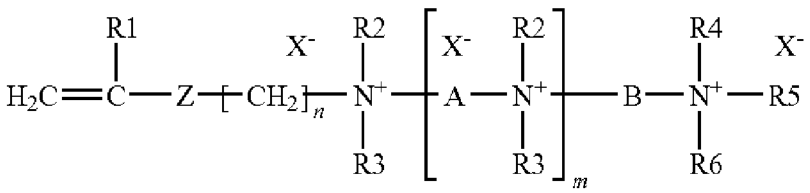

A(II)

dans laquelle R1 est choisi parmi hydrogène, un groupe méthyle ou un groupe éthyle ; dans laquelle R2 et R3 sont chacun indépendamment choisis parmi un groupe alkyle en $C_1$-$C_6$ ramifié, un groupe alkyle en $C_1$-$C_6$ linéaire, un groupe hydroxyalkyle ou un groupe aminoalkyle ;
R4, R5 et R6 sont chacun indépendamment choisis parmi un groupe alkyle en $C_1$-$C_6$ linéaire ou un groupe alkyle en $C_1$-$C_6$ ramifié ;
m est un entier de 0 à 10 ;
n est un entier de 1 à 6 ;
Z représente un groupe -C(O)O-, un groupe -C(O)NH- ou un atome d'oxygène ;
A représente un groupe $(CH_2)_P$, p étant un entier de 1 à 6 ;
B représente une chaîne polyméthylène en $C_2$-$C_{12}$ linéaire ou ramifiée facultativement interrompue par un ou plusieurs hétéroatomes ou hétérogroupes et facultativement substituée par un ou plusieurs groupes hydroxyle ou amino ; et
$X^-$, qui sont identiques ou différents, représentent des contre-ions ; ou des mélanges de ceux-ci,
de préférence dans laquelle le rapport molaire monomère $A_{b/}$monomère $B_a$ est compris entre 1/4 et 4/5, respectivement,
ou dans laquelle le rapport molaire monomère $A_b$/monomère $B_a$ est compris entre 1/2 et 4/6, respectivement.

**10.** Composition d'additif de sol selon la revendication 9 dans laquelle le monomère $B_a$ comprenant le groupe anionique est choisi parmi l'acide acrylique, l'acide méthacrylique, l'acide $\alpha$-éthacrylique, l'acide $\beta$,$\beta$-diméthylacrylique, l'acide méthylènemalonique, l'acide vinylacétique, l'acide allylacétique, l'acide éthylidèneacétique, l'acide propylidèneacétique, l'acide crotonique, l'acide maléique, l'acide fumarique, l'acide itaconique, l'acide citraconique, l'acide mésaconique, la N-méthacryloylalanine, la N-acryloylhydroxyglycine, l'acrylate de sulfopropyle, l'acrylate de sulfoéthyle, le méthacrylate de sulfoéthyle, le méthacrylate de sulfoéthyle, l'acide styrènesulfonique, l'acide vinylsulfonique, l'acide vinylphosphonique, l'acrylate de phosphoéthyle, l'acrylate de phosphonoéthyle, l'acrylate de phosphopropyle, l'acrylate de phosphonopropyle, le méthacrylate de phosphoéthyle, le méthacrylate de phosphonoéthyle, le méthacrylate de phosphopropyle et le méthacrylate de phosphonopropyle, ou les sels d'ammonium ou de métal alcalin de ces acides.

**11.** Composition d'additif de sol selon la revendication 9 dans laquelle le polymère est **caractérisé par** un poids moléculaire moyen en poids (Mw) dans la plage de 100 000 g/mol à 2 500 000 g/mol, de préférence dans la plage de

500 000 g/mol à 1 500 000 g/mol.

**12.** Composition d'additif de sol selon la revendication 9 dans laquelle le polymère est un copolymère aléatoire, un copolymère alterné, un copolymère statistique, un copolymère séquencé, un terpolymère, un copolymère linéaire, un copolymère ramifié ou un copolymère greffé.

**13.** Procédé de traitement d'un sol comprenant la mise en contact d'un additif de sol avec le sol, dans lequel l'additif de sol comprend un polymère comprenant :

un monomère $A_b$ comprenant au moins un groupe bétaïne ou au moins un groupe cationique ; et
un monomère $B_a$ comprenant au moins un groupe non ionique ou au moins un groupe anionique,
dans lequel le polymère est soluble dans l'eau ou dispersible dans l'eau ; et à condition que, si le monomère $A_b$ comprend un groupe cationique, le monomère $B_a$ comprend un groupe anionique.

**14.** Procédé selon la revendication 13, dans lequel la composition d'additif de sol est mise en contact avec le sol en une quantité efficace pour augmenter l'hydrophilie du sol par rapport au sol sans la composition d'additif de sol.

**15.** Procédé selon la revendication 13 dans lequel la composition d'additif de sol est mise en contact avec le sol en une quantité efficace pour augmenter les caractéristiques des racines d'une plante par rapport au sol sans le polymère d'hydrophilisation, dans lequel les caractéristiques des racines sont de préférence choisies parmi au moins l'un parmi : la longueur des racines, la densité des racines, l'aire de surface des racines, le poids des racine ou le volume des racines.

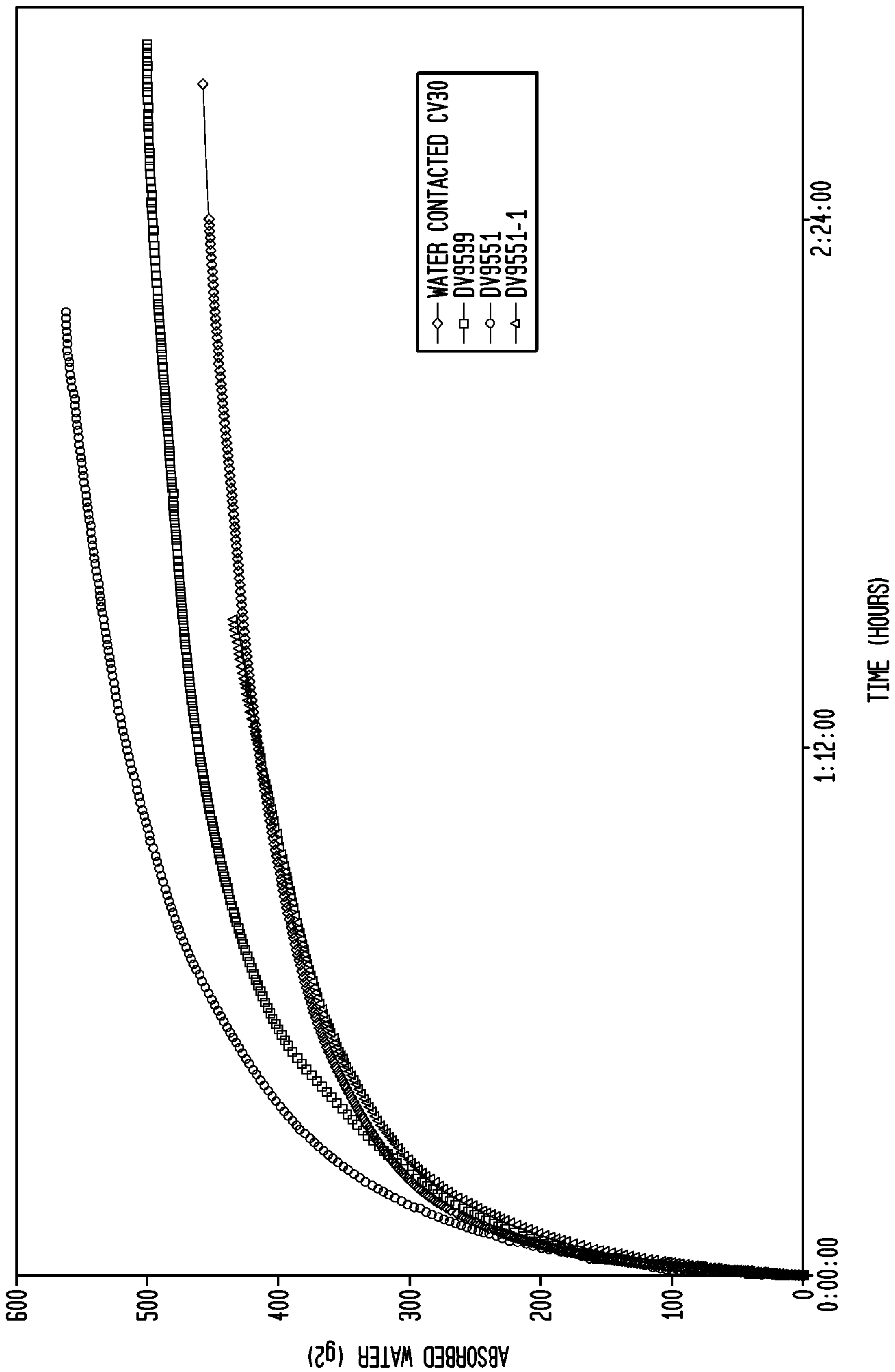


*FIG. 1*
WATER RETENTION ON CV30 SAND

FIG. 2

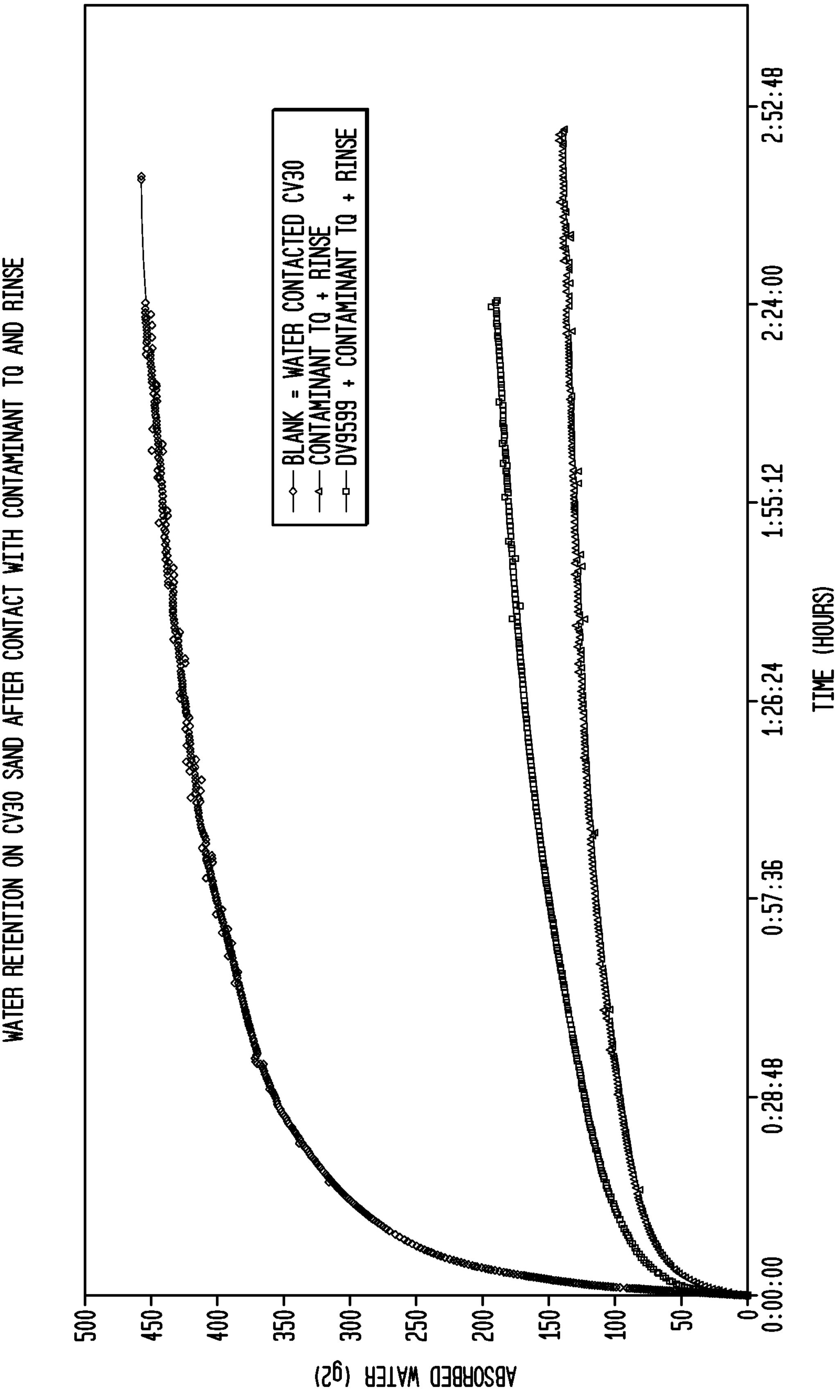
WATER RETENTION ON CV30 SAND AFTER CONTACT WITH CONTAMINANT TQ AND RINSE
BLANK = WATER CONTACTED CV30
CONTAMINANT TQ + RINSE
DV9599 + CONTAMINANT TQ + RINSE
ABSORBED WATER (g2)
TIME (HOURS)
0:00:00
0:28:48
0:57:36
1:26:24
1:55:12
2:24:00
2:52:48
0
50
100
150
200
250
300
350
400
450
500

FIG. 3

WATER RETENTION ON CV30 SAND AFTER CONTACT WITH CONTAMINANT TQ/2

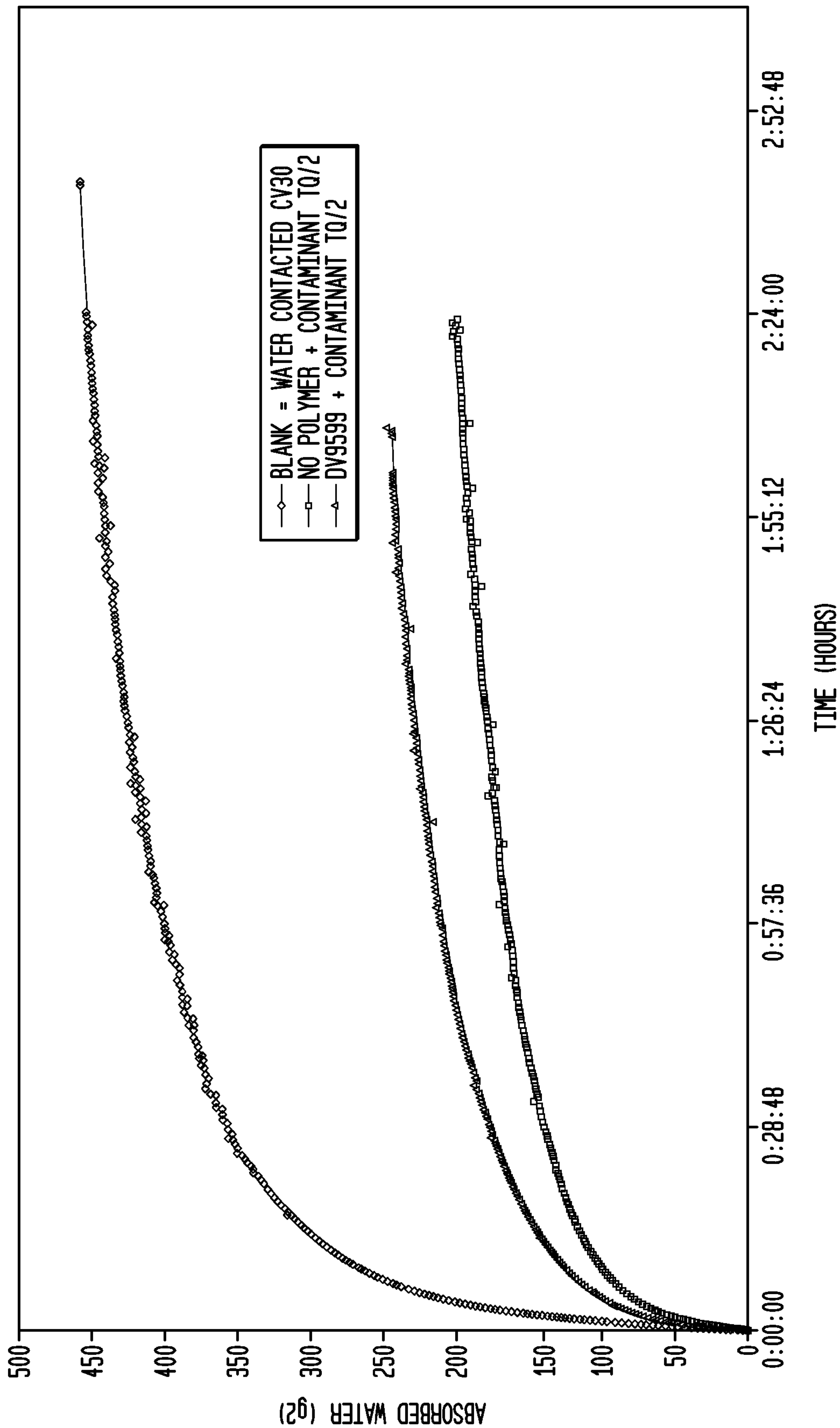

FIG. 4

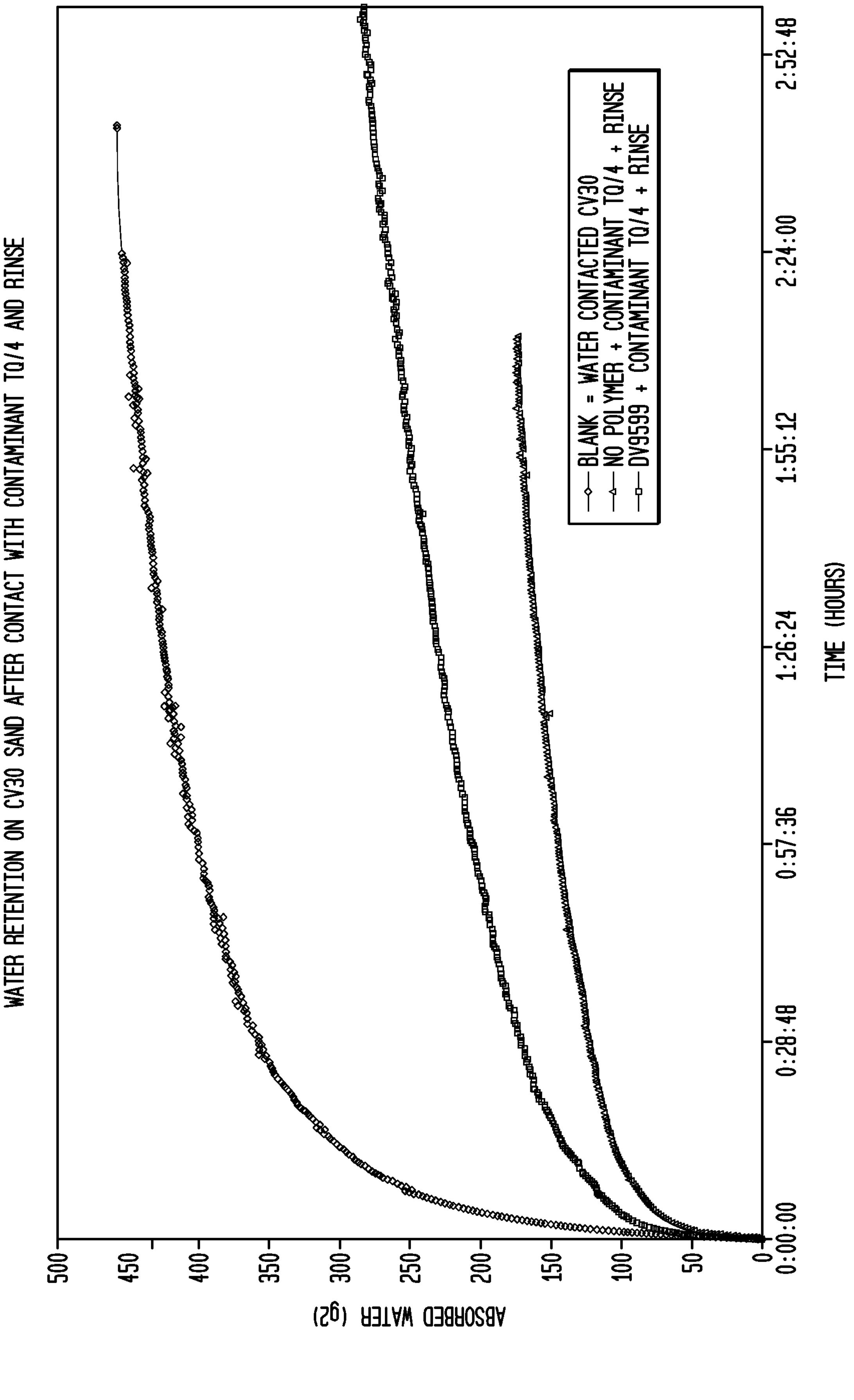
WATER RETENTION ON CV30 SAND AFTER CONTACT WITH CONTAMINANT TQ/4 AND RINSE
ABSORBED WATER (gs)
500
450
400
350
300
250
200
150
100
50
0
0:00:00
0:28:48
0:57:36
1:26:24
1:55:12
2:24:00
2:52:48
TIME (HOURS)
BLANK = WATER CONTACTED CV30
NO POLYMER + CONTAMINANT TQ/4 + RINSE
DV9599 + CONTAMINANT TQ/4 + RINSE

FIG. 5

EMERGENCE-APRIL 24, 2013

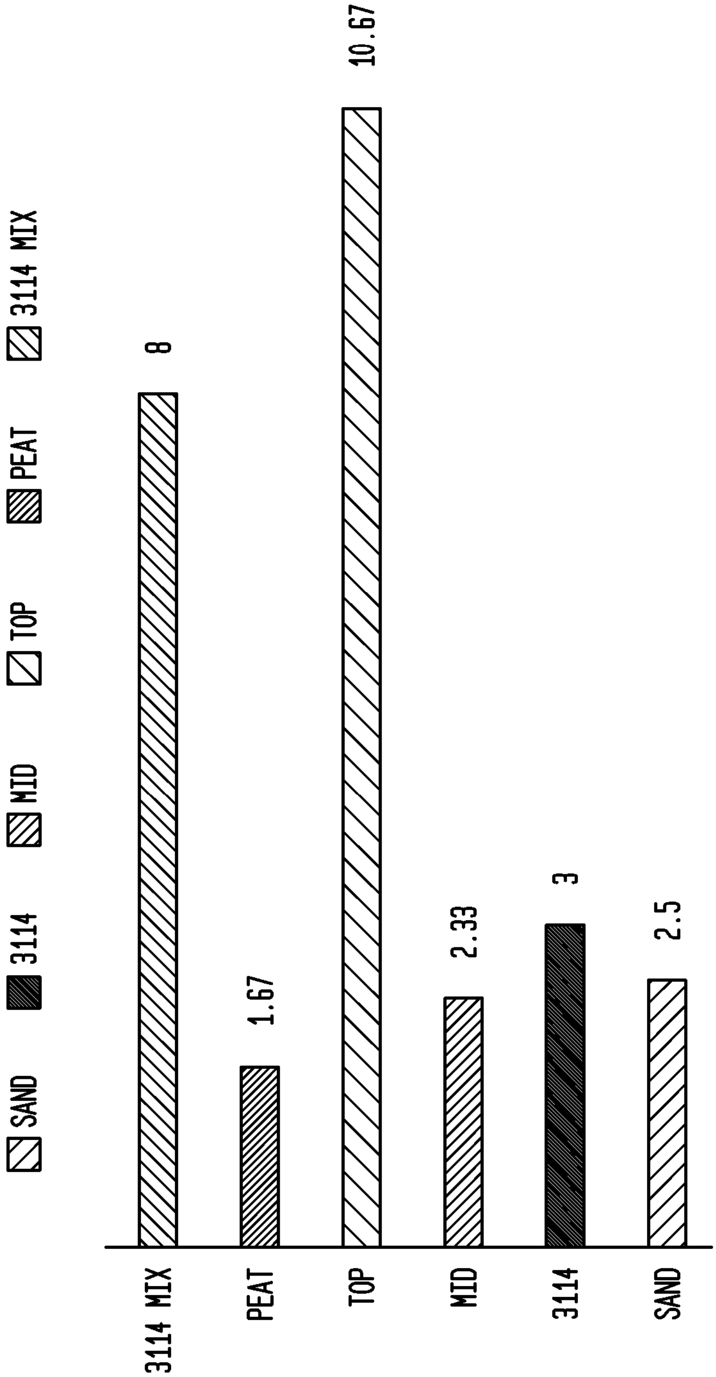

FIG. 6

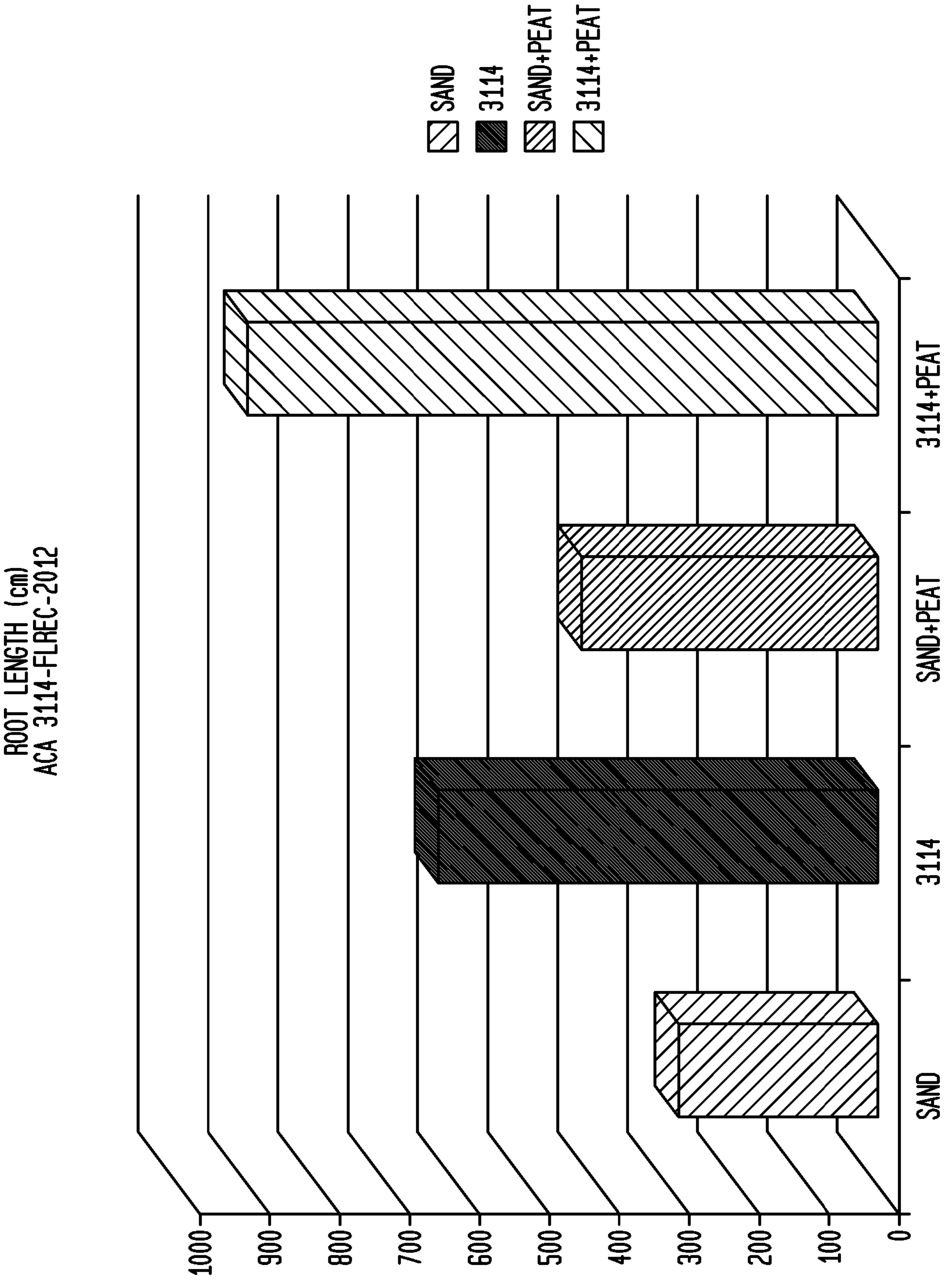
ROOT LENGTH (cm)
ACA 3114-FLREC-2012
SAND
3114
SAND+PEAT
3114+PEAT
0
100
200
300
400
500
600
700
800
900
1000

FIG. 7

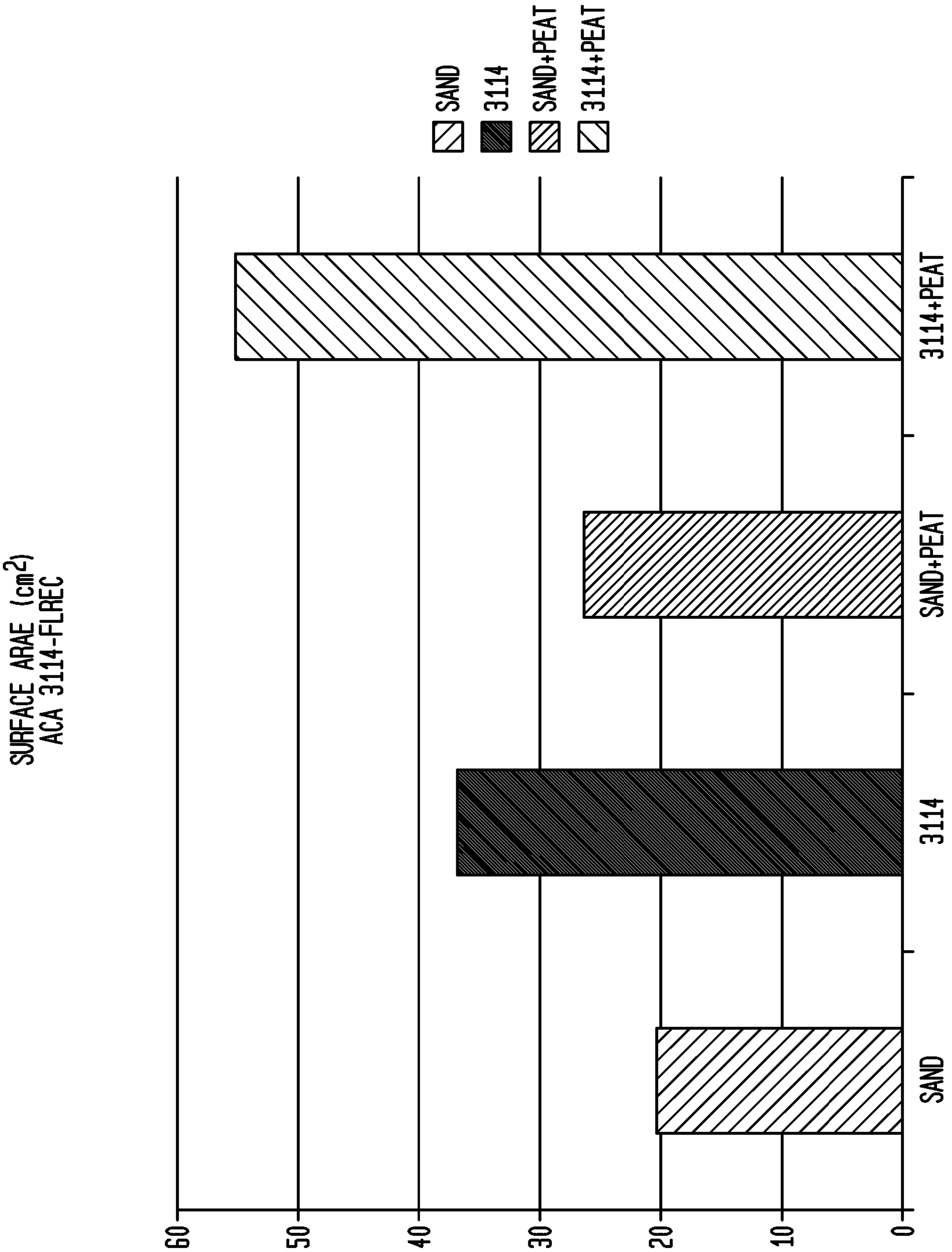
SURFACE ARAE (cm2)
ACA 3114-FLREC
SAND
3114
SAND+PEAT
3114+PEAT
60
50
40
30
20
10
0
SAND
3114
SAND+PEAT
3114+PEAT

FIG. 8

ROOT VOLUME ($cm^3$)

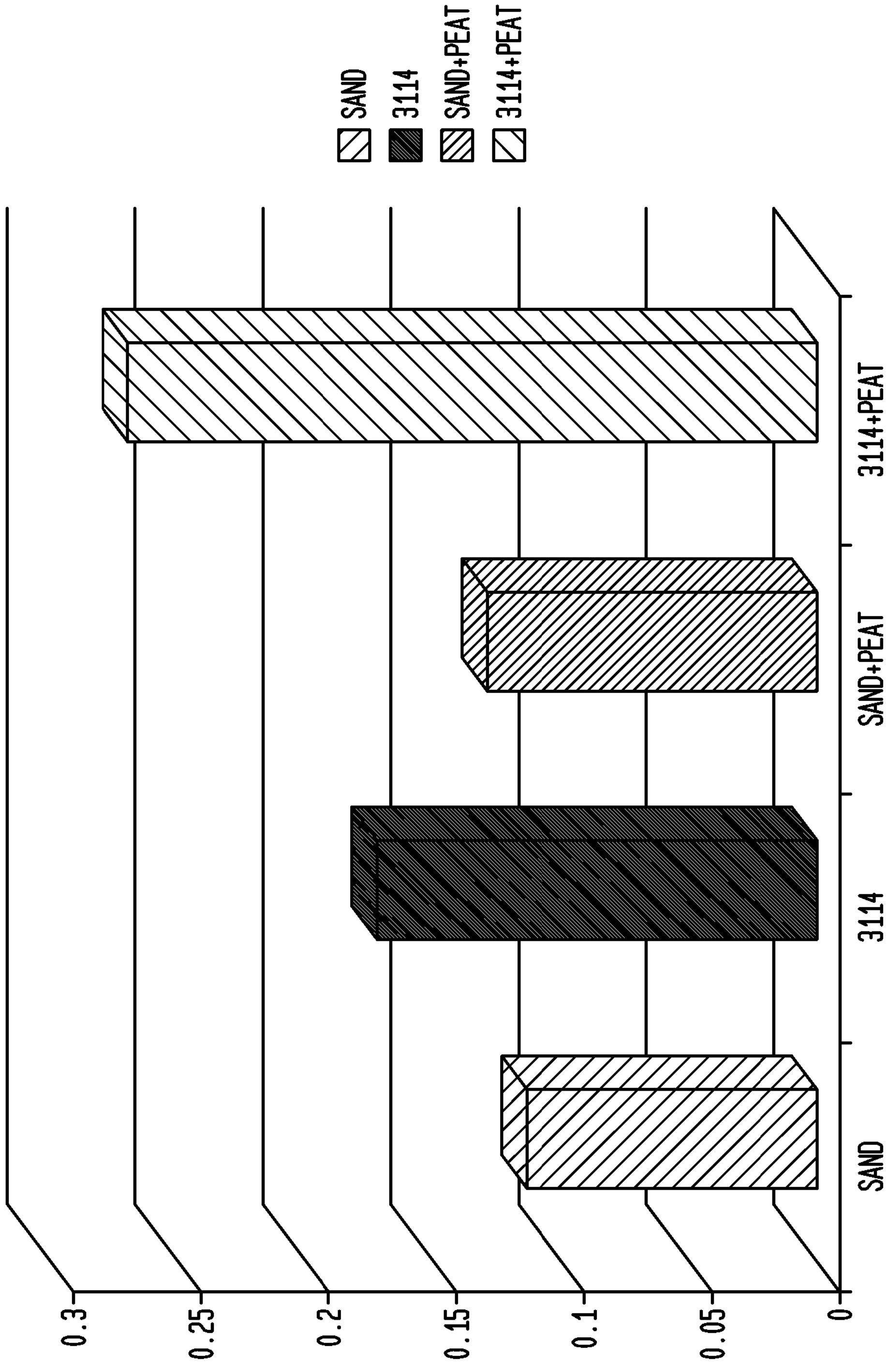

FIG. 9

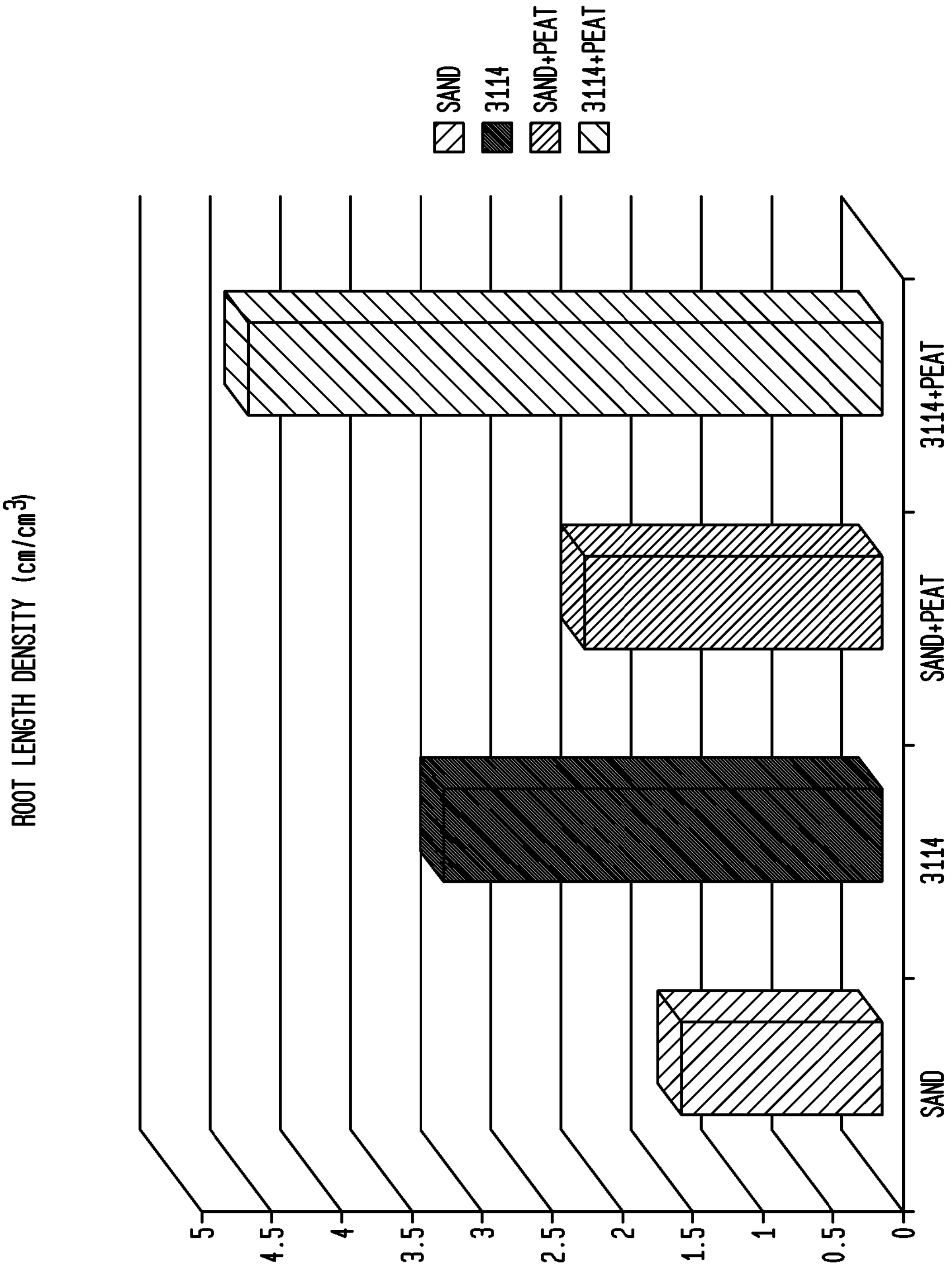
ROOT LENGTH DENSITY (cm/cm3)
SAND
3114
SAND+PEAT
3114+PEAT
0
0.5
1
1.5
2
2.5
3
3.5
4
4.5
5
SAND
3114
SAND+PEAT
3114+PEAT

FIG. 10

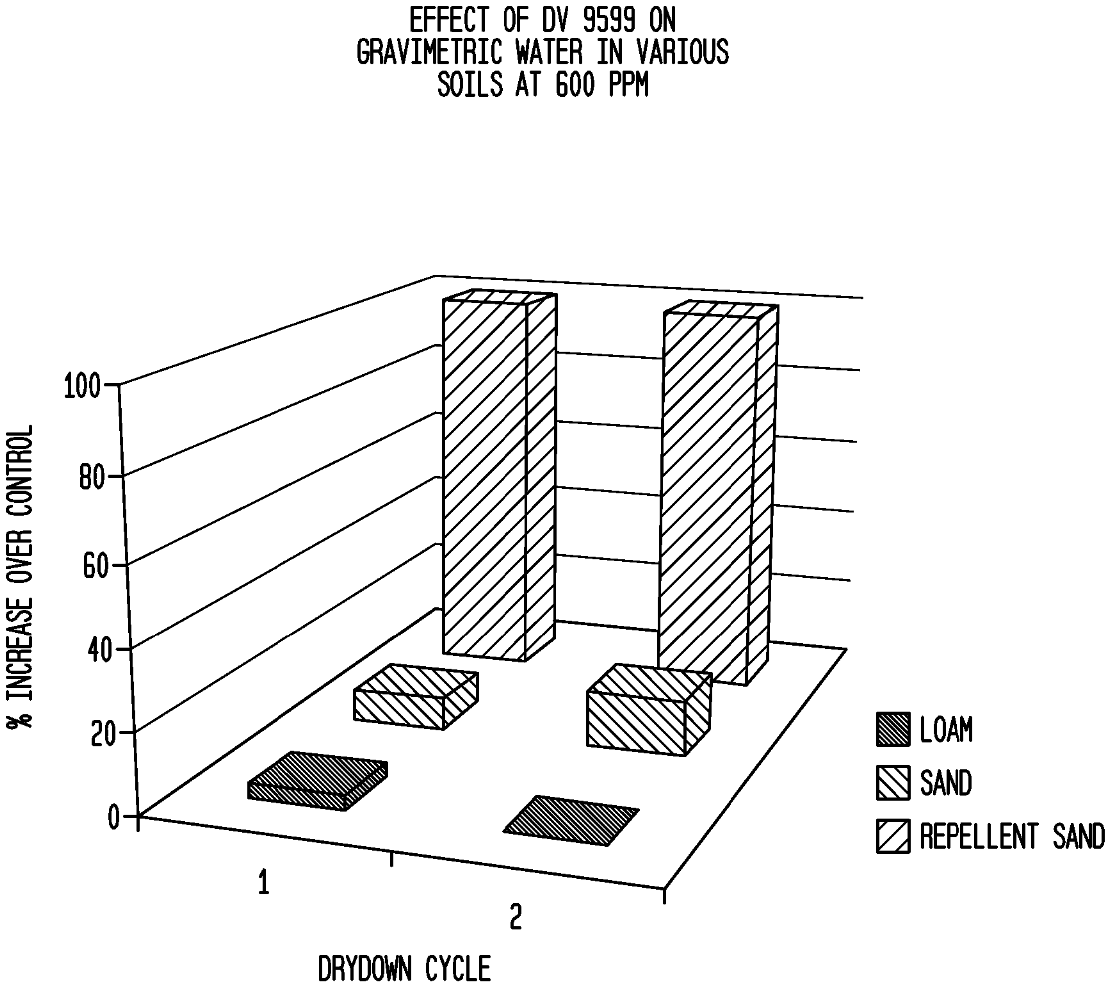
EFFECT OF DV 9599 ON
GRAVIMETRIC WATER IN VARIOUS
SOILS AT 600 PPM
% INCREASE OVER CONTROL
100
80
60
40
20
0
1
2
DRYDOWN CYCLE
LOAM
SAND
REPELLENT SAND

*FIG. 11*

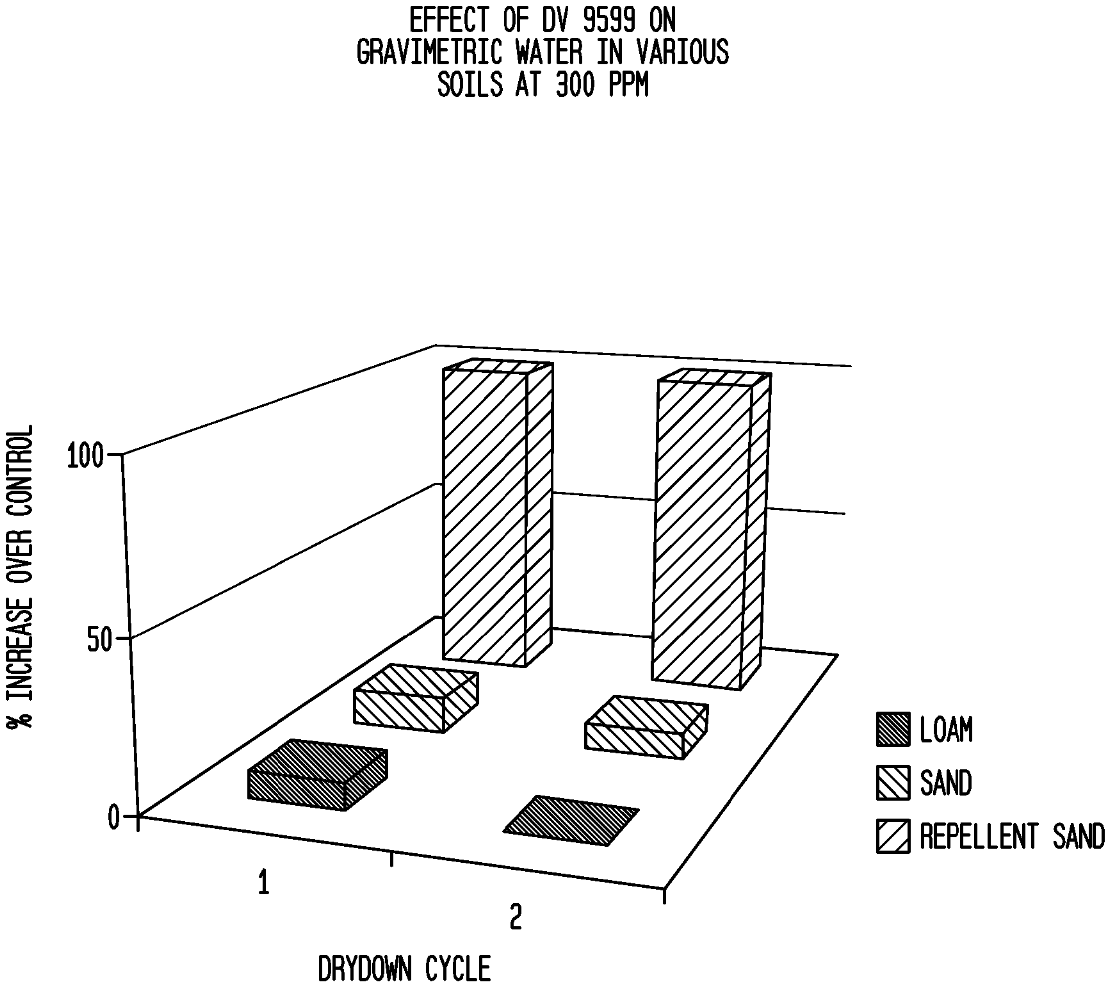
EFFECT OF DV 9599 ON
GRAVIMETRIC WATER IN VARIOUS
SOILS AT 300 PPM
% INCREASE OVER CONTROL
100
50
0
1
2
DRYDOWN CYCLE
LOAM
SAND
REPELLENT SAND

FIG. 12

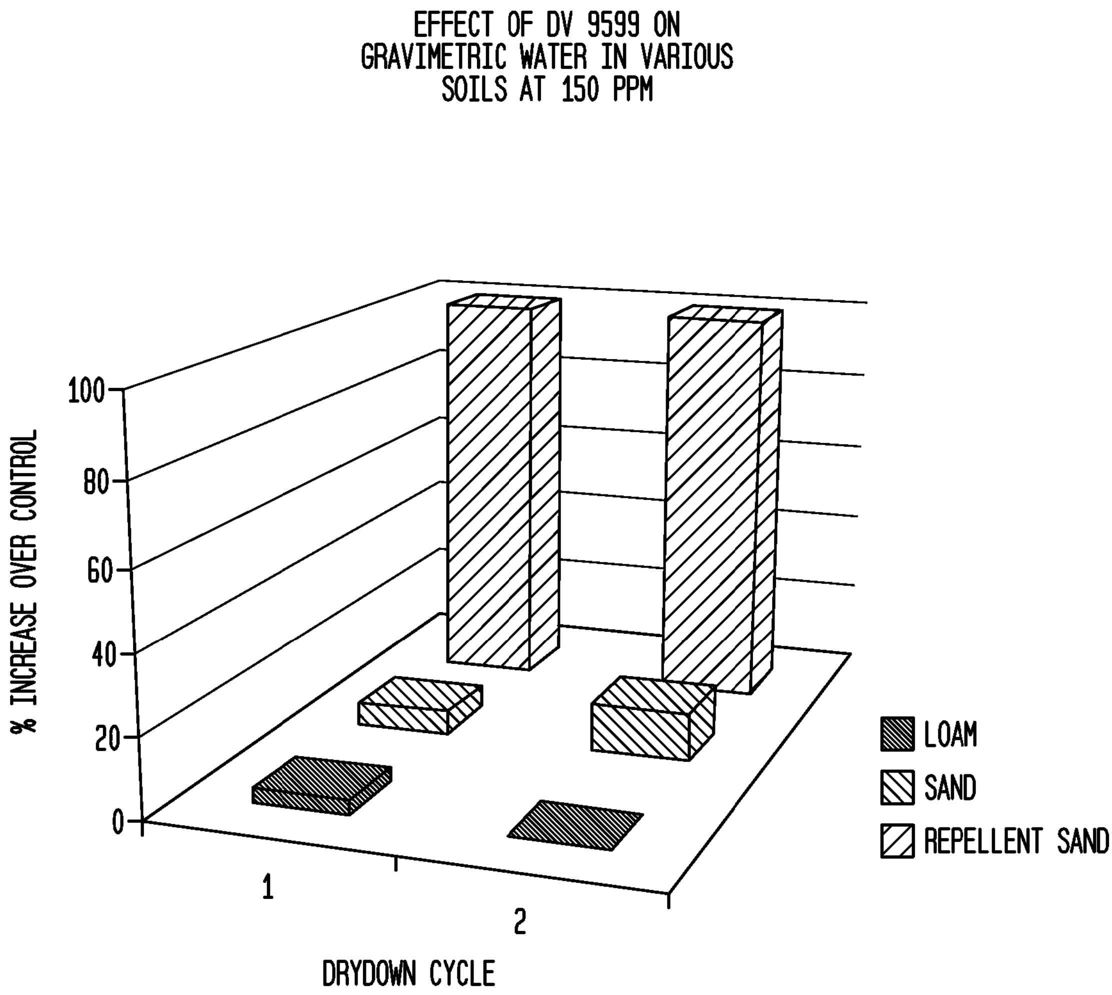
EFFECT OF DV 9599 ON
GRAVIMETRIC WATER IN VARIOUS
SOILS AT 150 PPM
% INCREASE OVER CONTROL
100
80
60
40
20
0
1
2
DRYDOWN CYCLE
LOAM
SAND
REPELLENT SAND

FIG. 13

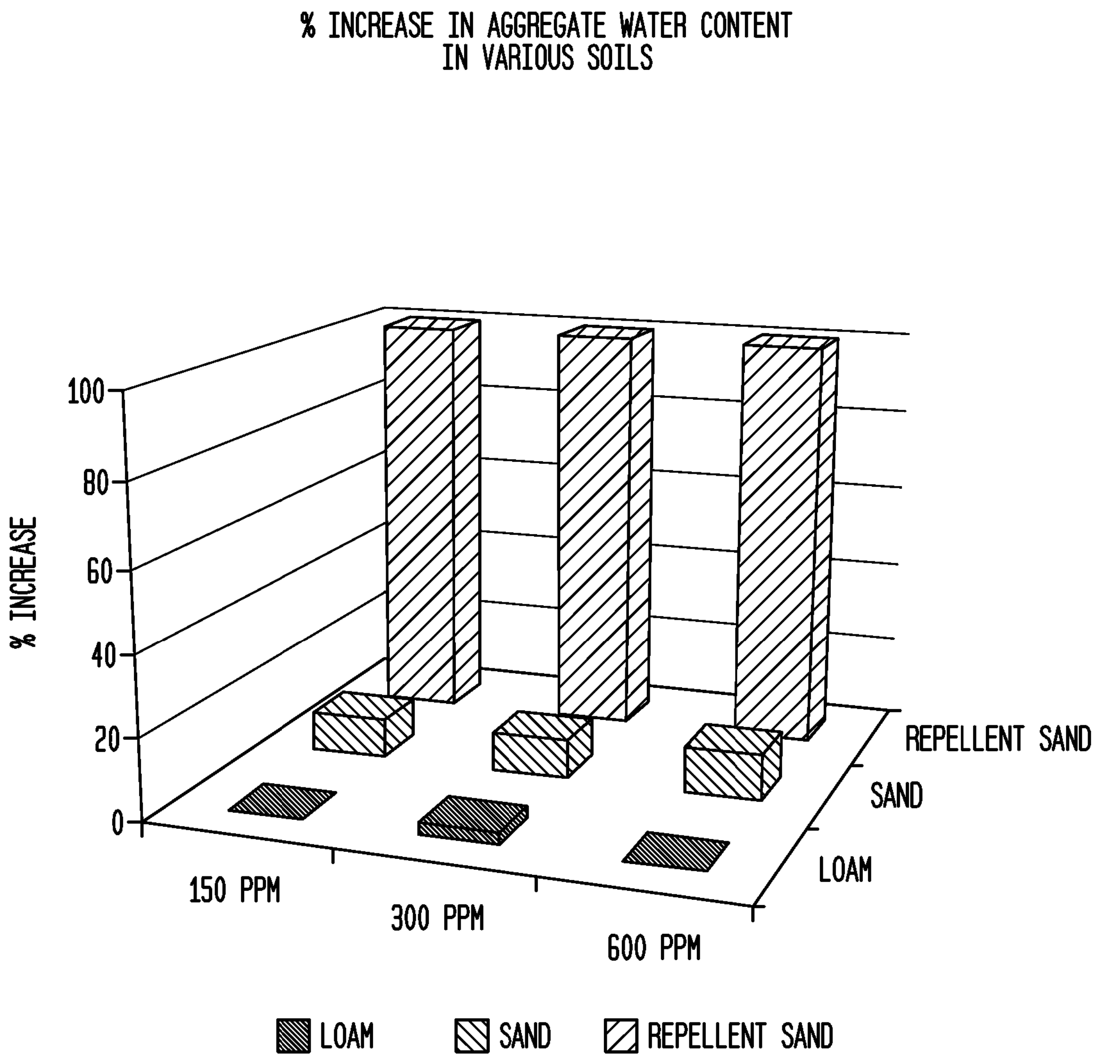
% INCREASE IN AGGREGATE WATER CONTENT
IN VARIOUS SOILS
% INCREASE
100
80
60
40
20
0
150 PPM
300 PPM
600 PPM
REPELLENT SAND
SAND
LOAM
LOAM
SAND
REPELLENT SAND

FIG. 14

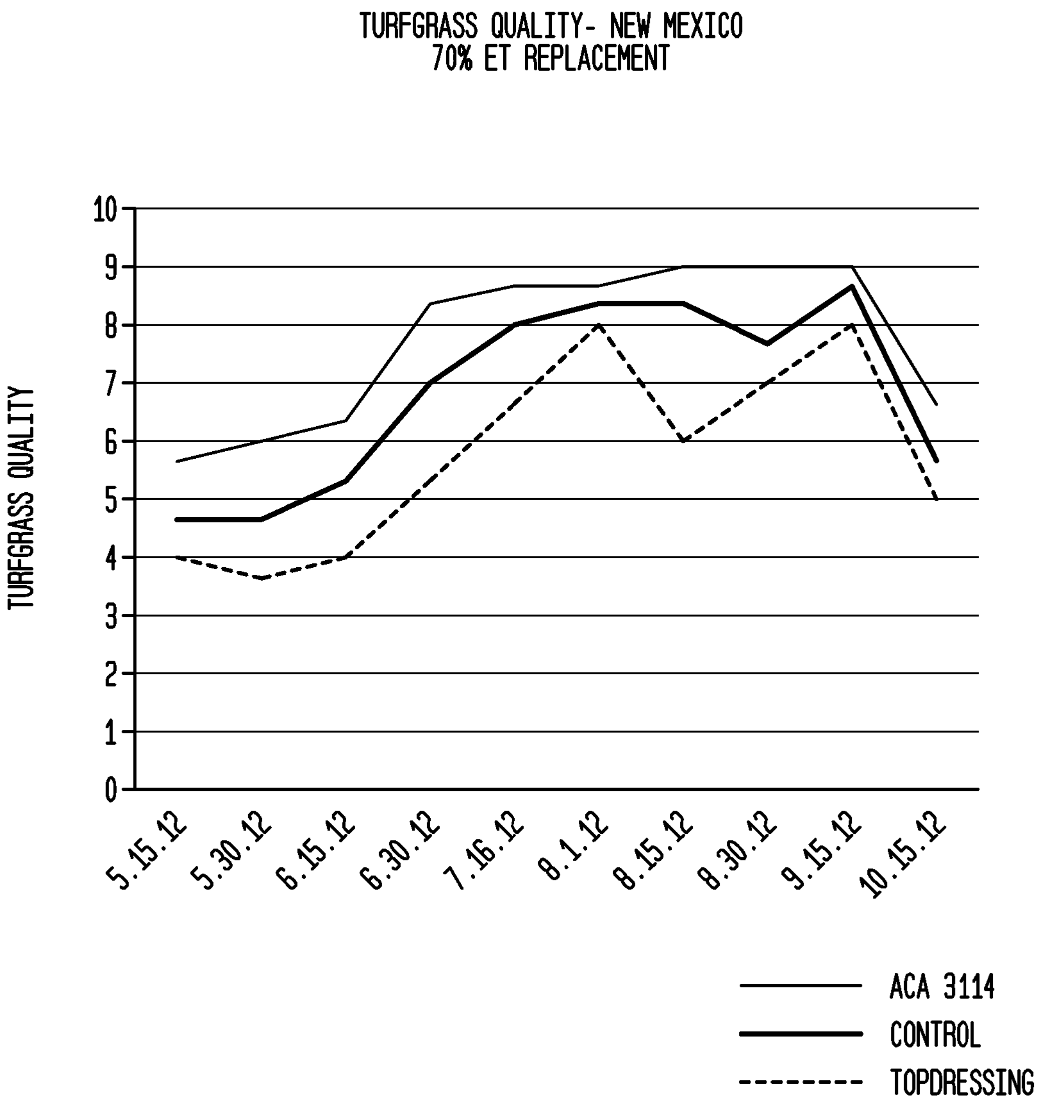
TURFGRASS QUALITY- NEW MEXICO
70% ET REPLACEMENT
TURFGRASS QUALITY
10
9
8
7
6
5
4
3
2
1
0
5.15.12
5.30.12
6.15.12
6.30.12
7.16.12
8.1.12
8.15.12
8.30.12
9.15.12
10.15.12
ACA 3114
CONTROL
TOPDRESSING

*FIG. 15*

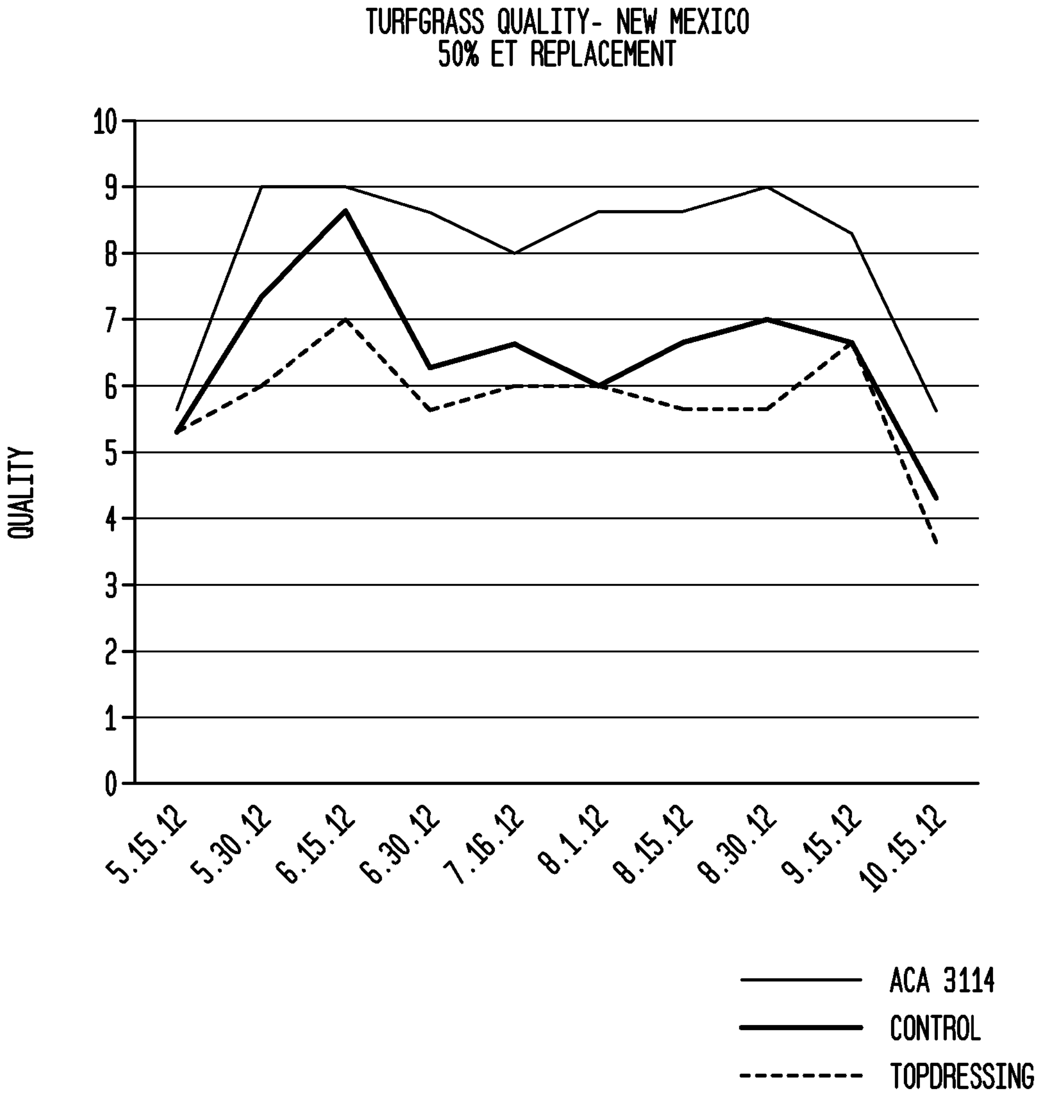
TURFGRASS QUALITY- NEW MEXICO
50% ET REPLACEMENT
QUALITY
10
9
8
7
6
5
4
3
2
1
0
5.15.12
5.30.12
6.15.12
6.30.12
7.16.12
8.1.12
8.15.12
8.30.12
9.15.12
10.15.12
ACA 3114
CONTROL
TOPDRESSING

FIG. 16

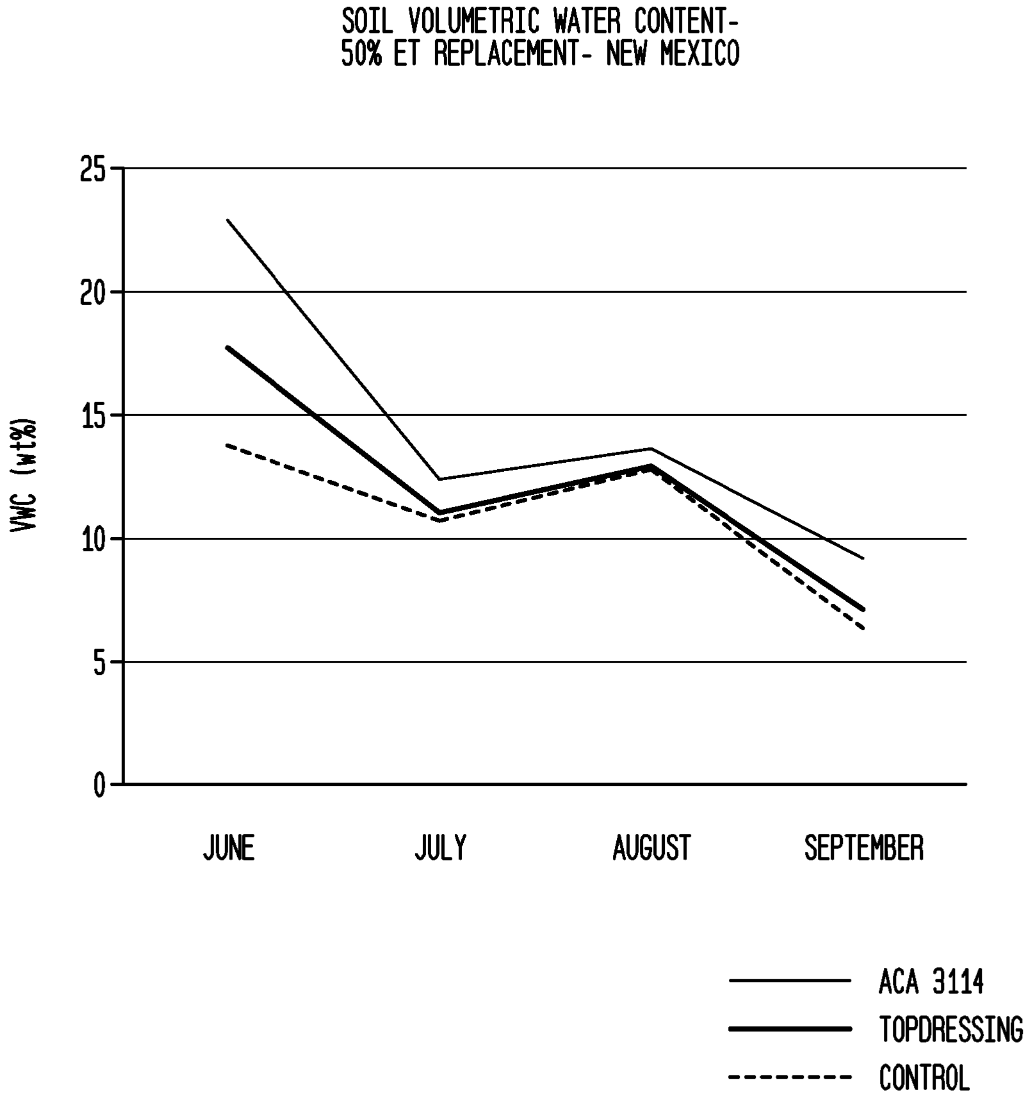
SOIL VOLUMETRIC WATER CONTENT-
50% ET REPLACEMENT- NEW MEXICO
VWC (wt%)
25
20
15
10
5
0
JUNE
JULY
AUGUST
SEPTEMBER
ACA 3114
TOPDRESSING
CONTROL

*FIG. 17*

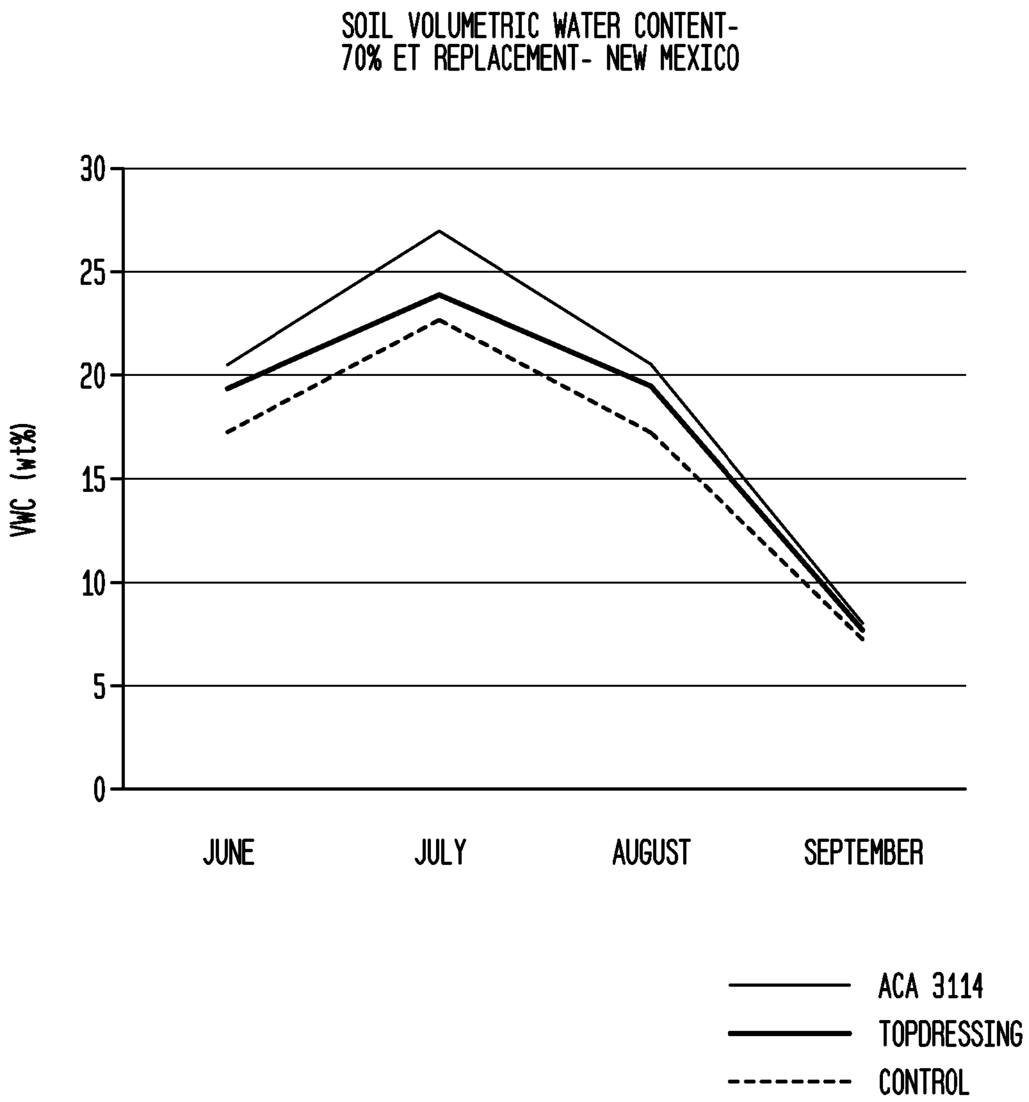
SOIL VOLUMETRIC WATER CONTENT-
70% ET REPLACEMENT- NEW MEXICO
VWC (wt%)
30
25
20
15
10
5
0
JUNE
JULY
AUGUST
SEPTEMBER
ACA 3114
TOPDRESSING
CONTROL

FIG. 18

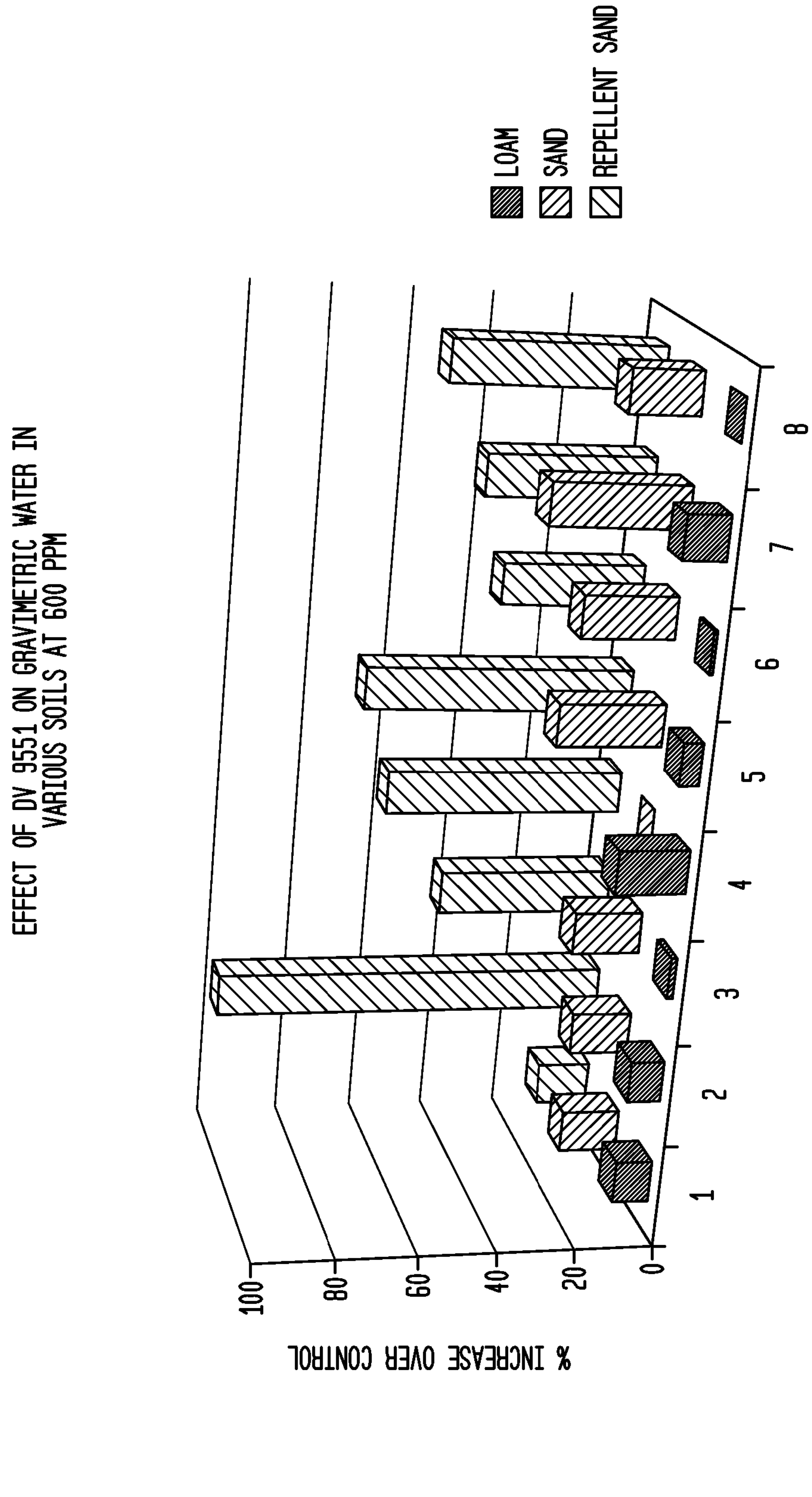
EFFECT OF DV 9551 ON GRAVIMETRIC WATER IN
VARIOUS SOILS AT 600 PPM
LOAM
SAND
REPELLENT SAND
% INCREASE OVER CONTROL
0
20
40
60
80
100
1
2
3
4
5
6
7
8
DRY-DOWN CYCLE

FIG. 19

EFFECT OF DV 9551 ON GRAVIMETRIC WATER IN VARIOUS SOILS AT 300 PPM

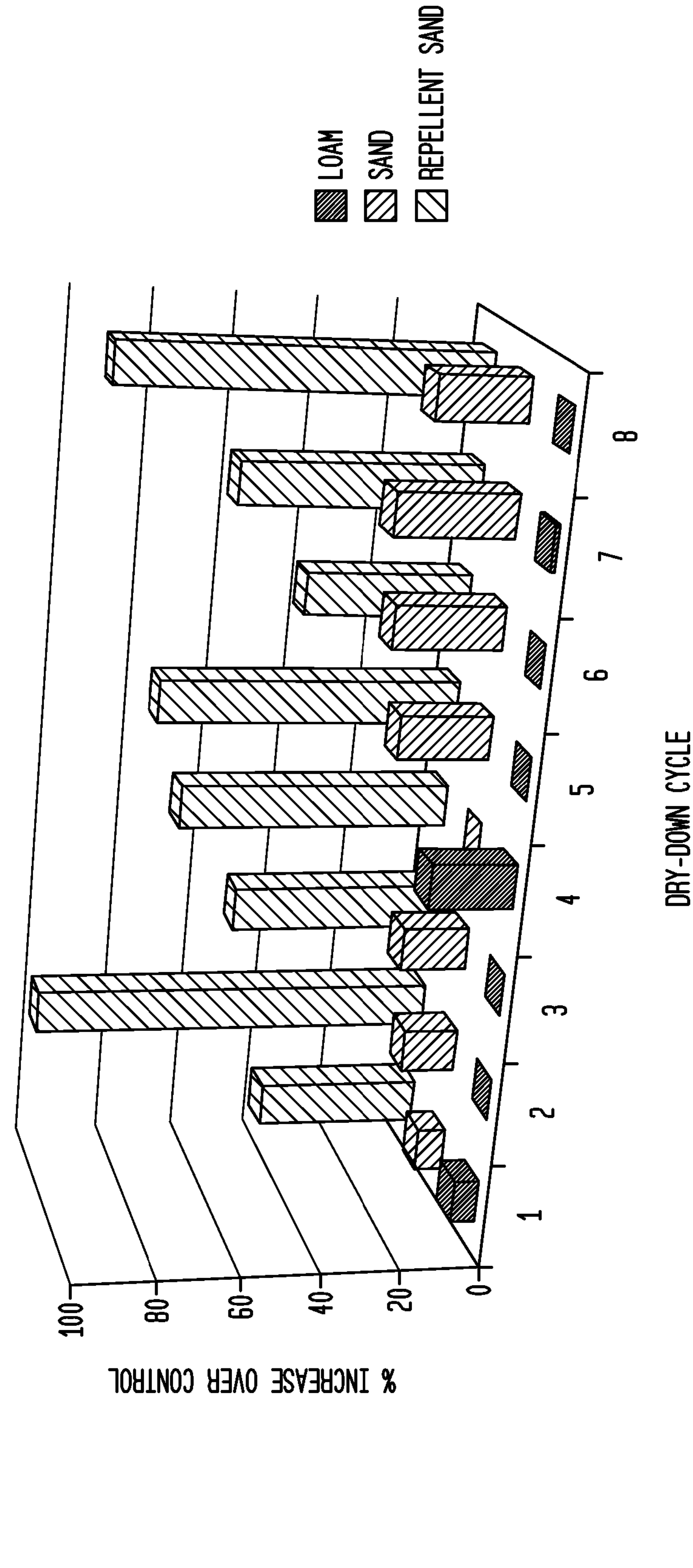

*FIG. 20*

EFFECT OF DV 9551 ON GRAVIMETRIC WATER IN
VARIOUS SOILS AT 150 PPM

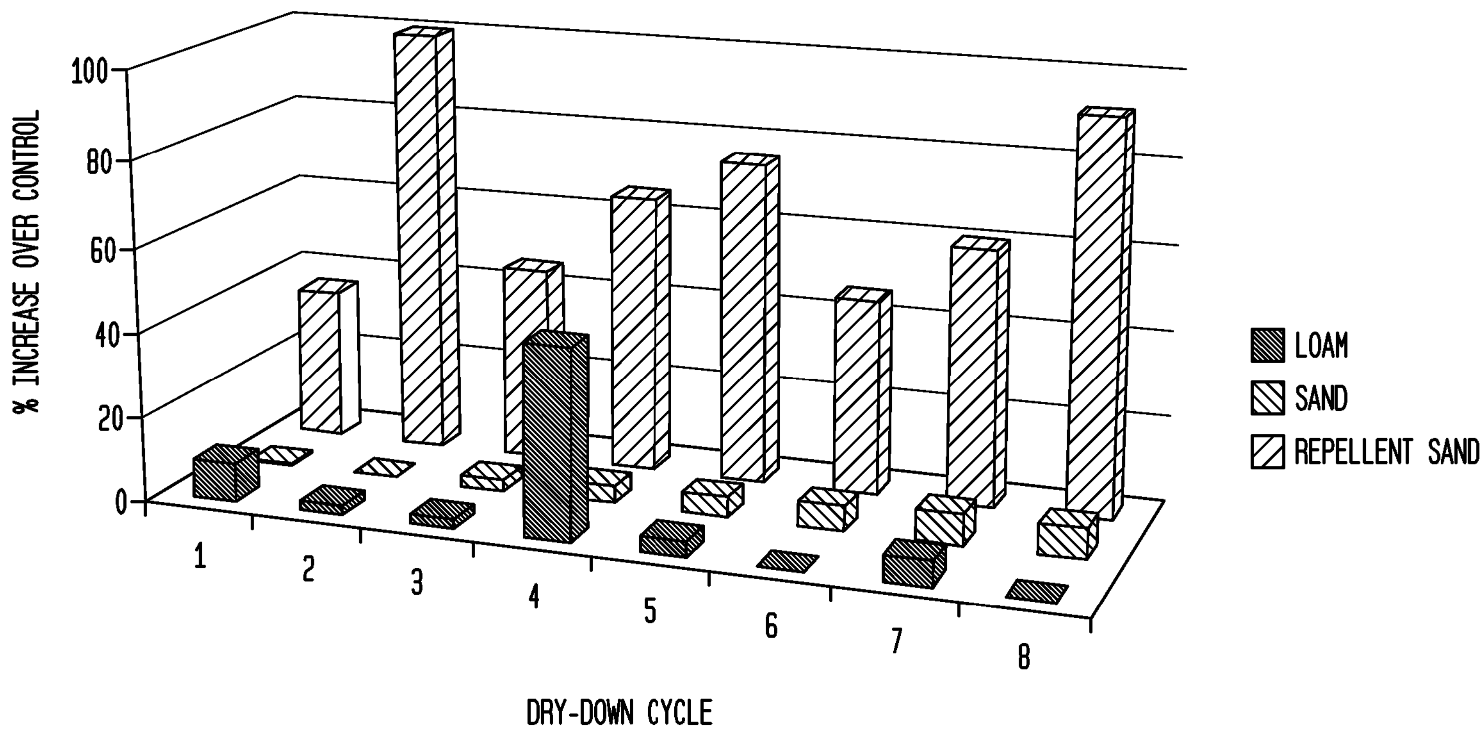

*FIG. 21*

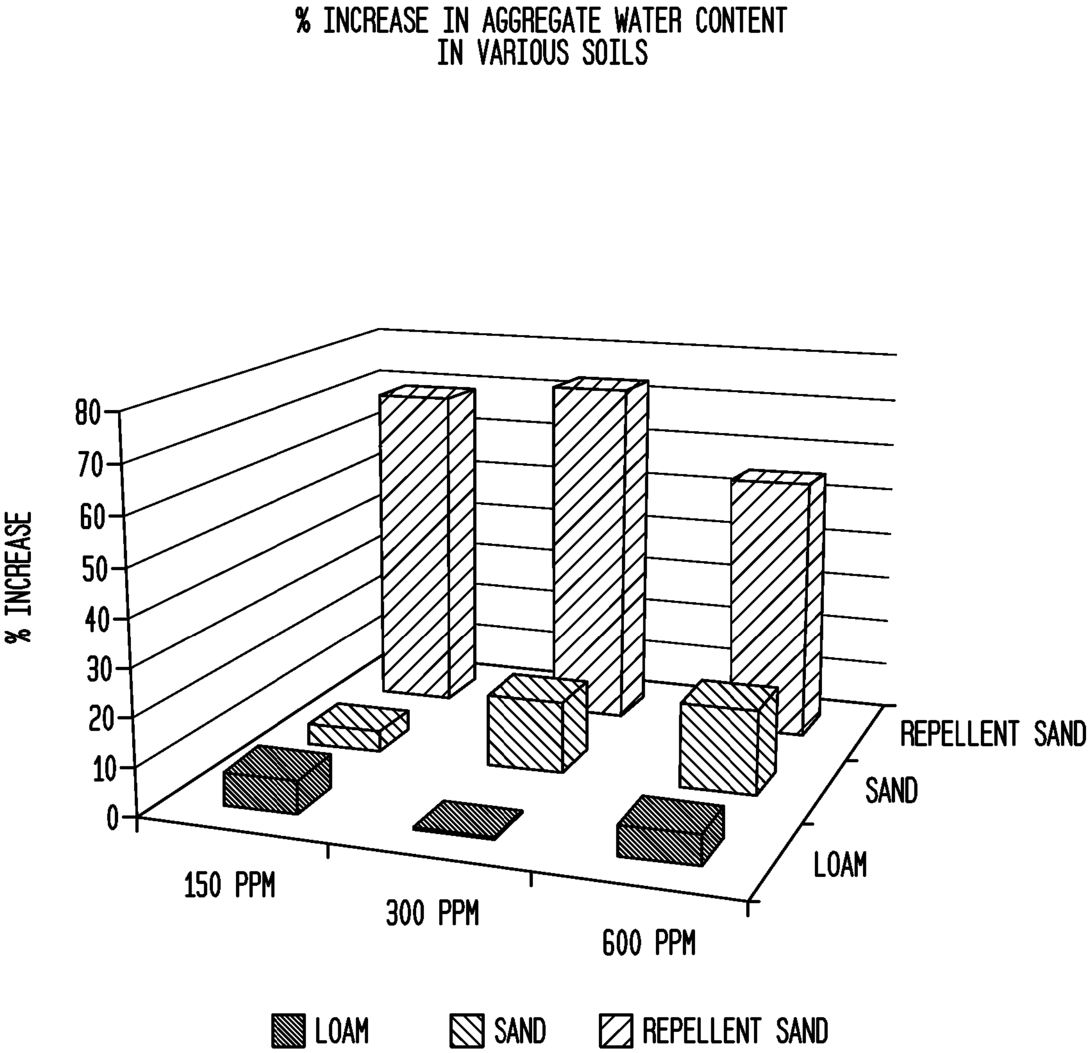
% INCREASE IN AGGREGATE WATER CONTENT
IN VARIOUS SOILS
% INCREASE
80
70
60
50
40
30
20
10
0
150 PPM
300 PPM
600 PPM
REPELLENT SAND
SAND
LOAM
LOAM
SAND
REPELLENT SAND

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120220454 A1
- WO 0193810 A
- WO 0110213 A
- EP 810239 B1


### Non-patent literature cited in the description


- Sulfobetaine zwitterionomers based on n-butyl acrylate and 2-ethoxyethyl acrylate: monomer synthesis and copolymerization behavior. *Journal of Polymer Science,* 2002, vol. 40, 511-523
- **WEN-FU LEE ; CHAN-CHANG TSAI.** Synthesis and solubility of the poly(sulfobetaine)s and the corresponding cationic polymers: 1. Synthesis and characterization of sulfobetaines and the corresponding cationic monomers by nuclear magnetic resonance spectra. *Polymer,* 1994, vol. 35 (10), 2210-2217
- **V. M. MONROY SOTO ; J. C. GALIN.** Poly(sulphopropylbetaines): 1. Synthesis and characterization. *Polymer,* 1984, vol. 25, 121-128
- **P. KOBERLE ; A. LASCHEWSKY.** Hydrophobically Modified Zwitterionic Polymers: Synthesis, Bulk Properties, and Miscibility with Inorganic Salts. *Macromolecules,* 1994, vol. 27, 2165-2173
- **V. M. CASTAÑO ; A. E. GONZALEZ ; J. CARDOSO ; O. MANERO ; V. M. MONROY.** Evidence of ionic aggregates in some ampholytic polymers by transmission electron microscopy. *J. Mater. Res.,* 1990, vol. 5 (3), 654-657
- **J. C. SALAMONE ; W. VOLKSON ; A.P. OISON ; S.C. ISRAEL.** Aqueous solution properties of a poly(vinyl imidazolium sulphobetaine). *Polymer,* 1978, vol. 19, 1157-1162
- **FAVRESSE ; PHILIPPE ; LASCHEWSKY ; ANDRE.** New poly(carbobetaine)s made from zwitterionic diallylammonium monomers. *Macromolecular Chemistry and Physics,* 1999, vol. 200 (4), 887-895
- **I.V. BERLINOVA ; I.V. DIMITROV ; R.G. KALINOVA ; N.G. VLADIMIROV.** Synthesis and aqueous solution behaviour of copolymers containing sulfobetaine moieties in side chains. *Polymer,* 2000, vol. 41, 831-837
- **WEN-FU LEE ; CHUN-HSIUNG LEE.** Poly(sulfobetaine)s and corresponding cationic polymers: 3. Synthesis and dilute aqueous solution properties of poly(sulfobetaine)s derived from styrene-maleic anhydride. *Polymer,* 1997, vol. 38 (4), 971-979
- **LEE, WEN-FU ; CHEN, YAN-MING.** Poly(sulfobetaine)s and corresponding cationic polymers. VIII. Synthesis and aqueous solution properties of a cationic poly(methyl iodide quaternized styrene-N,N-dimethylaminopropyl maleamidic acid) copolymer. *Journal of Applied Polymer Science,* 2001, vol. 80, 1619-1626
- **ANDREW B. LOWE ; NORMAN C. BILLINGHAM ; STEVEN P. ARMES.** Synthesis of polybetaines with narrow molecular mass distribution and controlled architecture. *Chem. Commun.,* 1996, 1555-1556
- **ANDREW B. LOWE ; NORMAN C. BILLINGHAM ; STEVEN P. ARMES.** Synthesis and Properties of Low-Polydispersity Poly(sulfopropylbetaine)s and Their Block Copolymers. *Macromolecules,* 1999, vol. 32, 2141-2146
- **T. HAMAIDE.** New polymeric phosphonato-, phosphinato- and carboxybetaines. *Macromolecular Chemistry,* 1986, vol. 187, 1097-1107